# FASCICULE DE BREVET EUROPEEN

(11) **EP 3 692 083 B1**
(45) Date de publication et mention de la délivrance du brevet: **29.05.2024**
(21) Numéro de dépôt: 17840564.3
(22) Date de dépôt: 02.10.2017
(51) Int. Cl.: C08F 226/06, C22B 60/02

(54) **NOUVEAUX POLYMERES, LEURS PROCEDES DE PREPARATION, ET LEURS UTILISATIONS NOTAMMENT POUR LE CAPTAGE DE METAUX**
NEUE POLYMERE, VERFAHREN ZU IHRER HERSTELLUNG UND IHRE VERWENDUNG, INSBESONDERE ZUR METALLERFASSUNG
NOVEL POLYMERS, METHODS FOR PREPARING SAME, AND USES THEREOF PARTICULARLY FOR METAL CAPTURE

(43) Date de publication de la demande: 12.08.2020
(73) Titulaire: Université Paris-Saclay, 91190 Saint-Aubin (FR)
(72) Inventeur: ROGER, Philippe Gérard, 91470 Limours (FR); MAAZ, Mohamad, Beyrouth (LB); NSOULI, Bilal, Beyrouth (LB); ELZEIN, Tamara, Beyrouth (LB); BARROCA, Nadine, 91405 Orsay Cedex (FR); LEPOITTEVIN, Bénédicte, 14000 Caen (FR)
(74) Mandataire: Grosset-Fournier, Chantal Catherine
(86) Numéro de dépôt international: PCT/FR2017/052705
(87) Numéro de publication internationale: WO 2019/068961

(56) Documents cités:
- US-A- 4 199 470
- QING-FENG LI ET AL: "Highly luminescent hydrogels synthesized by covalent grafting of lanthanide complexes onto PNIPAM via one-pot free radical polymerization", JOURNAL OF MATERIALS CHEMISTRY C: MATERIALS FOR OPTICAL AND ELECTRONIC DEVICES, vol. 4, no. 15, 1 janvier 2016 (2016-01-01), pages 3195-3201, XP055481024, UK ISSN: 2050-7526, DOI: 10.1039/C6TC00336B

## Description

La présente invention concerne de nouveaux polymères, leurs procédés de préparations et leurs utilisations notamment pour le captage de métaux.

L'uranium, sous sa forme actuelle (minière) est une ressource non renouvelable dont les ressources connues à l'heure actuelle représentent environ un siècle de consommation. Pour permettre de repousser la pénurie en uranium, deux possibilités peuvent être exploitées :
- puiser dans les océans l'uranium dissous,
- recycler le combustible usagé pour diminuer la perte de matière fissible via les déchets ultimes.

Les océans, avec une réserve estimée de 4 500 millions de tonnes (soit près de 1000 fois les réserves terrestres) représentent une source intéressante de combustible nucléaire avec plus d'un millénaire de consommation. Depuis quelques années, les recherches se sont intensifiées pour découvrir des moyens simples de récupération de l'uranium dans l'eau de mer présent à hauteur de 3.3 ppb.

De nouveaux matériaux, en général des polymères, ont été développés pour le captage de l'uranium marin. Après avoir été plongés dans l'eau de mer, ces polymères forment un complexe uranium-polymère, et permettent l'extraction de l'uranium de l'eau de mer. Le retraitement de ces polymères hors de l'eau permet de décomplexer l'uranium et de le récupérer. Mais la présence de poisons pour les polymères réduit l'efficacité de cette méthode. Le vanadium présent dans l'eau de mer rentre en compétition avec l'uranium et se complexe sur les polymères actuels à la place de l'uranium, ce qui limite la capacité de récupération de ces polymères.

Le recyclage des combustibles usagés issus des centrales nucléaires est déjà intégré dans le cycle de vie de l'uranium. Actuellement, le retraitement de l'uranium repose sur des procédés d'extraction liquide-liquide en présence de composés complexant comme les procédés DIAMEX ou PUREX. Ces techniques utilisent des composés toxiques et ont un coût très élevé. L'art antérieur enseigne également que des hydrogels insolubles dans l'eau possédant 3 unités acide 4-vinylpyridine-2,6-dicarboxylique, N-isopropylacrylamide et N, N'-methylènebis(2-propenamide)) peuvent former des complexes avec des lanthanides (J. Mater. Chem. C, 2016,4, 3195-3201).

L'un des aspects de l'invention concerne de nouveaux polymères qui sont à la fois solubles et insolubles en fonction des conditions du milieu dans lequel ils se trouvent et qui peuvent facilement passer d'un état à l'autre.

Un autre aspect de l'invention concerne de nouveaux polymères qui sont susceptibles de pouvoir se complexer avec des métaux, en particulier avec des métaux sous forme de trace dans le milieu dans lesquels ils se trouvent.

Un autre aspect de l'invention concerne des procédés de captage de métaux et notamment de l'uranium, en particulier dans l'eau de mer.

Un autre aspect de l'invention concerne un procédé de captage sélectif de l'uranium dans l'eau de mer, avec de forts rendements.

Un autre aspect de l'invention concerne un procédé de retraitement du combustible nucléaire usé pour la récupération des matériaux fissibles non réagis.

Un autre aspect de l'invention concerne l'utilisation des nouveaux polymères complexés avec des métaux comme catalyseurs en catalyse homogène ou hétérogène.

Un autre aspect de l'invention concerne l'utilisation des nouveaux polymères pour le marquage des cellules dans le domaine biomédical, ou les marquages des produits de luxe dans le domaine de la lutte contre la contrefaçon.

La présente description concerne une composition comprenant ou constituée d'un polymère ayant un degré de polymérisation n, compris de 2 à 10000, et contenant 2 à 10000 unités monomères, lesdites unités monomères étant :
- soit des unités monomères dérivées de la 4-vinylpyridine, dans lequel les carbones en position 2 et 6 peuvent être substitués par l'un des substituants du groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
- soit des unités monomères dérivées d'un co-monomère,

sous réserve que lorsque l'un des substituants choisis en position 2 (respectivement en position 6) représente soit l'hydrogène, soit un radical alkyl de 1 à 4 carbones, soit un radical aryle de 1 à 4 carbones, soit un radical alcène de 1 à 4 carbones, l'autre substituant en position 6 (respectivement en position 2) est différent de l'hydrogène, du radical alkyl de 1 à 4 carbones, du radical aryle de 1 à 4 carbones, et du radical alcène de 1 à 4 carbones,
et sous réserve que lesdites unités monomères dérivées de la 4-vinylpyridine représentent au moins 20% du degré de polymérisation n,

ledit polymère étant éventuellement complexé avec un métal,
ledit polymère étant linéaire ou réticulé.

La présente invention concerne une composition comprenant ou constituée d'un polymère linéaire ou réticulé ayant un degré de polymérisation n constitué d'unité monomère de Formule I, 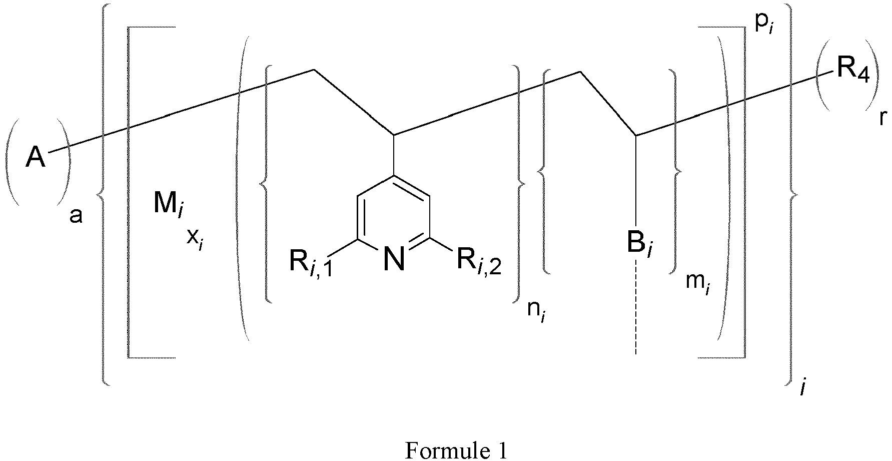 dans laquelle :
- R₄ est un composé permettant la propagation de la polymérisation, issu ou non d'un amorceur de polymérisation, ou permettant la terminaison de la polymérisation, ou un agent de transfert
- A est un composé issu dudit amorceur de polymérisation ou un fragment issu du procédé de polymérisation,
- a et r sont identiques ou différents et valent 0 ou 1,
- *i* est un nombre entier strictement positif, indiciel, variant de 1 à n, lui-même compris de 2 à 10000,
et pour chaque i :
∘ R_{*i*,1} et R_{*i*,2} sont des substituants choisis parmi le groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
∘ B*ᵢ* est une unité monomère dérivée d'un co-monomère, formant ou non un pont de réticulation,
∘ M*ᵢ* est un métal,
∘ n*ᵢ* et m*ᵢ* sont des nombres entiers égaux à 0 ou 1,
∘ n*ᵢ* + m*ᵢ* = 1,
∘ xᵢ est un nombre compris de 0 à 6,
∘ pᵢ est la charge électrique du complexe métallique comprise de - 6 à + 6,

sous réserve que lorsque R_{*i*,1} (respectivement R_{*i*,2}) représente soit l'hydrogène, soit un radical alkyl de 1 à 4 carbones, soit un radical aryle de 1 à 4 carbones, soit un radical alcène de 1 à 4 carbones, alors R_{*i*,2} (respectivement R_{*i*,1}) est différent de l'hydrogène, du radical alkyl de 1 à 4 carbones, du radical aryle de 1 à 4 carbones, et du radical alcène de 1 à 4 carbones,
ledit polymère étant linéaire quand il n'existe aucun B*ᵢ* formant de pont de réticulation,
ledit polymère étant réticulé quand il existe au moins un B*ᵢ* formant un pont de réticulation entre deux polymères linéaires,
ou comprenant ou constituée d'un polymère linéaire non réticulé ayant un degré de polymérisation n constitué d'unité monomère de Formule II, 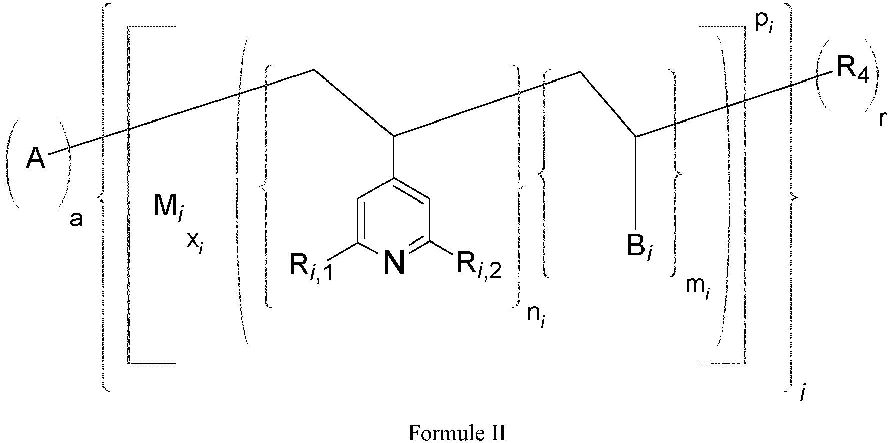 dans laquelle :
   - les définitions de R_{*i*,1}, R_{*i*,2}, A, R₄, a, r, M*ᵢ*, x*ᵢ*, n*ᵢ*, m*ᵢ*, p*ᵢ* et *i* sont telles que décrites ci-dessus,
   - B*ᵢ* est une unité monomère dérivée d'un co-monomère ne formant pas de pont de réticulation,

et sous réserve que lesdites unités monomères dérivées de la 4-vinylpyridine représentent au moins 20% du degré de polymérisation n,
ledit polymère est soluble en solution aqueuse et en particulier dans l'eau de mer, ledit polymère étant :
   - complexé avec un métal soluble ou insoluble en solution aqueuse,
   - soluble en solution aqueuse non complexé par un métal et insoluble en solution complexé avec un métal, en particulier avec l'uranium,
   - soluble dans des solvants organiques, en particulier l'acétonitrile, et le diméthylsulfoxyde (DMSO),

Les polymères selon la présente invention présentent l'avantage d'avoir des propriétés de solubilité différentes en fonction des groupements substituants sur les unités monomères dérivées de la 4-vinylpyridine et de l'organisation des unités monomères constitutives du polymère. Par exemple, quand les groupements substituants en position 2 et 6 de toutes les unités monomères sont des groupements acides carboxyliques, la solubilité du polymère ainsi obtenue varie en fonction du pH de la solution. En milieu neutre ou basique, le polymère est soluble en milieu aqueux. En milieu aqueux très acide, le polymère devient insoluble. Cette propriété permet de faire varier facilement la solubilité du polymère obtenu et ainsi de changer le comportement du polymère pour le captage de métaux.

Les polymères selon la présente invention présentent l'avantage d'être non supportés, ce qui les rend utilisables en catalyse homogène.

Les polymères selon la présente invention comprennent plus de 20% d'unités monomères dérivées de la 4-vinylpyridine, en particulier de plus de 30%, en particulier plus de 40%, en particulier plus de 50%, en particulier plus de 60%, en particulier plus de 70%, en particulier plus de 80%, en particulier plus de 90% et en particulier 100%.

Les polymères selon la présente invention sont adaptables et peuvent être optimisés en fonction des difficultés rencontrées. Par exemple, dans le cas où les groupements substituants en position 2 et 6 sont très encombrants, un co-monomère espaceur peut être ajouté à des taux importants (>50%) pour limiter l'encombrement stérique autour des unités monomères dérivées de la 4-vinylpyridine.

Les polymères selon la présente invention peuvent comporter :
a) soit un seul type d'unités monomères dérivées de la 4-vinylpyridine, sans unité monomère dérivée d'un co-monomère, le polymère est alors un homopolymère,
b) soit un seul type d'unités monomères dérivées de la 4-vinylpyridine, et un seul type d'unités monomères dérivées d'un co-monomère, le polymère est alors un copolymère,
c) soit un seul type d'unités monomères dérivées de la 4-vinylpyridine, et plusieurs types d'unités monomères dérivées d'un co-monomère différents, le polymère est alors un copolymère,
d) soit plusieurs types d'unités monomères dérivées de la 4-vinylpyridine différents, sans unité monomère dérivée d'un co-monomère,
e) soit plusieurs types d'unités monomères dérivées de la 4-vinylpyridine différents, et un seul type d'unités monomères dérivées d'un co-monomère, le polymère est alors un copolymère,
f) soit plusieurs types d'unités monomères dérivées de la 4-vinylpyridine différents, et plusieurs types d'unités monomères dérivées d'un co-monomère différents, le polymère est alors un copolymère.

Au sens de la présente invention on entend par « homopolymère », un polymère dans lequel toutes les unités monomères constitutives du polymère ont la même formule, c'est-à-dire que toutes les unités monomères sont des unités monomères dérivées de la 4-vinylpyridine et toutes les unités monomères dérivées de la 4-vinylpyridine possèdent les mêmes groupements substituants en position 2, ainsi qu'en position 6. Les métaux éventuellement complexés sur les unités monomères peuvent varier au sein d'un même homopolymère. Les formes conjuguées d'un même couple acide/base sont considérées comme étant identiques pour la notion d'homopolymère. Par exemple un polymère possédant sur une première unité monomère un groupement COOH et sur une seconde unité monomère un groupement COO⁻ restera considéré comme un homopolymère.

Au sens de la présente invention on entend par « copolymère », un polymère dans lequel au moins une unité monomère est dérivée d'un co-monomère et au moins une unité monomère est dérivée de la 4-vinylpyridine.

Les polymères selon la présente invention sont complexés ou non avec un métal, par exemple un complexe 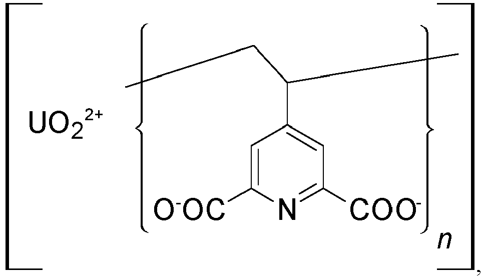 chaque unité monomère pouvant être ou pas complexée avec un métal indépendamment les unes des autres.

Les polymères selon la présente invention peuvent former des particules, en particulier d'une taille micrométrique ou en particulier d'une taille nanométrique.

Au sens de la présente invention, on entend par « dérivé de la 4-vinylpyridine », un composé de formule 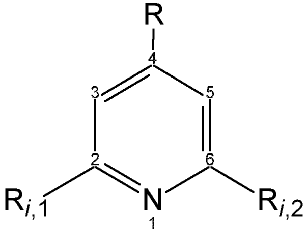 dans laquelle R_{*i*,1} et R_{*i*,2} peuvent être substitués par l'un des substituants du groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore.

Au sens de la présente invention, on entend par « monomère dérivé de la 4-vinylpyridine » un composé de formule 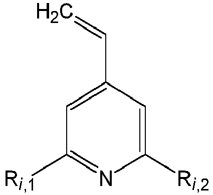 dans laquelle les définitions de R_{*i*,1} et R_{*i*,2} sont telles qu'indiquées ci-dessus.

Au sens de la présente invention, on entend par « co-monomère » un composé de formule 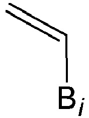 dans lequel B*ᵢ* est différent d'un dérivé de la 4-vinylpyridine.
Au sens de la présente invention, on entend par « unité monomère dérivée de la 4-vinylpyridine », la brique fondamentale de formule 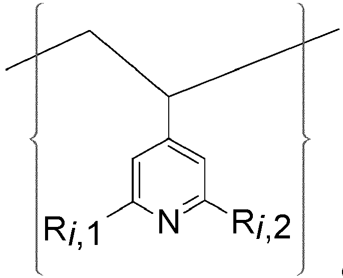 qui constitue le polymère et dont les définitions de R_{*i*,1} et R_{*i*,2} sont telles qu'indiquées ci-dessus.

Au sens de la présente invention, on entend par « unité monomère dérivée d'un co-monomère », la brique fondamentale de formule 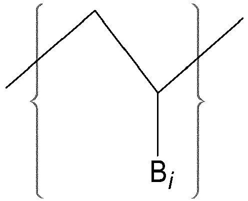 qui constitue le polymère et dans laquelle B*ᵢ* est différent d'un dérivé de la 4-vinylpyridine.

Au sens de la présente invention, on entend par « unité monomère » la brique fondamentale, constitutive du polymère, composée soit d'une unité monomère dérivée de la 4-vinylpyridine, soit d'une unité monomère dérivée d'un co-monomère.

Au sens de la présente invention, on entend par « polymère linéaire » un polymère dans lequel l'ensemble des unités monomères s'enchaîne dans une seule direction formant une chaine sans ramification ni réticulation.

Au sens de la présente invention, on entend par « polymère réticulé » un polymère dans lequel au moins deux polymères linéaires sont liés entre eux par au moins un pont de réticulation, ledit pont de réticulation étant formé par une unité monomère dérivée d'un-co-monomère appartenant à l'un au moins des deux polymères linéaires et ladite unité monomère dérivée d'un-co-monomère étant liée par liaison covalente à la chaine carbonée de l'autre polymère linéaire.

Au sens de la présente invention, on entend par « chaine carbonée », la suite de carbone linéaire formé lors de la polymérisation par les doubles liaisons carbone-carbone des monomères qui constituent le polymère.

Au sens de la présente invention, on entend par « radical alkyl de 1 à 20 carbones », une chaine carbonée acyclique, saturée, linéaire ou ramifiée, comprenant de 1 à 20 atomes de carbone. Des exemples de radicaux alkyl de 1 à 20 carbones incluent les groupes méthyle, éthyle, propyle, butyle... Au sein du radical alkyl, un ou plusieurs hydrogènes peuvent être substitués par un groupement choisi parmi : halogène, hydroxyle, alkoxyle, amino, nitro, cyano, trilfluoro, acide carboxylique, ester carboxylique, phosphine, thiols...

Au sens de la présente invention, on entend par « radical alcène de 2 à 20 carbones », une chaine carbonée acyclique, linéaire ou ramifiée, comprenant de 2 à 20 atomes de carbone et comprenant au moins une double liaison carbone-carbone. Des exemples de radicaux alcène de 2 à 20 carbones incluent les groupes éthényle, propényle, butényle... Au sein du radical alcène, un ou plusieurs hydrogènes peuvent être substitués par un groupement choisi parmi : halogène, hydroxyle, alkoxyle, amino, nitro, cyano, trilfluoro, acide carboxylique, ester carboxylique, phosphine, thiols...

Au sens de la présente invention, on entend par « radical aryle de 2 à 20 carbones », une chaine carbonée comprenant au moins un cycle saturé ou partiellement saturé et, comprenant de 2 à 20 atomes de carbone, sans hétéroatomes dans les cycles. Des exemples de radicaux aryle de 2 à 20 carbones incluent les groupes phényl, benzyl, ... Au sein du radical aryle, un ou plusieurs hydrogènes peuvent être substitués par un groupement choisi parmi : halogène, hydroxyle, alkoxyle, amino, nitro, cyano, trilfluoro, acide carboxylique, ester carboxylique, phosphine, thiols...

Au sens de la présente invention, on entend par « hétérocycle de 1 à 5 cycle », une chaine carbonée comprenant de 1 à 5 cycles saturés ou partiellement saturés, possédant au moins un cycle qui contient un atome différent du carbone pour former le cycle et comprenant de 2 à 20 atomes de carbone. Des exemples d'hétérocycle comprenant 2 à 20 carbones incluent les groupes pyrrolidinyle, pipéridinyle ... Au sein de l'hétérocycle, un ou plusieurs hydrogènes peuvent être substitués par un groupement choisi parmi : halogène, hydroxyle, alkoxyle, amino, nitro, cyano, trilfluoro, acide carboxylique, ester carboxylique, phosphine, thiol...

Au sens de la présente invention on entend par « thiols de 1 à 20 carbone », une chaine carbonée comprenant de 1 à 20 carbones de formule SR₂.

Au sens de la présente invention on entend par « phosphine de 1 à 20 carbone », une chaine carbonée comprenant de 1 à 20 carbones de formule PR₃.

Selon un mode de réalisation particulier, la composition de l'invention, telle que définie ci-dessus, comprend ou est constituée d'un polymère linéaire ou réticulé et possédant un ou plusieurs types d'unités monomères dérivées de la 4-vinylpyridine différents et un ou plusieurs types d'unités monomères dérivées d'un co-monomère, ledit polymère étant complexé ou non avec un ou plusieurs métaux différents.

La composition selon la description comprend ou est constituée d'un polymère linéaire ou réticulé constitué d'unités monomères, de Formule I 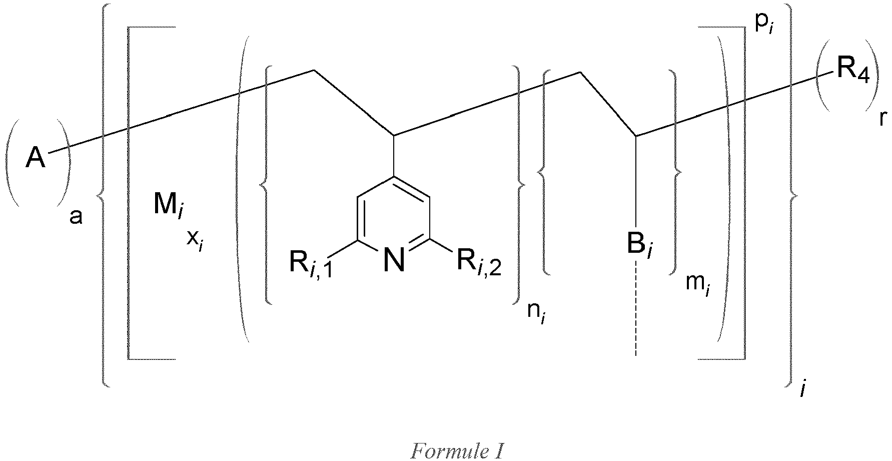 dans laquelle :
- R₄ est un composé permettant la propagation de la polymérisation, issu ou non d'un amorceur de polymérisation, ou permettant la terminaison de la polymérisation, ou un agent de transfert,
- A est un composé issu dudit amorceur de polymérisation ou un fragment issu du procédé de polymérisation,
- a et r sont identiques ou différents et valent 0 ou 1,
- i est un nombre entier strictement positif, indiciel, variant de 1 à n, lui-même compris de 2 à 10000,
et pour chaque i :
∘ R_{*i*,1} et R_{*i*,2} sont des substituants choisis parmi le groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
∘ B*ᵢ* est une unité monomère dérivée d'un co-monomère, formant ou non un pont de réticulation,
∘ M*ᵢ* est un métal,
∘ n*ᵢ* et m*ᵢ* sont des nombres entiers égaux à 0 ou 1,
∘ n*ᵢ* + m*ᵢ* = 1,
∘ x*ᵢ* est un nombre compris de 0 à 6,
∘ p*ᵢ* est la charge électrique du complexe métallique comprise de - 6 à + 6,
   sous réserve que lorsque R_{*i*,1} (respectivement R_{*i*,2}) représente soit l'hydrogène, soit un radical alkyl de 1 à 4 carbones, soit un radical aryle de 1 à 4 carbones, soit un radical alcène de 1 à 4 carbones, alors R_{*i*,2} (respectivement R_{*i*,1}) est différent de l'hydrogène, du radical alkyl de 1 à 4 carbones, du radical aryle de 1 à 4 carbones, et du radical alcène de 1 à 4 carbones,
   ledit polymère étant linéaire quand il n'existe aucun B*ᵢ* formant un pont de réticulation,
   ledit polymère étant réticulé quand il existe au moins un B*ᵢ* formant un pont de réticulation entre deux polymères linéaires.

Dans ce mode de réalisation, le polymère de Formule I peut être à titre d'exemple :
- un copolymère comprenant au moins un type d'unités monomères dérivées de la 4-vinylpyridine et au moins un type d'unités monomères dérivées d'un co-monomère,
- un polymère comprenant au moins deux types d'unités monomères dérivées de la 4-vinylpyridine différents et sans unité monomère dérivée d'un co-monomère,
- un homopolymère comprenant un seul type d'unités monomères dérivées de la 4-vinylpyridine,
ledit polymère pouvant être complexé ou non avec des métaux.

Dans ce mode de réalisation, le polymère de Formule I peut prendre toutes les formes d'organisation de copolymères, en particulier un copolymère aléatoire, un copolymère à blocs, un copolymère périodique, ou un copolymère statistique. Ces polymères peuvent être eux même linéaires ou réticulés et complexés ou non avec des métaux.

Dans ce mode de réalisation, chaque unité monomère qui forme le polymère de Formule I peut être chargée électriquement, positivement ou négativement selon l'unité monomère et la présence ou non d'un métal complexé lui-même chargé.

Dans ce mode de réalisation, l'une des extrémités du polymère est :
- soit un composé issu d'un amorceur de polymérisation comme par exemple le benzène qui provient du chlorure de benzyle,
- soit le dernier carbone de la chaine polymérique, ce qui implique a=0,
et l'autre extrémité du polymère est :
- soit un composé permettant la propagation de la polymérisation comme par exemple un atome de Chlore Cl,
- soit un composé permettant la terminaison de la polymérisation,
- soit un agent de transfert comme par exemple le benzènecarbodithioate de benzyle,
- soit le dernier carbone de la chaine polymérique, ce qui implique r=0.

Au sens de la présente invention on entend par « amorceur de polymérisation », un composé qui permet d'initier une polymérisation. Les monomères qui constituent viennent réagir sur ce composé après son amorçage.

Au sens de la présente invention, on entend par « composé permettant la propagation de la polymérisation », un composé capable de réagir avec un monomère pour augmenter d'une unité le degré de polymérisation du polymère en formation.

Au sens de la présente invention, on entend par « composé permettant la terminaison de la polymérisation », un composé incapable de réagir avec un monomère pour poursuivre la polymérisation.

Au sens de la présente invention, on entend par « agent de transfert », un composé incapable de réagir seul avec un monomère pour poursuivre la polymérisation, mais qui peut être activé par un composé radicalaire du milieu réactionnel et devenir un composé permettant la propagation de la polymérisation.

Selon un mode de réalisation particulier, la composition de l'invention, telle que définie ci-dessus, comprend ou est constituée d'un polymère possédant un ou plusieurs types d'unités monomères dérivées de la 4-vinylpyridine différents et un ou plusieurs types d'unités monomères dérivées d'un co-monomère, ledit polymère étant complexé ou non avec un ou plusieurs métaux différents, étant linéaire et non réticulé.

La composition, selon l'invention, comprend ou est constituée d'un polymère linéaire non réticulé constitué d'unité monomère, de Formule II 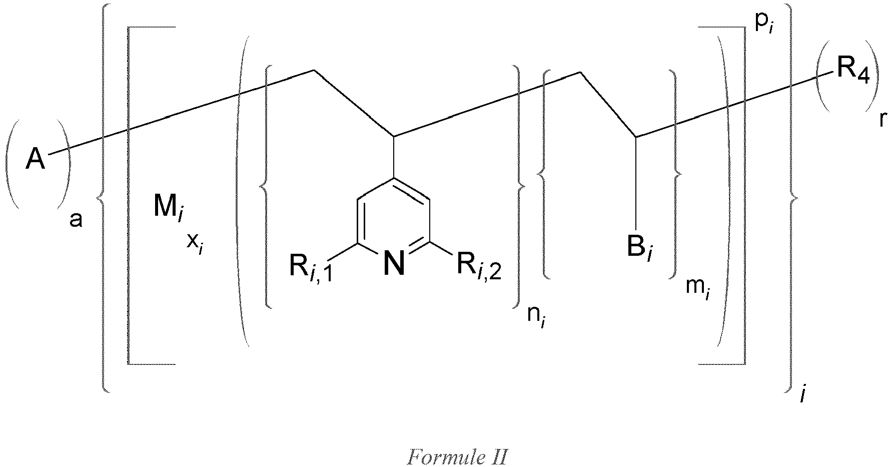 dans laquelle :
- les définitions de R_{*i*,1}, R_{*i,*2}, A, R₄, a, r, M*ᵢ*, x*ᵢ*, n*ᵢ*, m*ᵢ*, p*ᵢ* et *i* sont telles que décrites dans la Formule I,
- B*ᵢ* est une unité monomère dérivée d'un co-monomère ne formant pas de pont de réticulation.

Dans ce mode de réalisation, aucune unité monomère ne forme de pont de réticulation avec un autre monomère.

Dans ce mode de réalisation, l'absence de réticulation permet d'augmenter la solubilité des polymères.

Selon un mode de réalisation particulier, la composition de l'invention, telle que définie ci-dessus, comprend ou est constituée d'un polymère possédant un ou plusieurs types d'unités monomères dérivées de la 4-vinylpyridine différents et ne possédants pas d'unités monomères dérivées d'un co-monomère, ledit polymère est complexé ou non avec un ou plusieurs métaux différents, est linéaire et n'est pas réticulé.

La composition, selon l'invention, comprend ou est constituée d'un polymère de Formule III 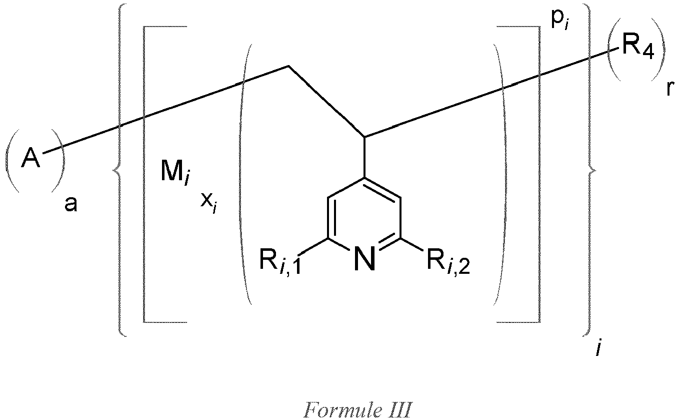 dans laquelle :
- les définitions de R_{*i*,1}, R_{*i,*2}, A, R₄, a, r, M*ᵢ*, x*ᵢ*, p*ᵢ* et *i* sont telles que décrites dans la Formule I.

Dans ce mode de réalisation, le polymère de Formule III peut être :
- un polymère avec au moins deux types d'unités monomères dérivées de la 4-vinylpyridine différents et sans unité monomère dérivée d'un co-monomère, ou
- un homopolymère.

Dans ce mode de réalisation, l'absence de co-monomère permet d'augmenter la capacité de captage des métaux par le polymère. Si 100% des unités monomères sont des unités monomères dérivées de la 4-vinylpyridine, dont les deux groupements substituants en position 2 et 6 sont des groupements acides carboxyliques, la capacité de complexation avec le métal est doublée, comparée à la capacité de complexation d'un polymère contenant 50% d'unités monomères dérivées de co-monomères.

Dans ce mode de réalisation, la possibilité d'avoir plusieurs unités monomères dérivées de la 4-vinylpyridine différentes permet de complexer des métaux différents selon les unités monomères ou de complexer différemment le même métal selon les unités monomères. Ces différences permettent d'obtenir des sites catalytiques différents sur un même polymère et ainsi de réaliser des réactions catalytiques nécessitant plusieurs sites catalytiques différents avec un seul catalyseur.

Selon un mode de réalisation particulier, la composition de l'invention, telle que définie ci-dessus, comprend ou est constituée d'un polymère possédant un seul type d'unités monomères dérivées de la 4-vinylpyridine et ne possédant pas d'unités monomères dérivées d'un co-monomère, ledit polymère étant complexé ou non avec un ou plusieurs métaux différents, étant linéaire et non réticulé.

La composition, selon l'invention, comprend ou est constituée d'un homopolymère de Formule IV 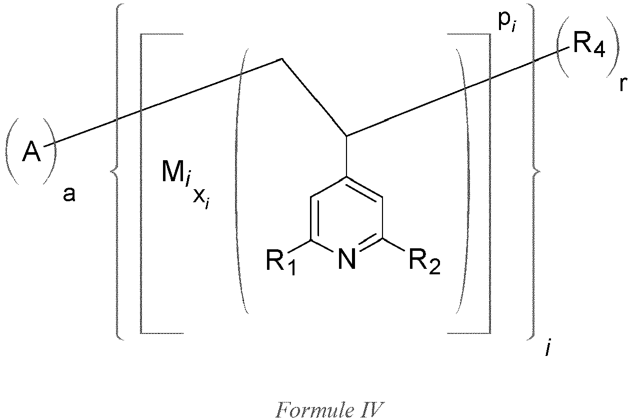 dans laquelle :
- les définitions de A, R₄, a, r, M*ᵢ*, x*ᵢ*, p*ᵢ* et *i* sont telles que décrites dans la Formule I,
- R₁ et R₂ sont des substituants choisis parmi le groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
   sous réserve que lorsque R₁ représente soit l'hydrogène, soit un radical alkyl de 1 à 4 carbones, soit un radical aryle de 1 à 4 carbones, soit un radical alcène de 1 à 4 carbones, alors R₂ est différent de l'hydrogène, du radical alkyl de 1 à 4 carbones, du radical aryle de 1 à 4 carbones, et du radical alcène de 1 à 4 carbones.

Dans ce mode de réalisation, le polymère de Formule IV est un homopolymère.

Dans ce mode de réalisation, le polymère peut être optimisé pour une seule action. Par exemple, le polymère comportant uniquement des unités monomères dérivées de la 4-vinylpyridine, dont les deux groupements substituants en position 2 et 6 sont des groupements acides carboxyliques, présentent une activité optimale pour le captage des ions uranyles en solution aqueuse.

Selon un mode de réalisation particulier, la composition de l'invention, telle que définie ci-dessus, comprend ou est constituée d'un polymère possédant un seul type d'unités monomères dérivées de la 4-vinylpyridine, dont les deux groupements substituants en position 2 et 6 sont des groupements acides carboxyliques, et ne possédant pas d'unités monomères dérivées d'un co-monomère, ledit polymère étant complexé ou non avec un seul métal, étant linéaire et non réticulé.

La composition, selon l'invention, comprend ou est constituée d'un homopolymère d'acide chélidamique de Formule V 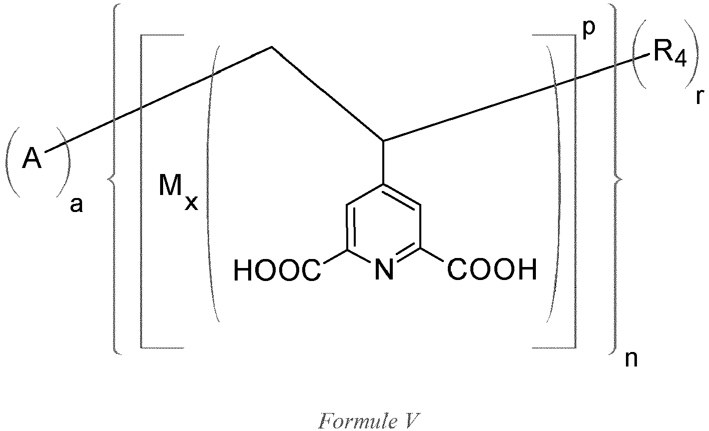 dans laquelle :
- les définitions de R₄, A, a, et r sont telles que décrites dans la formule générale,
- M est un métal,
- x est un nombre compris de 0 à 6,
- p est la charge électrique du complexe métallique comprise de - 6 à + 6.

Dans ce mode de réalisation, le polymère de Formule V est un homopolymère avec un seul type d'unités monomères dérivées de la 4-vinylpyridine, dont les deux groupements substituants en position 2 et 6 sont des groupements acides carboxyliques.

Dans ce mode de réalisation, les unités monomères constitutives du polymère de Formule V sont soit toutes complexées avec le même métal, soit toutes non complexées.

Dans ce mode de réalisation, les unités monomères constitutives du polymère de Formule V ont toutes la même charge électrique.

Dans ce mode de réalisation, les polymères de Formule V présentent l'avantage de pouvoir se solubiliser facilement en milieu aqueux, avec une solubilité dépendante des conditions de pH du milieu et avec une capacité à se complexer avec les métaux éventuellement présents dans la solution.

Selon un autre mode de réalisation particulier, la composition de l'invention, telle que définie ci-dessus, comprend ou est constituée d'un polymère possédant un seul type d'unités monomères dérivées de la 4-vinylpyridine dont les deux groupements substituants en position 2 et 6 sont des groupements acides carboxyliques et ne possédant pas d'unités monomères dérivées d'un co-monomère, ledit polymère n'étant pas complexé par un métal, étant linéaire et non réticulé.

La composition, selon l'invention, comprend ou est constituée d'un homopolymère d'acide chélidamique de Formule VI 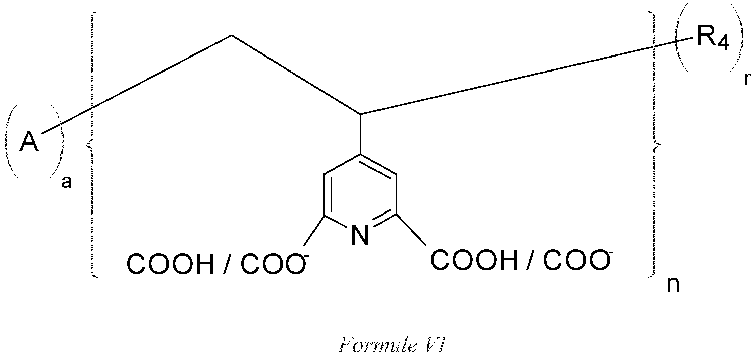 dans laquelle :
- les définitions de R₄, A, a, et r sont telles que décrites dans la Formule I,
en particulier les polymères de Formule VII, Formule VIII, Formule IX, Formule X, et Formule XI 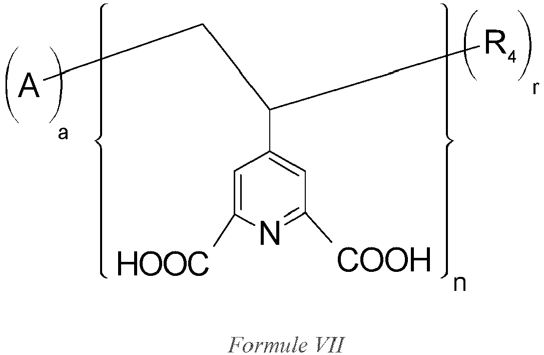 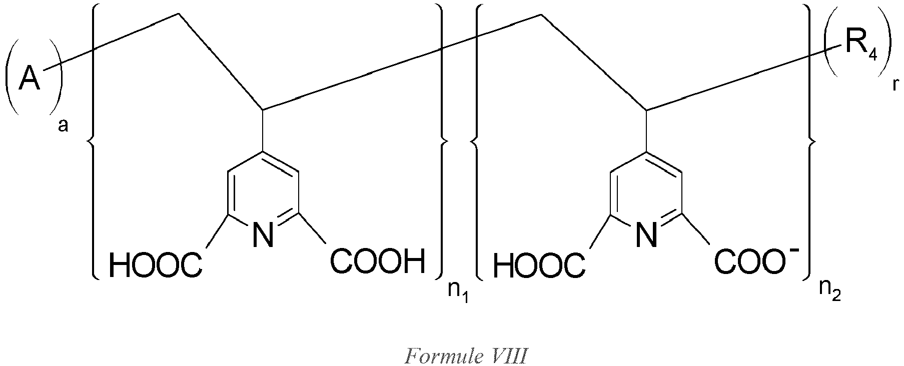 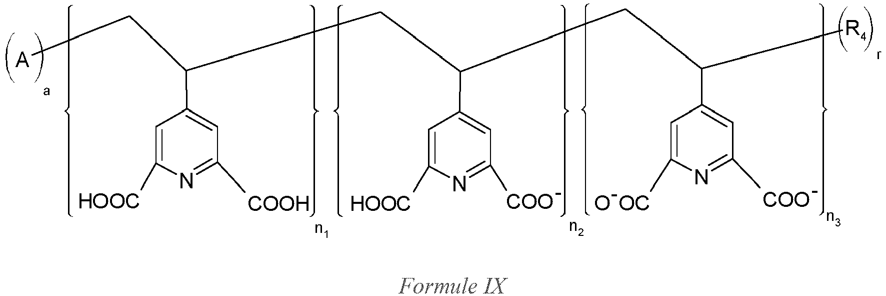 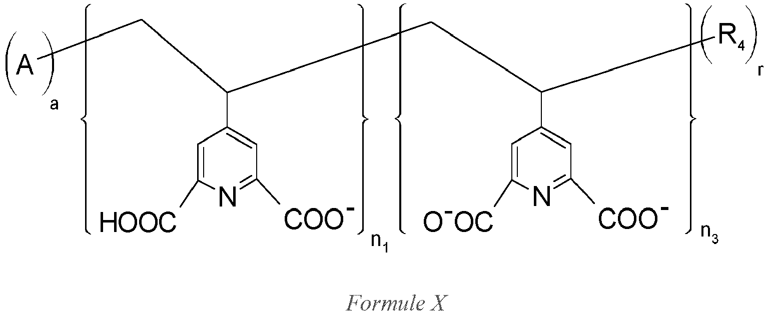 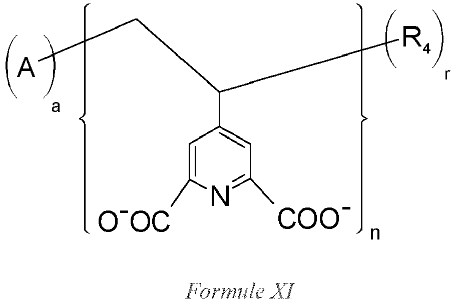 dans lesquelles :
- les définitions de R₄, A, a, et r sont telles que décrites dans la Formule I,
- n₁, n₂ et n₃ sont des nombres entiers,
- dans la Formule VIII, n₁ + n₂ = n,
- dans la Formule IX, n₁ + n₂ + n₃ = n,
- dans la Formule X, n₁ + n₃ = n.

Dans ce mode de réalisation, le polymère de Formule VI est un homopolymère comprenant un seul type d'unités monomères dérivées de la 4-vinylpyridine, dont les deux groupements substituants en position 2 et 6 sont des groupements acides carboxyliques, non complexés avec un métal.

Dans ce mode de réalisation, le polymère de Formule VI varie en fonction du pH de la solution dans laquelle le polymère se trouve. Le polymère de Formule VI a ainsi l'une des formules suivantes :
- en milieu très acide : le polymère de Formule VII,
- en augmentant un peu le pH : le polymère de Formule VIII,
- en continuant d'augmenter le pH : le polymère de Formule IX,
- en poursuivant l'augmentation du pH : le polymère de Formule X,
- en milieu neutre et basique: le polymère de Formule XI.

Dans ce mode de réalisation, le rapport n₁/n₂ du polymère de Formule VIII ; les rapports n₁/n₂ et n₁/n₃ du polymère de Formule IX et le rapport n₁/n₃ du polymère de Formule X dépendent du pH de la solution. La variation des rapports entre n₁, n₂ et n₃ pour les polymères de Formule VIII, Formule IX et Formule X, a une incidence sur la charge globale du polymère, la capacité du polymère à se solubiliser, ainsi que la capacité du polymère à complexer des métaux.

Selon un autre mode de réalisation particulier, la composition de l'invention, telle que définie ci-dessus, comprend ou est constituée d'un polymère possédant un seul type d'unités monomères dérivées de la 4-vinylpyridine, dont les deux groupements substituants en position 2 et 6 sont des groupements esters méthyliques, et ne possédant pas d'unités monomères dérivées d'un co-monomère, ledit polymère étant pas complexé par un métal, étant linéaire et non réticulé.

La composition, selon l'invention, comprend ou est constituée d'un homopolymère de Formule XII 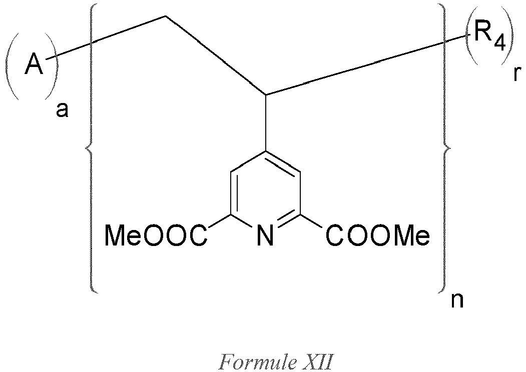 dans laquelle :
- les définitions de A, R₄, r, et a sont telles que décrites dans la Formule I.

Dans ce mode de réalisation, le polymère de Formule XII est un homopolymère avec un seul type d'unités monomères dérivées de la 4-vinylpyridine, dont les deux groupements substituants en position 2 et 6 sont des groupements esters méthyliques.

Dans ce mode de réalisation, aucune unité monomère constitutive du polymère de Formule XII n'est complexée avec un métal.

Dans ce mode de réalisation, le polymère ainsi obtenu est soluble en solution organique comme le DMSO et l'acétonitrile. Cette propriété permet une polymérisation facilitée du monomère dérivé de la 4vinylpyridine, dont les deux groupements substituants en position 2 et 6 sont des groupements esters méthyliques.

Selon un autre mode de réalisation particulier, la composition de l'invention, telle que définie ci-dessus, comprend ou est constituée d'un polymère possédant un seul type d'unités monomères dérivées de la 4-vinylpyridine, dont les deux groupements substituants en position 2 et 6 sont des groupements acides carboxyliques, et ne possédant pas d'unités monomères dérivées d'un co-monomère, ledit polymère étant complexé ou non avec de l'uranium, étant linéaire et non réticulé.

La composition, selon l'invention, comprend ou est constituée d'un homopolymère d'acide chélidamique complexé avec de l'uranium, représenté par la Formule XIII 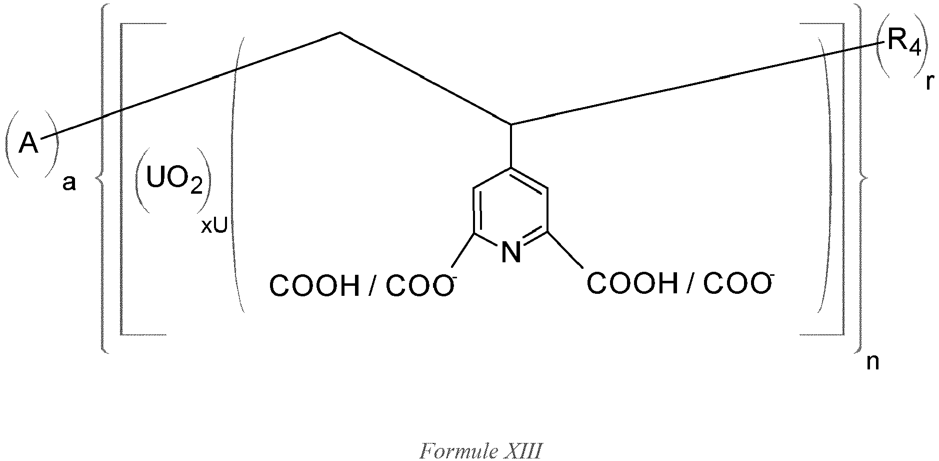 dans laquelle :
- les définitions de A, R₄, r, a sont telles que décrites dans la Formule I,
- xU est un nombre compris de 0 à 1,
en particulier les polymères de Formule VII, Formule XIV, Formule XV, Formule XVI et Formule XVII, 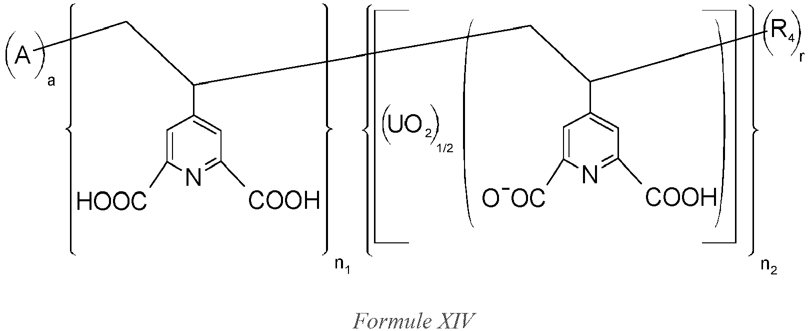 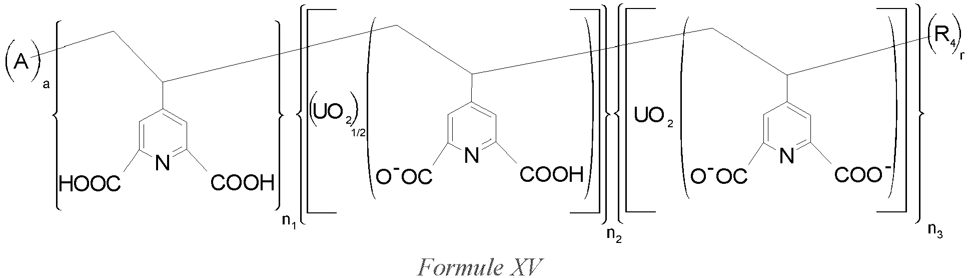 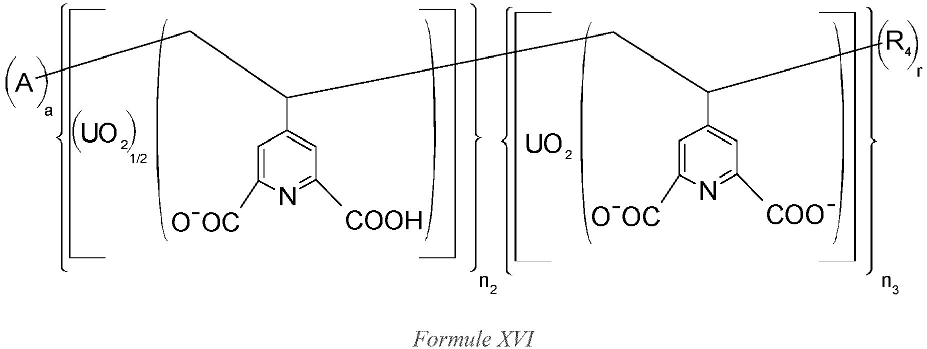 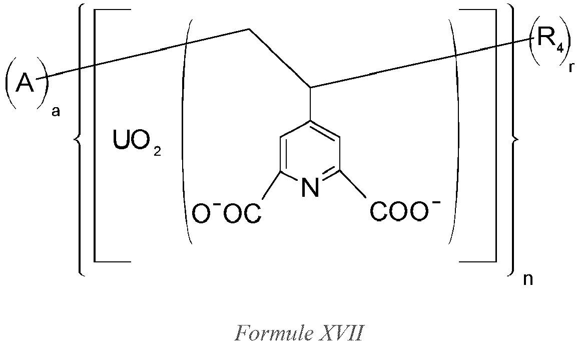 dans lesquelles :
- les définitions de R₄, A, a, et r sont telles que décrites dans la Formule I,
- n₁, n₂ et n₃ sont des nombres entiers non nul,
- dans la Formule XIV, n₁ + nz = n,
- dans la Formule XV, n₁ + n₂ + n₃ = n,
- dans la Formule XVI, n₂ + n₃ = n.

Dans ce mode de réalisation, le polymère de Formule XIII est un homopolymère comprenant un seul type d'unités monomères dérivées de la 4-vinylpyridine, dont les deux groupements substituants en position 2 et 6 sont des groupements acides carboxyliques, et dans lequel chaque unité monomère forme ou non un complexe avec un cation d'uranyle.

Dans ce mode de réalisation, le polymère de Formule XIII varie en fonction du pH de la solution dans laquelle le polymère se trouve. Le polymère de Formule XIII a ainsi l'une des formules suivantes
- en milieu très acide : le polymère de Formule VII,
- en augmentant un peu le pH : le polymère de Formule XIV,
- en continuant d'augmenter le pH : le polymère de Formule XV,
- en poursuivant l'augmentation du pH : le polymère de Formule XVI,
- en milieu neutre et basique : le polymère de Formule XVII.

Dans ce mode de réalisation, le rapport n₁/n₂ du polymère de Formule XIV ; les rapports n₁/n₂ et n₁/n₃ du polymère de Formule XV et le rapport n₂/n₃ du polymère de Formule XVI dépendent du pH de la solution.

La variation des rapports entre n₁, n₂ et n₃ pour les polymères de Formule XIV, Formule XV et Formule XVI, a une incidence sur la charge globale du polymère, la capacité du polymère à se solubiliser, ainsi que la capacité du polymère à complexer des métaux.

Dans ce mode de réalisation, par exemple, dans une solution à pH neutre contenant des ions uranyles, le polymère de Formule V se solubilise et devient un polymère de Formule XI. Ce polymère se complexe avec les ions uranyles et devient un polymère de Formule XVII qui précipite. Ce polymère de Formule XVII est alors placé dans une solution aqueuse avec un pH très acide. Le polymère réagit et libère les ions uranyles tandis que le polymère devient de Formule VII. Ce polymère de Formule VII n'est plus soluble et précipite.

Selon un mode de réalisation particulier, la composition de l'invention, telle que définie ci-dessus, comprend ou est constituée d'un copolymère avec au moins une unité monomère dérivée d'un co-monomère, en particulier des unités monomères issue du styrène, de l'acide acrylique ou de l' acrylate de tertiobutyle.

Dans ce mode de réalisation, le polymère contient au minimum une unité monomère dérivée d'un co-monomère et en particulier, ce co-monomère est soit du styrène, soit de l'acide acrylique.

Dans ce mode de réalisation, les co-monomères peuvent agir :
- comme espaceur en diminuant l'encombrement stérique autour des unités monomères dérivées de la 4-vinylpyridine ce qui peut permettre un accès plus facile des métaux aux sites de complexation, ou
- comme agent de modification des propriétés du polymère, en particulier la résistance aux rayonnements ou la résistance thermique.

Selon un mode de réalisation particulier, la composition de l'invention, telle que définie ci-dessus, comprend ou est constituée d'un copolymère dans laquelle le taux d'unité monomère dérivée d'un co-monomère varie d'une valeur supérieure stricte à 0% à une valeur inférieure à 80%.

Dans ce mode de réalisation, le polymère contient au minimum une unité monomère dérivée d'un co-monomère, mais le taux d'unités monomères dérivées d'un co-monomère peut prendre toutes les valeurs d'une valeur supérieur stricte à 0 jusqu'à 80%, en particulier d'une valeur supérieur stricte à 0 à 10% , d'une valeur supérieur stricte à 0 à 20%, d'une valeur supérieur stricte à 0 à 30%, d'une valeur supérieur stricte à 0 à 40%, d'une valeur supérieur stricte à 0 à 50%, d'une valeur supérieur stricte à 0 à 60%, d'une valeur supérieur stricte à 0 à 70% ou d'une valeur supérieur stricte à 0 à 80%.

Selon un mode de réalisation particulier, la composition de l'invention, telle que définie ci-dessus, comprend ou est constituée d'un polymère possédant un seul type d'unités monomères dérivées de la 4-vinylpyridine et un seul type d'unités monomères dérivées d'un co-monomère, ledit polymère n'étant pas complexé par un métal, étant linéaire, étant non réticulé, et étant polymérisé par blocs.

La composition, selon l'invention, comprend ou est constituée d'un copolymère à blocs de Formule XVIII, 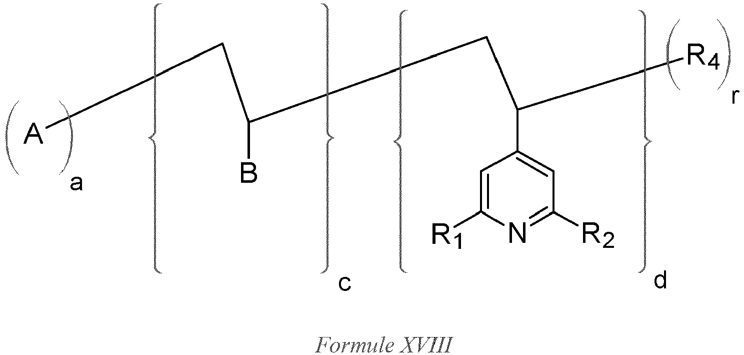 dans laquelle :
- les définitions de A, R₄, a et r, sont telles que décrites dans la Formule I,
- les définitions de R₁ et R₂ sont telles que décrites dans la Formule IV,
- B est une unité monomère dérivée d'un co-monomère ne formant pas de pont de réticulation,
- d est le degré de polymérisation du bloc constitué des unités monomères dérivées de la 4-vinylpyridine et a est un nombre entier,
- c est le degré de polymérisation du bloc constitué des unités monomères dérivées du co-monomère et b est un nombre entier,
- c + d = n.

Au sens de la présente invention on entend par « copolymère à bloc », un polymère dans lequel au moins une unité monomère est dérivée d'un co-monomère et dans lequel les unités monomères de formule identique sont liées entre elle.

Dans ce mode de réalisation, le polymère est polymérisé sous forme de blocs, avec un premier bloc contenant toutes les unités monomères dérivées d'un co-monomère, et un second bloc contenant toutes les unités monomères dérivées de la 4-vinylpyridine.

Dans ce mode de réalisation, le polymère présente les caractéristiques et les propriétés de chaque bloc. Par exemple si le premier bloc est constitué d'un polymère hydrophobe et le second bloc d'un polymère hydrophile, le polymère global forme des micelles.

Selon un autre mode de réalisation particulier, la composition de l'invention, telle que définie ci-dessus, comprend ou est constituée :
- soit d'un polymère possédant un seul type d'unités monomères dérivées de la 4-vinylpyridine , dont les deux groupements substituants en position 2 et 6 sont des groupements esters méthyliques, et un seul type d'unités monomères dérivées d'un co-monomère, le styrène, ledit polymère étant non complexé par un métal, étant linéaire, étant non réticulé, et est polymérisé par bloc,
- soit d'un polymère possédant un seul type d'unités monomères dérivées de la 4-vinylpyridine , dont les deux groupements substituants en position 2 et 6 sont des groupements acide carboxyliques, et un seul type d'unités monomères dérivées d'un co-monomère, le styrène, ledit polymère étant non complexé par un métal, étant linéaire, étant non réticulé, et est polymérisé par bloc.

La composition, selon l'invention, comprend ou est constituée d'un copolymère à deux blocs de Formule XIX a et b, 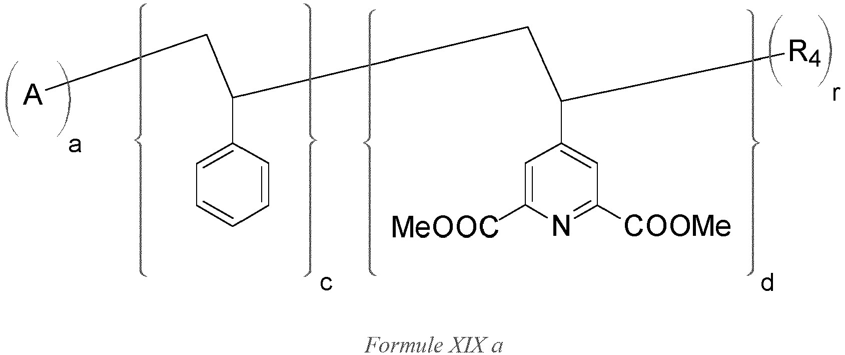 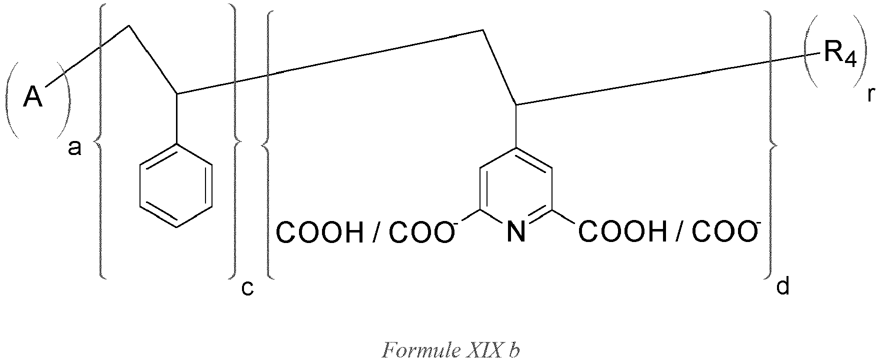 dans lesquelles :
- Les définitions de A, R₄, a, c, d et r sont telles que décrites dans la Formule XVIII.

Dans ce mode de réalisation, le polymère est polymérisé sous forme de blocs, avec un premier bloc contenant uniquement des unités monomères dérivées du styrène, et un second bloc contenant toutes les unités monomères dérivées de la 4-vinylpyridine.

Dans ce mode de réalisation, le polymère de Formule XIX b, est insoluble en milieu aqueux. Le bloc constitué d'unités monomères dérivées du styrène est hydrophobe. Le bloc constitué d'unités monomères dérivées de la 4-vinylpyridine, dont les deux groupements substituants en position 2 et 6 sont des groupements acides carboxyliques, est hydrophile. Le polymère de Formule XIX b peut former des micelles.

Selon un mode de réalisation particulier, la composition de l'invention, telle que définie ci-dessus, comprend ou est constituée d'un copolymère possédant un ou plusieurs types d'unités monomères dérivées de la 4-vinylpyridine différents et un ou plusieurs types d'unités monomères dérivées d'un co-monomère, ledit polymère étant complexé ou non avec un ou plusieurs métaux différents, étant non linéaire et étant réticulé avec au moins un autre polymère.

La composition, selon l'invention, comprend ou est constituée d'un copolymère réticulé, ledit copolymère étant de Formule XX, 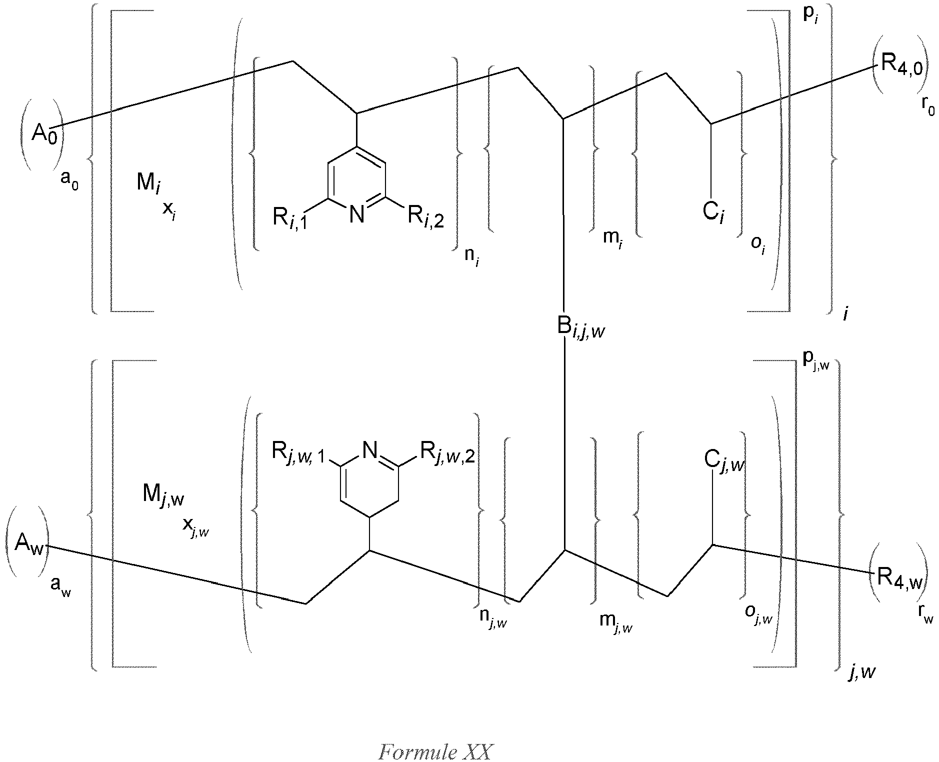 dans laquelle :
- w est un nombre entier strictement positif, indiciel, variant de 1 au nombre de polymère réticulé avec le polymère d'indice 0, lui-même compris de 1 à 1000,
- A₀ et les A_{w} sont des composés issus d'amorceurs de polymérisation,
- R_{4,0} et les R_{4,w} sont des composés permettant la propagation de la polymérisation, issus ou non dudit amorceur de polymérisation, ou permettant la terminaison de la polymérisation, ou un agent de transfert,
- a₀, r₀, les a_{w} et les r_{w} sont identiques ou différents et valent 0 ou 1,
- *i et j,w* sont des nombres entiers strictement positif, indiciel, variant respectivement de 1 à n*ᵢ*, et de 1 à n_{*j*,*w*}, n*ᵢ* et n_{*j*,*w*} étant compris de 1 à 9999,
- *nᵢ*+ n_{*j*,*w*} = *n , n* étant compris de 3 à 10000,
et pour chaque i et chaque j,w :
∘ R_{*i*,1}, R_{*i,*2}, R_{*j*,*w,*1} et R_{*j*,*w*,2} sont des substituants choisis parmi le groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
   sous réserve que lorsque R_{*i*,1} (respectivement R_{*i*,2}) représente soit l'hydrogène, soit un radical alkyl de 1 à 4 carbones, soit un radical aryle de 1 à 4 carbones, soit un radical alcène de 1 à 4 carbones, alors R_{*i*,2} (respectivement R_{*i*,1}) est différent de l'hydrogène, du radical alkyl de 1 à 4 carbones, du radical aryle de 1 à 4 carbones, et du radical alcène de 1 à 4 carbones,
   sous réserve que lorsque R_{*j,w*,1} (respectivement R_{*j,w,*2}) représente soit l'hydrogène, soit un radical alkyl de 1 à 4 carbones, soit un radical aryle de 1 à 4 carbones, soit un radical alcène de 1 à 4 carbones, alors R_{*j,w*,2} (respectivement R_{*j,w,*1}) est différent de l'hydrogène, du radical alkyl de 1 à 4 carbones, du radical aryle de 1 à 4 carbones, et du radical alcène de 1 à 4 carbones,
∘ B*_{i,j,w}* est une unité monomère dérivée d'un co-monomère, formant un pont de réticulation entre le polymère 0 en position i et le polymère d'indice w en position j,
∘ C*ᵢ* et les C*_{j,w}* sont des unités monomères dérivées d'un co-monomère ne formant pas un pont de réticulation,
∘ n*ᵢ*, m*ᵢ*, o*ᵢ*, les n*_{j,w}*, les m*_{j,w}*, et les o*_{j,w}*, sont des nombres entiers égaux à 0 ou 1,
∘ n*ᵢ* + m*ᵢ* + o*ᵢ* = 1,
∘ n_{*j*,*w*} + m*_{j,w}* + o*_{j,w}* = 1,
∘ la somme des *o*_{*j*,*w*} est non nulles, et la somme des o*ᵢ* est non nulles.

Dans ce mode de réalisation, le polymère de Formule XX est un copolymère réticulé dans lequel les ponts de réticulations se forment uniquement sur des unités monomères dérivées d'un co-monomère.

Dans ce mode de réalisation, le polymère de Formule XX peut contenir des unités monomères dérivées d'un co-monomère ne formant pas de pont de réticulation.

Dans ce mode de réalisation, les polymères réticulés sont capables de renforcer la structure des particules formées en tissant un réseau tri-dimensionnel au coeur de la particule.

Dans ce mode de réalisation, le polymère peut former un hydrogel.

Selon un mode de réalisation particulier, la composition de l'invention, telle que définie ci-dessus, comprend ou est constituée d'un copolymère possédant un seul type d'unités monomères dérivées de la 4-vinylpyridine, dont les deux groupements substituants en position 2 et 6 sont des groupements acides carboxyliques, et un seul type d'unités monomères dérivées d'un co-monomère, le 1,4-divinylbenzène, ledit polymère étant non complexé par un métal, étant non linéaire et étant réticulé avec au moins un autre polymère.

La composition, selon l'invention, comprend ou est constituée d'un copolymère réticulé, ledit copolymère étant de Formule XXI, 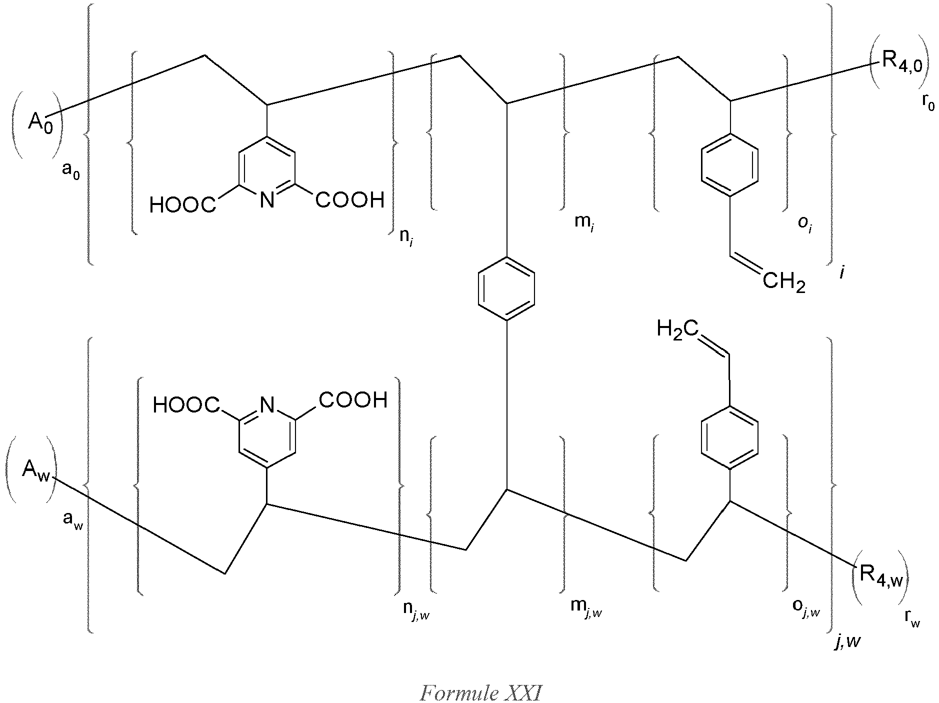 dans laquelle :
- les définitions de w, A₀, A_{w}, a₀, a_{w}, *i*, *j,w*, n*ᵢ*, n*_{j,w}*,m*ᵢ*, m*_{j,w}*, o*ᵢ*, o*_{j,w}*,R_{4,0}, R_{4,w}, r₀ et r_{w} sont telles que définies dans la Formule XX.

Dans ce mode de réalisation, le polymère de Formule XXI est un copolymère réticulé comprenant un seul type d'unités monomères dérivées de la 4-vinylpyridine, dont les deux groupements substituants en position 2 et 6 sont des groupements acides carboxyliques, et comprenant un seul type d'unités monomères dérivées d'un co-monomère, le 1,4-divinylbenzène.

Dans ce mode de réalisation, les unités monomères dérivées du 1,4-divinylbenzène du polymère de Formule XXI peuvent former ou non un pont de réticulation. Au moins un pont de réticulation est formé dans le polymère de Formule XXI.

Selon un mode de réalisation particulier, la composition de l'invention, telle que définie ci-dessus, comprend ou est constituée d'un polymère dans lequel ledit polymère est complexé à un métal.

Dans ce mode de réalisation, le polymère est complexé à au moins un atome métallique, en particulier pour son utilisation comme agent chélatant ou comme catalyseur.

Selon un mode de réalisation particulier, la composition de l'invention, telle que définie ci-dessus, comprend ou est constituée d'un polymère dans lequel ledit polymère est complexé à un métal choisi parmi les actinides, les lanthanides ou les métaux de transition.

Dans ce mode de réalisation, le polymère est complexé à une famille de métaux particulière.

Selon un mode de réalisation particulier, la composition de l'invention, telle que définie ci-dessus, comprend ou est constituée d'un polymère dans lequel ledit polymère est complexé à de l'uranium.

Dans ce mode de réalisation, le polymère est complexé uniquement à de l'uranium. Ce polymère est utile pour la récupération de l'uranium dans l'eau de mer ou dans le combustible nucléaire usagé. Il permet aussi la préparation de catalyseur à base d'uranium pour catalyser des réactions comme la dégradation des composés organiques volatils en phase gazeuse ou l'oxydation du méthane en méthanol.

Selon un mode de réalisation particulier, la composition de l'invention, telle que définie ci-dessus, comprend ou est constituée d'un polymère soluble en solution aqueuse et en particulier dans l'eau de mer.

Dans ce mode de réalisation, le polymère est soluble dans des solutions aqueuses et plus particulièrement dans l'eau de mer. C'est en particulier le cas pour l'homopolymère avec une unité monomère dérivée de la 4-vinylpyridine, dont les deux groupements substituants en position 2 et 6 sont des groupements acides carboxyliques. Les groupements acides carboxyliques facilitent la solubilisation du polymère dans des conditions de pH neutre ou basique, comme c'est le cas dans l'eau de mer.

Selon un mode de réalisation particulier, la composition de l'invention, telle que définie ci-dessus, comprend ou est constituée d'un polymère complexé avec un métal soluble ou insoluble en solution aqueuse.

Dans ce mode de réalisation, le polymère peut être soluble ou insoluble selon les conditions dans lequel le polymère se trouve, quand le polymère est complexé avec un métal. C'est le cas en particulier du polymère de Formule XIII. Ce polymère, complexé à de l'uranium, est insoluble à pH neutre et redevient soluble complexé à l'uranium en solution aqueuse à pH acide.

Selon un mode de réalisation particulier, la composition de l'invention, telle que définie ci-dessus, comprend ou est constituée d'un polymère soluble en solution aqueuse non complexé par un métal et insoluble en solution complexé avec un métal, en particulier avec l'uranium.

Dans ce mode de réalisation, le polymère est soluble dans une solution aqueuse et le polymère précipite en même temps que le métal lorsque le polymère et le métal se complexent. C'est le cas en particulier du polymère de Formule VI, qui est soluble dans l'eau à pH neutre et qui une fois complexé à l'uranium donne la Formule XIII, et précipite à pH neutre.

Selon un mode de réalisation particulier, la composition de l'invention, telle que définie ci-dessus, comprend ou est constituée d'un polymère soluble dans des solvants organiques, en particulier l'acétonitrile, et le diméthylsulfoxyde (DMSO).

Dans ce mode de réalisation, le polymère est soluble dans une solution organique comme l'acétonitrile, c'est en particulier le cas pour l'homopolymère comprenant une unité monomère dérivée de la 4-vinylpyridine, dont les deux groupements substituants en position 2 et 6 sont des groupements esters méthyliques.

Selon un mode de réalisation particulier, la composition de l'invention, telle que définie ci-dessus, comprend ou est constituée d'un polymère dans lequel A, Ao et A_{w} sont issus d'un amorceur de polymérisation choisi parmi le chlorure de 4-(chloromethyl)-benzoyle, le chlorure de benzyle, l'AIBN, le 2-bromo-2-méthylpropanoate de méthyle.

Dans ce mode de réalisation, la première extrémité du polymère ne peut pas être le dernier carbone de la chaine polymérique. La liste ci-dessus est non exhaustive et comprend l'ensemble des amorceurs de polymérisation utilisables dans les polymérisations radicalaires.

Selon un mode de réalisation particulier, la composition de l'invention, telle que définie ci-dessus, comprend ou est constituée d'un polymère dans lequel R₄, R_{4,0} et R_{4,w} sont choisis parmi un atome de chlore, ou les composés de Formule XXII

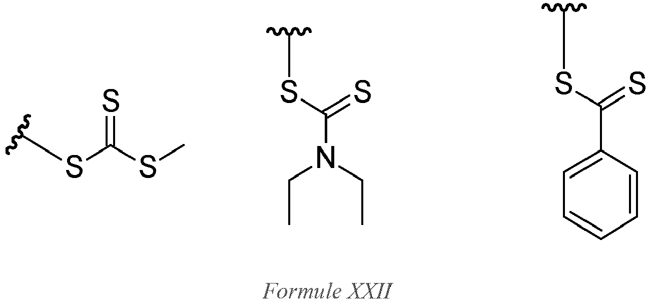

Dans ce mode de réalisation, la seconde extrémité du polymère ne peut pas être le dernier carbone de la chaine polymérique. La liste est non exhaustive et comprend l'ensemble des agents de transfert utilisables dans les polymérisations radicalaires dites contrôlées.

Selon un mode de réalisation particulier, la composition de l'invention, telle que définie ci-dessus, comprend ou est constituée d'un polymère de Formule XXIII.

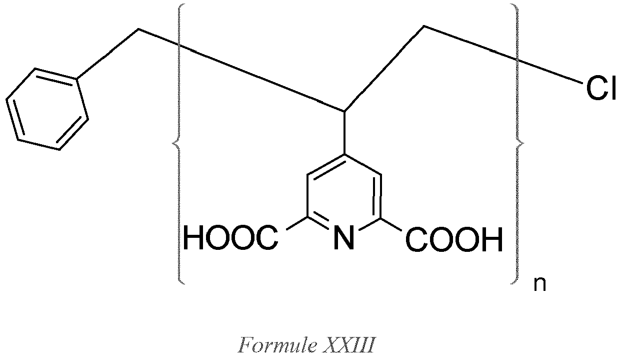

Dans ce mode de réalisation, le polymère de Formule XXIII est un homopolymère constitué d'unités monomères dérivées de la 4-vinylpyridine et substituées par deux groupements acides carboxyliques. L'amorceur choisi est le chlorure de benzyle qui se scinde en deux parties pour donner une terminaison benzyle et une terminaison chlore à l'autre bout de la chaine.

La présente invention concerne en outre un procédé de préparation d'un polymère, tel que défini ci-dessus, comprenant les étapes de préparation suivantes :
- une étape de polymérisation radicalaire commençant par l'amorçage d'un amorceur de polymérisation pour obtenir un amorceur de polymérisation amorcé suivi de la mise en contact dudit amorceur de polymérisation amorcé avec,
   ∘ au moins un monomère dérivé de la 4-vinylpyridine dans lequel les carbones en position 2 et 6 peuvent être substitués par l'un des substituants du groupe suivant : hydrogène, radical alkyl de 1 à 20 carbones, radical alcène de 1 à 20 carbones, radical aryle de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
   ∘ et éventuellement avec au moins un co-monomère,

avec ou sans réticulation,
pour obtenir un polymère,
   - une éventuelle étape de modification par la mise en contact dudit polymère avec un réactif pour modifier l'un au moins des susdits substituants en position 2 et/ou 6, pour obtenir un polymère éventuellement modifié,
   - une éventuelle étape de complexation par la mise en contact dudit polymère éventuellement modifié avec un métal pour obtenir un polymère éventuellement modifié et éventuellement complexé.

Au sens de la présente invention, on entend par « polymérisation radicalaire » les techniques de polymérisation qui permettent de polymériser des monomères et dont la propagation est assurée par la présence d'un radical. Ces techniques comprennent la polymérisation radicalaire dite classique, la polymérisation par transfert de chaine réversible par addition-fragmentation (RAFT), la polymérisation par l'intermédiaire de nitroxyde (NMP), la polymérisation radicalaire par transfert d'atome (ATRP), la polymérisation radicalaire par transfert d'atome par activateur supplémentaire et agent réducteur (SARA ATRP).

Le procédé de synthèse des polymères selon la présente invention présente l'avantage de pouvoir réaliser l'étape de polymérisation dans une solution dans laquelle les monomères qui forment les unités monomères sont insolubles. La présence de l'étape de modification permet de polymériser des monomères ayant des groupements en position 2 et 6 différents des groupements finaux. Par exemple, le monomère dérivé de la 4-vinylpyridine, dont les deux groupements substituants en position 2 et 6 sont des groupements acides carboxyliques est insoluble en solution organique. Il est donc très difficile de polymériser ce monomère en solution organique. Par contre le monomère dérivé de la 4-vinylpyridine, dont les deux groupements substituants en position 2 et 6 sont des groupements esters méthyliques est soluble en milieu organique. La polymérisation du monomère dérivé de la 4-vinylpyridine, dont les deux groupements substituants en position 2 et 6 sont des groupements esters méthyliques, est alors possible et l'étape de modification suivante permet d'hydrolyser la fonction ester en une fonction acide Le polymère ainsi obtenu, avec les fonctions acides, est insoluble en milieu organique.

Le procédé de synthèse des polymères selon la présente invention présente l'avantage de pouvoir facilement contrôler l'étape de polymérisation. La présence de l'étape de modification est une solution pour permettre de protéger les deux groupements des monomères dérivés de la 4-vinylpyridine. En effet, si les groupements souhaités sont très réactifs (COOH, NH₂...) le risque de voir ces groupements réagir pendant l'étape de polymérisation est important. Cela peut conduire à la formation de ramifications non contrôlées et/ou à la perte de certain groupement. L'étape de modification post-polymérisation permet de commencer la polymérisation avec des groupements protecteurs qui seront par la suite retirés lors de l'étape de modification. Le choix en plus d'un procédé de polymérisation radicalaire contrôlable comme la polymérisation RAFT ou ATRP améliore encore le contrôle sur la polymérisation.

Le procédé de synthèse des polymères selon la présente invention peut comprendre une étape supplémentaire de préparation des monomères dérivés de la 4-vinylpyridine.

Au sens de la présente invention, on entend par « amorçage d'un amorceur de polymérisation » l'étape permettant d'initialiser la polymérisation. Par exemple dans le cas de la polymérisation radicalaire, cette étape permet par des moyens physiques ou chimiques de créer un radical sur l'amorceur de polymérisation sur lequel va venir réagir une unité monomère.

Selon un mode de réalisation particulier, le procédé de préparation, tel que définie ci-dessus, d'un polymère de l'invention de Formule I 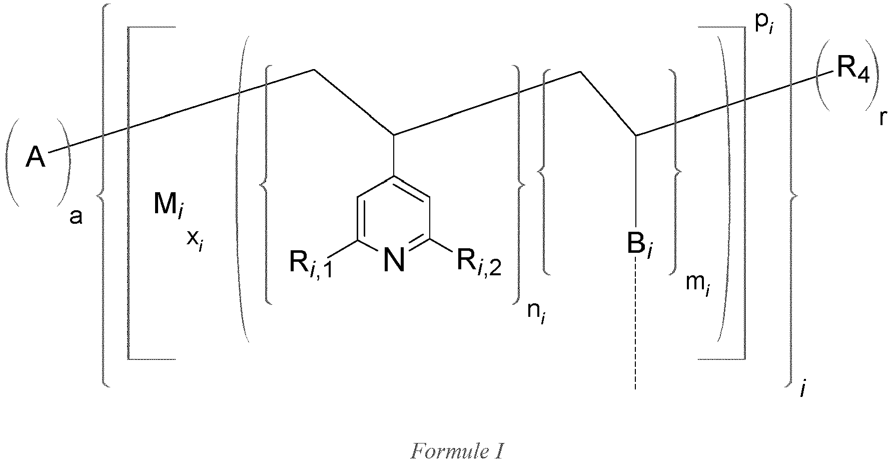 dans laquelle :
- R₄ est un composé permettant la propagation de la polymérisation, issu ou non d'un amorceur de polymérisation, ou permettant la terminaison de la polymérisation, ou un agent de transfert,
- A est un composé issu dudit amorceur de polymérisation ou un fragment issu du procédé de polymérisation,
- a et r sont identiques ou différents et valent 0 ou 1,
- *i* est un nombre entier strictement positif, indiciel, variant de 1 à n, lui-même compris de 2 à 10000,
   et pour chaque i :
   ∘ R_{*i*,1} et R_{*i*,2} sont des substituants choisis parmi le groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
   ∘ B*ᵢ* est une unité monomère dérivée d'un co-monomère, formant ou non un pont de réticulation,
   ∘ M*ᵢ* est un métal,
   ∘ n*ᵢ* et m*ᵢ* sont des nombres entiers égaux à 0 ou 1,
   ∘ n*ᵢ* + m*ᵢ* = 1,
   ∘ xᵢ est un nombre compris de 0 à 6,
   ∘ pᵢ est la charge électrique du complexe métallique comprise de - 6 à + 6,
      sous réserve que lorsque R_{*i*,1} (respectivement R_{*i*,2}) représente soit l'hydrogène, soit un radical alkyl de 1 à 4 carbones, soit un radical aryle de 1 à 4 carbones, soit un radical alcène de 1 à 4 carbones, alors R_{*i*,2} (respectivement R_{*i*,1}) est différent de l'hydrogène, du radical alkyl de 1 à 4 carbones, du radical aryle de 1 à 4 carbones, et du radical alcène de 1 à 4 carbones,
      ledit polymère étant linéaire quand il n'existe aucun B*ᵢ* formant de pont de réticulation, ledit polymère étant réticulé quand il existe au moins un B, appartenant à deux polymères différents de formule I,
comporte :
- une étape de polymérisation radicalaire commençant par l'amorçage d'un amorceur de polymérisation puis continuant par la mise en contact dudit amorceur de polymérisation amorcé avec un dérivé de la 4-vinylpyridine de Formule XXIV, 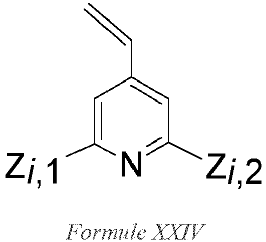 dans laquelle :
   - Z_{*i*,1} et Z_{*i*,2} sont des substituants choisis parmi le groupe suivant : hydrogène, radical alkyl de 1 à 20 carbones, radical alcène de 1 à 20 carbones, radical aryle de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,

   avec éventuellement au moins un co-monomère,
   avec ou sans pont de réticulation,
   pour obtenir le polymère de Formule XXV 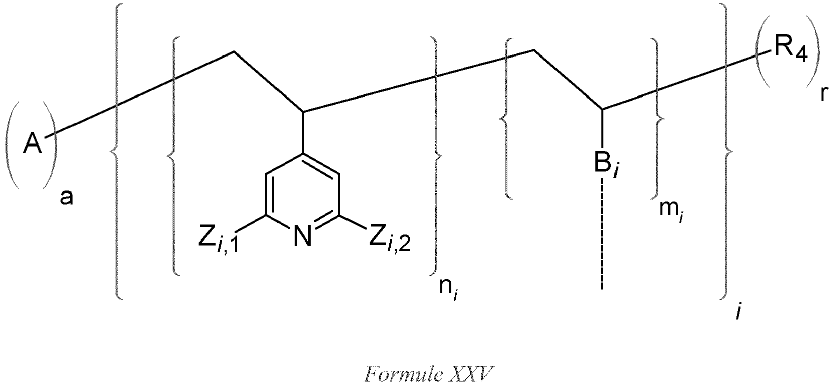
- une éventuelle étape de modification lorsque l'un au moins des Z_{*i*,1} est différent de R_{*i*,1} ou lorsque l'un au moins des Z_{*i*,2} est différent de R_{*i,*2}, dudit polymère de Formule XXV avec un réactif contenant un anion hydroxyde, carbonate ou phosphate, pour obtenir le polymère de Formule XXVI, 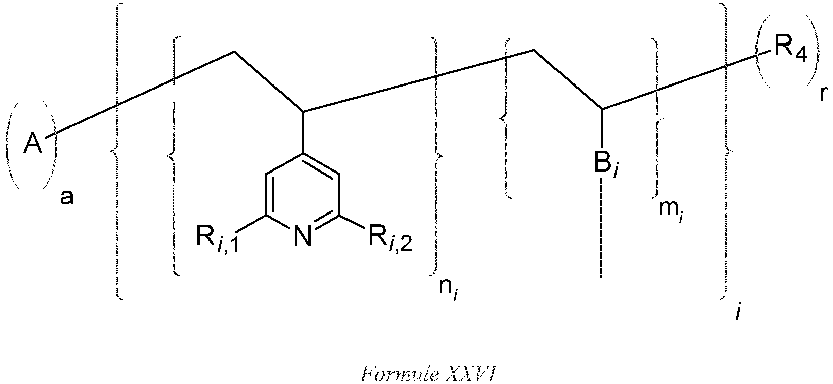
- une éventuelle étape de complexation dudit polymère de Formule XXVI avec au moins un composé métallique pour obtenir le polymère de Formule I.

Dans ce mode de réalisation, le procédé de synthèse du polymère de Formule I commence par la polymérisation radicalaire des monomères formant le polymère de Formule XXV. Ces monomères sont constitués des co-monomères, ainsi que des monomères dérivés de la 4-vinylpyridine qui n'ont pas forcément les mêmes substituants que les unités monomères dérivées de la 4-vinylpyridine présentes dans la Formule I, ainsi que. Lors de la polymérisation, il est possible que des ponts de réticulation se forment via un co-monomère.

Après la polymérisation et l'obtention d'un polymère de Formule XXV, si les groupements substituants des unités monomères dérivées de la 4-vinylpyridine sont différents dans la Formule I et la Formule XXV, une étape de modification est réalisée pour permettre aux groupements substituants de la Formule XXV différents de ceux de la Formule I de réagir et obtenir ainsi le polymère de la Formule XXVI.

Si le polymère de la Formule I est complexé à des métaux, il ne reste plus qu'une étape de complexation du polymère de la Formule XXVI pour obtenir le polymère de Formule I.

Selon un mode de réalisation particulier, le procédé de préparation, tel que définie ci-dessus, d'un polymère de l'invention de Formule II, dans laquelle les définitions de R_{*i*,1} et R_{*i*,2} sont telles que décrites dans la Formule II, comprend :
- une étape de polymérisation radicalaire commençant par l'amorçage d'un amorceur de polymérisation puis continuant par la mise en contact dudit amorceur de polymérisation amorcé avec un dérivé de la 4-vinylpyridine de Formule XXIV, pour obtenir le polymère de Formule XXVII, 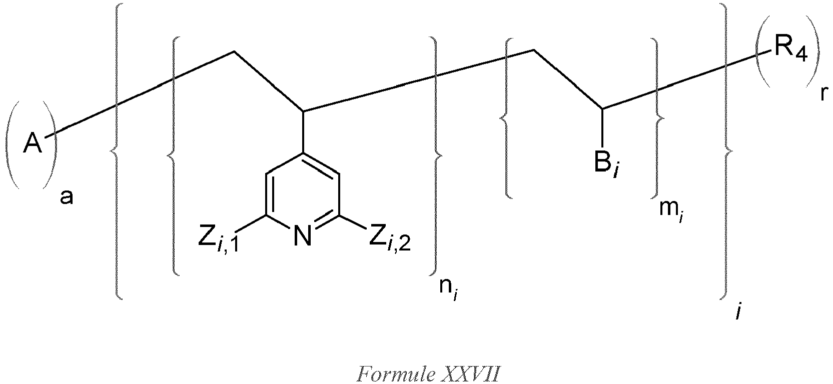 dans laquelle :
   - les définitions de A, R₄, n*ᵢ*, m*ᵢ*, r, a et *i*, sont telles que décrites dans la Formule II,
   - les définitions de Z_{*i*,1} et Z_{*i*,2} sont telles que décrites dans la Formule XXIV,
   - B*ᵢ* est une unité monomère dérivée d'un co-monomère ne formant pas de pont de réticulation,
- une étape de modification, lorsque l'un au moins des Z_{*i*,1} est différent de R_{*i*,1} ou lorsque l'un au moins des Z_{*i*,2} est différent de R_{*i,*2}, dudit polymère de Formule XXVII avec un réactif contenant un anion hydroxyde, carbonate ou phosphate, pour obtenir le polymère de Formule XXVIII, 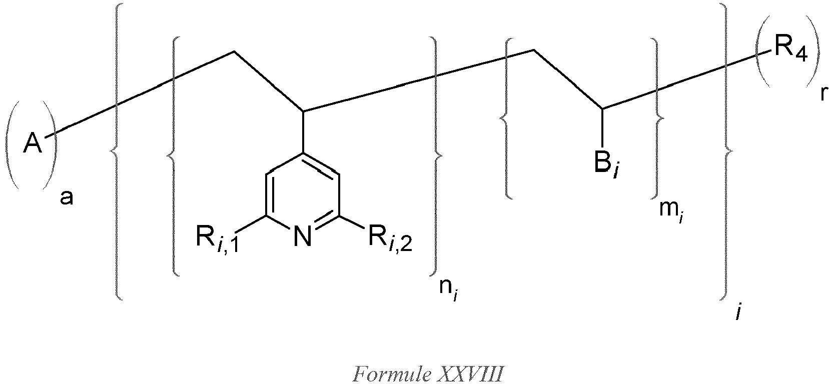
- une éventuelle étape de complexation dudit polymère de Formule XXVIII avec au moins un métal pour obtenir le polymère de Formule II.

Dans ce mode de réalisation, le procédé de synthèse du polymère de Formule II commence par la polymérisation radicalaire des monomères formant le polymère de Formule XXVII. Ces monomères sont constitués des monomères dérivées de la 4-vinylpyridine qui n'ont pas forcément les mêmes substituants que les unités monomères dérivées de la 4-vinylpyridine présentes dans la Formule II, ainsi qu'éventuellement de co-monomères. Le co-monomère est soit choisi pour ne pas former de pont de réticulation, soit absent.

Selon un mode de réalisation particulier, le procédé de préparation, tel que définie ci-dessus, d'un polymère de l'invention de Formule III, dans laquelle les définitions de R_{*i*,1} et R_{*i*,2} sont telles que décrites dans la Formule III, comprend :
- une étape de polymérisation radicalaire commençant par l'amorçage d'un amorceur de polymérisation puis continuant par la mise en contact dudit amorceur de polymérisation amorcé avec un dérivé de la 4-vinylpyridine de Formule XXIV, pour obtenir le polymère de Formule XXIX, 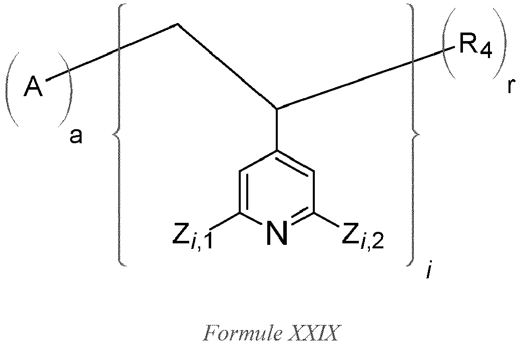 dans laquelle :
   - les définitions de A, R₄, r, a et i, sont telles que décrites dans la Formule III,
   - les définitions de Z_{*i*,1} et Z_{*i*,2} sont telles que décrites dans la Formule XXIV,
- une étape de modification, lorsque l'un au moins des Z_{*i*,1} est différent de R_{*i*,1} ou lorsque l'un au moins des Z_{*i*,2} est différent de R_{*i,*2}, dudit polymère de Formule XXIX avec un réactif contenant un anion hydroxyde, carbonate ou phosphate, pour obtenir le polymère de Formule XXX, 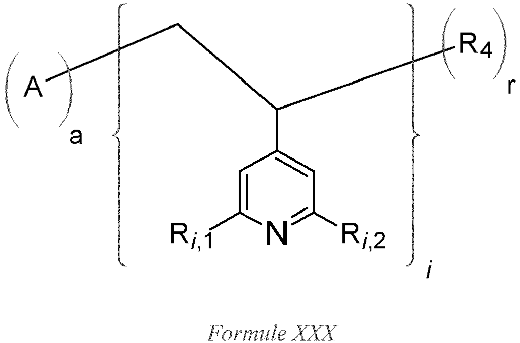
- une éventuelle étape de complexation dudit polymère de Formule XXX avec au moins un métal pour obtenir le polymère de Formule III.

Dans ce mode de réalisation, le procédé de synthèse du polymère de Formule III commence par la polymérisation radicalaire des monomères formant le polymère de Formule XXIX. Ces monomères sont constitués des monomères dérivés de la 4-vinylpyridine qui n'ont pas forcément les mêmes groupements substituants que les unités monomères dérivées de la 4-vinylpyridine présentes dans la Formule III.

Selon un mode de réalisation particulier, le procédé de préparation, tel que définie ci-dessus, d'un polymère de l'invention de Formule IV, dans laquelle les définitions de R₁ et R₂ sont telles que décrites dans la Formule IV, comprend :
- une étape de polymérisation radicalaire commençant par l'amorçage d'un amorceur de polymérisation puis continuant par la mise en contact dudit amorceur de polymérisation amorcé avec un monomère dérivé de la 4-vinylpyridine de Formule XXXI, 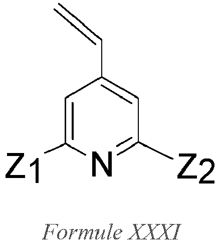 dans laquelle :
   - Z₁ et Z₂ sont des substituants choisis parmi le groupe suivant : hydrogène, radical alkyl de 1 à 20 carbones, radical alcène de 1 à 20 carbones, radical aryle de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,

   pour obtenir un polymère de Formule XXXII 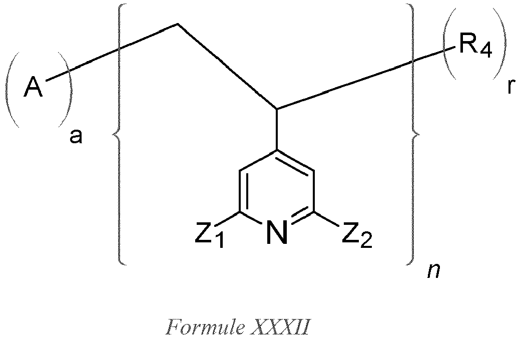
   dans laquelle :
      - les définitions de A, R₄, r, et a sont telles que dans la Formule IV,
- une étape de modification, lorsque Z₁ est différent de R₁ ou lorsque Z₂ est différent de R₂, dudit polymère de Formule XXXII avec un réactif contenant un anion hydroxyde, carbonate ou phosphate, pour obtenir le polymère de Formule XXXIII, 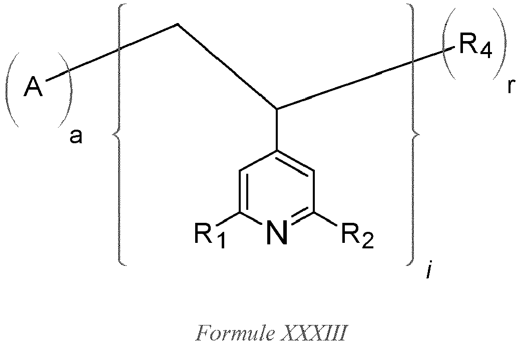
- une éventuelle étape de complexation dudit polymère de Formule XXXIII avec au moins un métal pour obtenir le polymère de Formule IV.

Dans ce mode de réalisation, le procédé de synthèse du polymère de Formule IV commence par la polymérisation radicalaire des monomères formant le polymère de Formule XXXII. Ces monomères sont tous identiques entre eux et sont constitués d'un monomère dérivé de la 4-vinylpyridine qui n'a pas forcément les mêmes groupements substituants que les unités monomères dérivées de la 4-vinylpyridine présentes dans la Formule IV.

Selon un mode de réalisation particulier, le procédé de préparation, tel que définie ci-dessus, d'un polymère de l'invention de Formule XVIII, dans laquelle les définitions de R₁ et R₂ sont telles que décrites dans la Formule XVIII, comprend :
- une étape de polymérisation radicalaire commençant par l'amorçage d'un amorceur de polymérisation puis continuant par la mise en contact dudit amorceur de polymérisation amorcé avec un monomère dérivé de la 4-vinylpyridine de Formule XXXI, 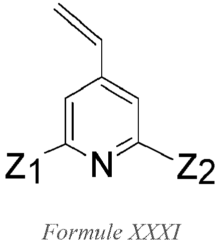 dans laquelle :
   - Z₁ et Z₂ sont des substituants choisis parmi le groupe suivant : hydrogène, radical alkyl de 1 à 20 carbones, radical alcène de 1 à 20 carbones, radical aryle de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,

   avec un polymère de Formule XXXIV, 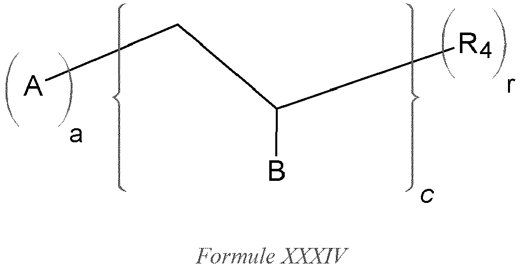
   dans laquelle :
      - les définitions de A, R₄, a, et r sont telles que décrites dans la Formule XVIII,
      - B est une unité monomère dérivée d'un co-monomère ne formant pas de pont de réticulation,
      - c est le degré de polymérisation du polymère et c est un nombre entier strictement inférieur à 0.8 n,
   pour obtenir le polymère de Formule XXXV 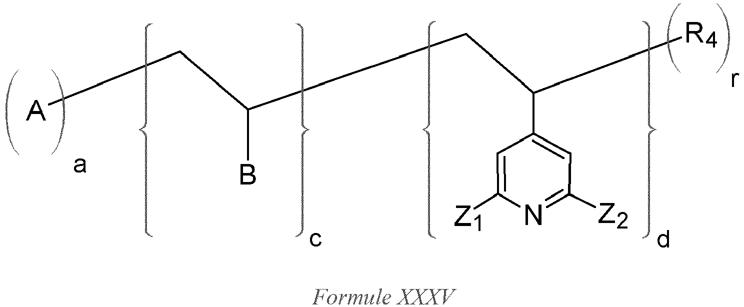
   dans laquelle :
      - d est un nombre entier,
      - c + d = n,
- une étape de modification, lorsque Z₁ est différent de R₁ ou lorsque Z₂ est différent de R₂, dudit polymère de Formule XXXV avec un réactif contenant un anion hydroxyde, carbonate ou phosphate, pour obtenir le polymère de Formule XVIII.

Dans ce mode de réalisation, le procédé de synthèse du polymère de Formule XVIII commence par l'amorçage d'un polymère de Formule XXXIV. Cet amorçage permet de lancer l'étape de polymérisation radicalaire des monomères dérivés du 4-vinylpyridine. Cette polymérisation permet de former un bloc à la suite du premier bloc préexistant sur l'amorceur de polymérisation utilisé.

Selon un mode de réalisation particulier, le procédé de préparation, tel que définie ci-dessus, d'un polymère de l'invention de Formule XVIII, comprend avant l'étape de polymérisation radicalaire par mise en contact d'un monomère dérivé de la 4-vinylpyridine de Formule XXXI, avec un polymère de Formule XXXIV, une étape de polymérisation radicalaire d'un co-monomère de Formule XXXVI pour obtenir ledit polymère de Formule XXXIV, 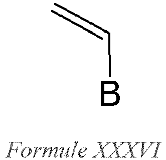 dans laquelle la définition de B est telle que décrite dans la Formule XVIII.

Dans ce mode de réalisation, le procédé de synthèse du polymère de Formule XVIII commence par la polymérisation des co-monomères qui permet la synthèse du polymère de Formule XXXIV Ce polymère est ensuite utilisé comme amorceur de polymérisation.

Selon un mode de réalisation particulier, le procédé de préparation, tel que définie ci-dessus, d'un polymère de l'invention de Formule XX, dans laquelle les définitions de *i*, *j,w*, R_{*j,w*,1}, R_{*j*,*w*,2}, R_{*i*,1} et R_{*i*,2} sont telles que décrites dans la Formule XX, comprend :
- une étape de polymérisation radicalaire commençant par l'amorçage d'un amorceur de polymérisation puis continuant par la mise en contact dudit amorceur de polymérisation amorcé avec du dérivé de la 4-vinylpyridine de Formule XXIV et de Formule XXXVII, 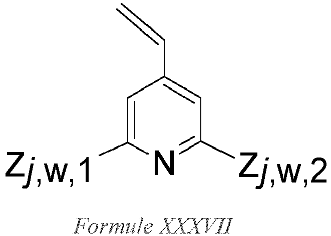 dans laquelle :
   - Z_{*j*,w,1} et Z_{*j*,w,2} sont des substituants choisis parmi le groupe suivant : hydrogène, radical alkyl de 1 à 20 carbones, radical alcène de 1 à 20 carbones, radical aryle de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,

   avec au moins un co-monomère,
   avec réticulation d'au moins un des co-monomères,
   pour obtenir un polymère de Formule XXXVIII, 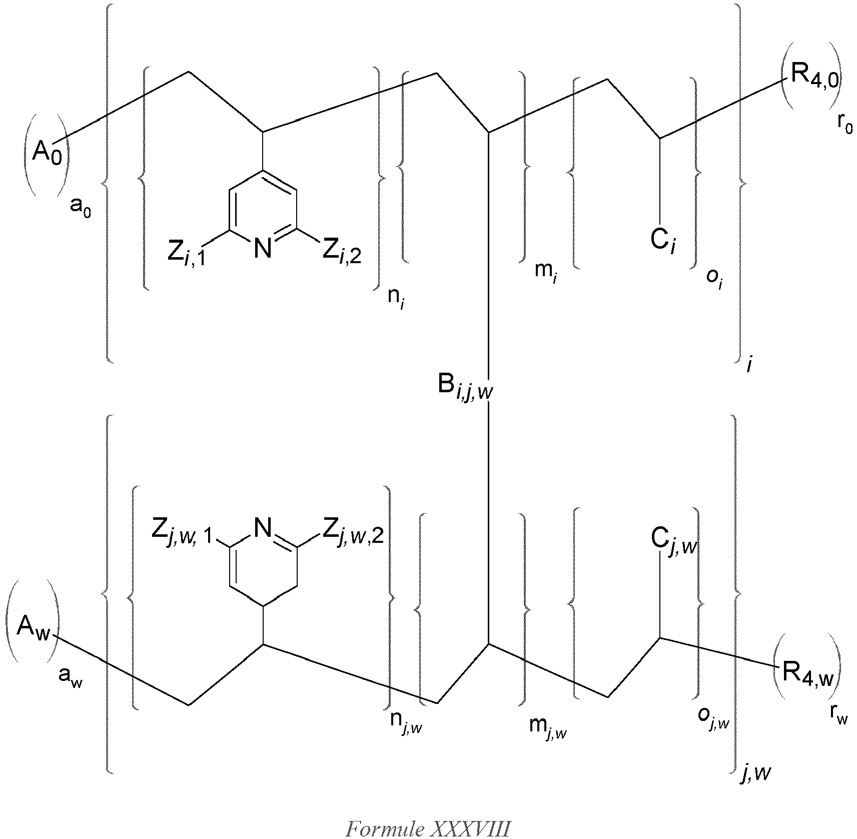
   dans laquelle :
      - les définitions de w, A₀, A_{w}, B*_{i,j,w}*, C*ᵢ*, C_{*j*,w}, R_{4,0}, R_{4,w}, a₀, a_{w}, nᵢ, mᵢ, oᵢ, n*_{j,w}*, m*_{j,w}*, o*_{j,w}*, r₀ et r_{w} sont telles que définies dans la Formule XX,
      - les définitions de Z_{i,1}, Z_{i,2} sont telles que définies dans la Formule XXIV,
- une étape de modification, lorsque l'un au moins des Z_{*i*,1} est différent de R_{*i*,1} ou lorsque l'un au moins des Z_{*i*,2} est différent de R_{*i*,2} ou lorsque l'un au moins des Z_{*j,w,*1} est différent de R_{*j,w*,1} ou lorsque l'un au moins des Z_{*j*,*w*,2} est différent de R_{*j,w,*2}, dudit polymère de Formule XXXVIII avec un réactif pour modifier l'un au moins des Z_{*i*,1}, Z_{*i*,2}, Z_{*j*,*w*,1} ou Z_{*j*,*w*,2}, ledit réactif contenant un anion hydroxyde, carbonate ou phosphate, pour obtenir le polymère de Formule XXXIX, 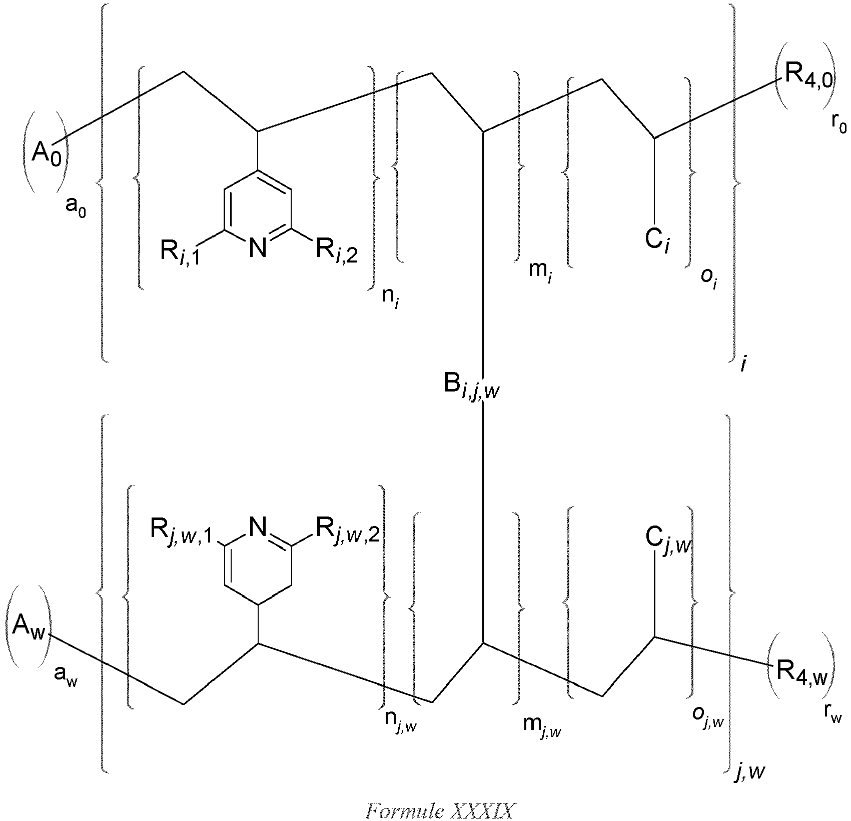
- une éventuelle étape de complexation dudit polymère de Formule XXXIX avec au moins un métal pour obtenir le polymère de Formule XX.

Dans ce mode de réalisation, le procédé de synthèse du polymère de Formule XX commence par la polymérisation simultanée de l'ensemble des polymères réticulés par la mise en contact des amorceurs de polymérisation amorcés, des co-monomères qui formeront des ponts de réticulation, des co-monomères qui ne formeront pas de pont de réticulation, ainsi que des monomères dérivés de la 4-vinylpyridine. Une fois les polymères formés et si au moins un substituant est différent entre la Formule XXXVIII et la Formule XX, une étape de modification avec par exemple une base permet d'obtenir le polymère de Formule XXXIX. Ce polymère est lui-même complexé avec un métal pour obtenir un polymère de Formule XX.

Selon un mode de réalisation particulier, le procédé de préparation, tel que définie ci-dessus, d'un polymère de l'invention de Formule V, comprend :
- une étape de polymérisation radicalaire commençant par l'amorçage d'un amorceur de polymérisation puis continuant par la mise en contact dudit amorceur de polymérisation amorcé avec du dérivé de la 4-vinylpyridine de Formule XL, 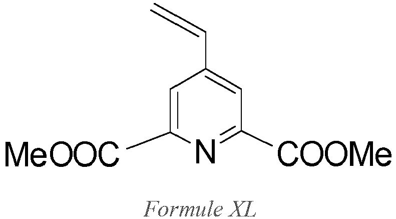 pour obtenir un polymère de Formule XII,
- une étape de modification dudit polymère de Formule XII avec une base pour obtenir un polymère de Formule VI,
- une étape de complexation dudit polymère de Formule VI avec un métal pour obtenir un polymère de Formule V.

Dans ce mode de réalisation, le procédé de synthèse du polymère de Formule V commence par la polymérisation du monomère dérivé de la 4-vinylpyridine avec deux substituants esters méthyliques pour obtenir un homopolymère de Formule XII. Ce polymère est ensuite mis à réagir avec de la soude qui permet l'hydrolyse du méthyle des groupements esters méthyliques pour obtenir deux groupements acides carboxyliques. Cette réaction permet d'obtenir le polymère de Formule VI. Ce polymère de Formule VI est ensuite complexé avec des métaux pour obtenir un polymère de Formule V.

Selon un mode de réalisation particulier, le procédé de préparation, tel que définie ci-dessus, d'un polymère de l'invention de Formule XIX, comprend :
- une étape de polymérisation radicalaire par la mise en contact d'un polymère de Formule XLI 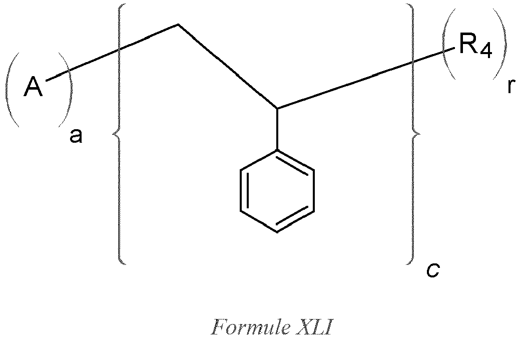
   avec du dérivé de la 4-vinylpyridine de Formule XL,
   pour obtenir le polymère de Formule XIX.

Dans ce mode de réalisation, le procédé de synthèse du polymère de Formule XIX commence par l'amorçage d'un polymère de Formule XLI. Cet amorçage permet de lancer l'étape de polymérisation radicalaire des monomères dérivés du 4-vinylpyridine. Cette polymérisation permet de former un bloc à la suite du premier bloc préexistant sur l'amorceur de polymérisation utilisé.

Selon un mode de réalisation particulier, le procédé de préparation, tel que définie ci-dessus, d'un polymère de l'invention de Formule XX, comprend avant l'étape de polymérisation radicalaire par mise en contact d'un monomère dérivé de la 4-vinylpyridine de Formule XL, avec un polymère de Formule XLI, une étape de polymérisation radicalaire du styrène pour obtenir ledit polymère de Formule XLI.

Dans ce mode de réalisation, le procédé de synthèse du polymère de Formule XIX commence par la polymérisation des co-monomères qui permet la synthèse du polymère de Formule XLI qui est utilisé ensuite comme amorceur de polymérisation.

Selon un mode de réalisation particulier, ladite étape de polymérisation radicalaire, tel que définie ci-dessus, peut-être une polymérisation de type NMP, RAFT, ATRP, SARA ATRP ou une polymérisation radicalaire classique.

Selon un mode de réalisation particulier, le procédé de préparation d'un polymère de l'invention de Formule XIX, comprend :
- une première étape de réaction par la mise en contact d'un composé de Formule XLII, 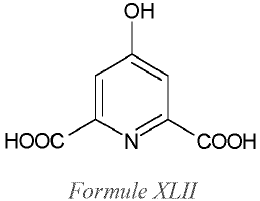 avec du PhPOCl₂ et du méthanol pour synthétiser le composé de Formule XLIII, 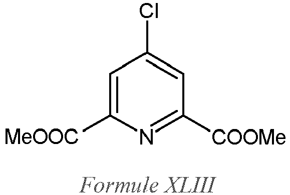
- une seconde étape de réaction par la mise en contact d'un composé de Formule XLIII avec du NaI, du MeCN et du MeCOCl pour synthétiser le composé de Formule XLIV, 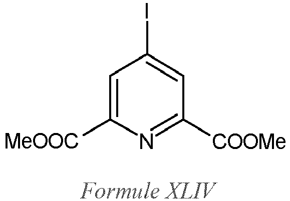
- une troisième étape de réaction par la mise en contact du composé de Formule XLIV avec du CH₂=CHBF₃K, du Cs₂CO₃, du PPh₃, et du Pd(OAc)₂ pour synthétiser le composé de Formule XL, 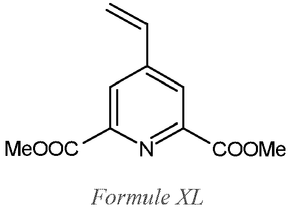
- une étape de polymérisation radicalaire par la mise en contact du composé de Formule XL avec du chlorure de benzyle, du CuCl₂ et du cuivre métallique pour synthétiser le polymère de Formule XLV, 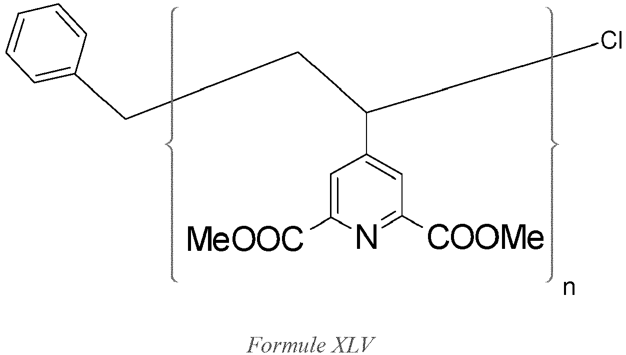
- une quatrième étape de modification par la mise en contact du polymère de Formule XLV avec de la soude pour synthétiser le composé de Formule XXIII.

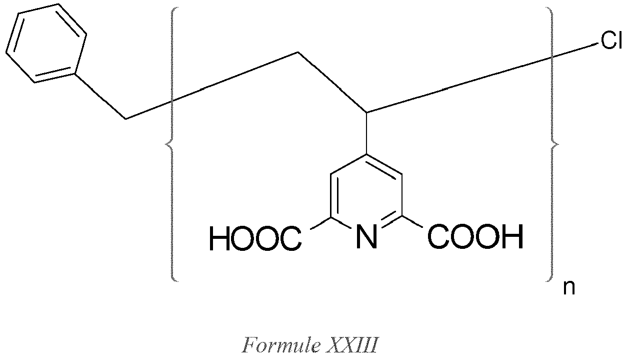

Dans ce mode de réalisation, le procédé de synthèse du polymère de Formule XXIII commence par la synthèse du monomère dérivé de la 4-vinylpyridine avec deux groupements esters méthyliques. Cette synthèse commence par le remplacement de la fonction alcool du carbone 4 de l'acide chélidamique par un groupement chlore Au cours de cette étape, les deux groupements acides carboxyliques sont modifiés pour former des groupements esters méthyliques. Puis cette synthèse est poursuivie par le remplacement de la nouvelle fonction chlore par une fonction iode. Cette synthèse continue avec le remplacement de cette fonction I par une fonction CH₂=CH-, ce qui permet d'obtenir le monomère de Formule XL. Ce monomère est ensuite polymérisé selon la technique SARA ATRP, ce qui permet d'obtenir un polymère linéaire d'un degré de polymérisation contrôlé de Formule XLV. Le polymère ainsi obtenu de Formule XLV est mis à réagir avec de la soude pour obtenir le polymère de Formule XXIII.

La présente invention concerne en outre l'utilisation de la composition de la présente invention choisie dans le groupe comprenant le captage de métaux et leur restitution, le service comme catalyseur homogène ou hétérogène, le marquage de surfaces organiques et/ou inorganiques, le marquage par fluorescence des biomolécules, et la post-fonctionnalisation de l'ester chélidamique.
Selon un mode de réalisation particulier, la composition de la présente invention est utilisable comme adsorbant de métaux dans l'eau de mer, en particulier l'adsorption des actinides, plus particulièrement l'adsorption de l'uranium et encore plus particulièrement l'adsorption sélective de l'uranium par rapport au vanadium.

Selon un mode de réalisation particulier, la composition de la présente invention est utilisable comme traitement des effluents contaminés par des métaux, en particulier les effluents radioactifs et en particulier les déchets nucléaires issus des centrales nucléaires.

### Figures

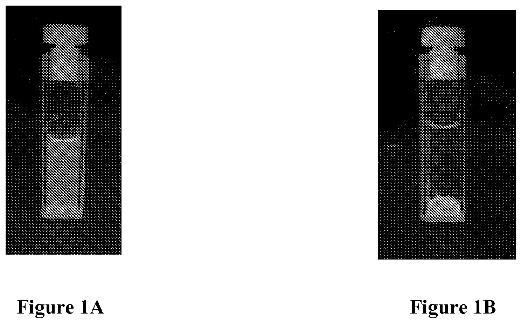

La **Figure 1** **A** représente une solution de nitrate d'uranyle à pH neutre avec du UO₂(NO₃)₂ seul. (C_{uranyl} = 0.1M, λ_{lumière} = 254 nm, T ambiante).
La **Figure 1** **B** représente un test de captage de l'uranium sous forme de nitrate d'uranyle en solution à pH neutre avec du UO₂(NO₃)₂ et du poly(2,6-diacide carboxylique-4-vinylpyridine). (C_{uranyl} = 0.1 M, C_{polymère} = 0.2 M, λ_{lumière} = 254 nm, T ambiante). Le captage des ions uranyles est total, dans la limite de détection (>98%).

### Exemples

### Exemple 1 : Synthèse du monomère diméthyle de 4-vinylpyridine-2,6-dicarboxylate

### a. Synthèse du 2,6-diacide carboxylique-4-hydroxypyridine

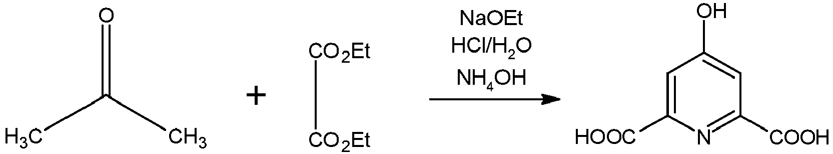

Cette réaction est connue dans l'art antérieur, en particulier dans la référence. RSC Adv., 2014, 4, 25486.

### b. Synthèse du diméthyle de 4-chloropyridine-2,6-dicarboxylate

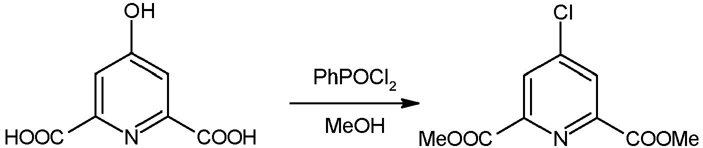

Cette réaction est connue dans l'art antérieur, en particulier dans la référence J. Chem. Soc. , Dalton Trans., 2000, 2031-2043.

### c. Synthèse du diméthyle de 4-iodopyridine-2,6-dicarboxylate

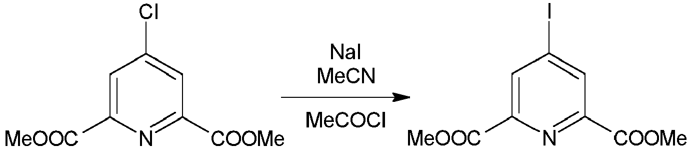

Cette réaction est connue dans l'art antérieur, en particulier dans la référence Tetrahedron, 2008, 64, 399-411.

### d. Synthèse du diméthyle de 4-vinylpyridine-2,6-dicarboxylate

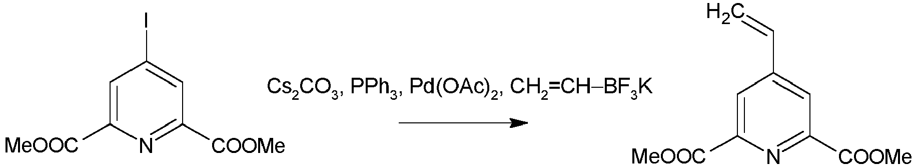

Du 2 diméthyle de 4-iodopyridine-2,6-dicarboxylate (6.2 mmol) est ajouté dans un ballon avec 1mmol de triphénylphosphine, et 0.33 mmol de Palladium (II) acétate. Ces composés sont dissous dans 20 mL d'une solution de THF / eau (Rapport 9/1). Du carbonate de césium (III) (19 mmol) et du vinyltrifluoroborate de potassium (7.5 mmol) sont ajouté au mélange. Le milieu est chauffé à 85 °C pendant 8 h sous agitation, puis refroidi et enfin filtré. Le résidu blanc obtenu est lavé à l'acétate d'éthyle puis concentré. Le concentrat obtenu est purifié sur gel de silice. Une élution par un mélange d'éther de pétrole et d'acétate d'éthyle (Rapport 3/1) permet d'obtenir le diméthyle de 4-vinylpyridine-2,6-dicarboxylate sous forme d'un gramme de solide blanc à 78% massique, recristallisé dans un mélange de dichlorométhane et d'éther de pétrole (Rapport 1/10).

### Exemple 2 : Synthèse du poly (2,6 dicarboxylique acide-4-vinylpyridine) linéaire

### a. Synthèse du poly (2,6-diméthyle ester-4-vinylpyridine) linéaire

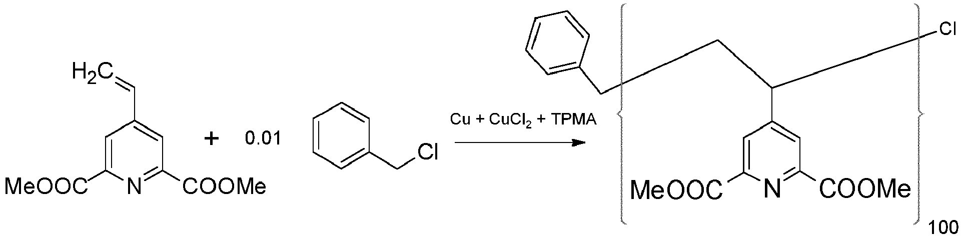

De la 4-vinylpyridine-2,6-diméthyle ester (0.5 mmol) est solubilisé dans 1 mL de solvant acétonitrile. Du Chlorure de cuivre (II) (0.05 µmol) est ajouté à la solution, ainsi que 0.2 µmol de Tri-(2-picolyl)amine et 1 cm de fil de cuivre (D 1mm). Du chlorure de benzyle (amorceur halogéné) est ajouté à hauteur de 5 µmol. Le réacteur est chauffé à 25°C pendant 1 h sous agitation. Le polymère obtenu est ensuite précipité dans un mélange de THF et de méthanol de rapport molaire (1/1). Le précipité obtenu est filtré. La polymérisation radicalaire est de type SARA ATRP. La réaction a aussi été réalisée à une température de 30 et 50 °C.

### b. Synthèse du poly (2,6 dicarboxylique acide-4-vinylpyridine) linéaire

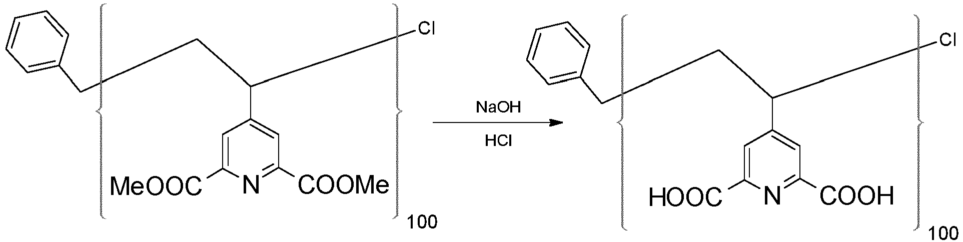

Le précipité obtenu précédemment et contenant le poly (2,6-diméthyle ester-4-vinylpyridine) linéaire est re-solubilisé dans 1 mL d'acétonitrile puis hydrolysé avec 1 mL d'une solution de NaOH à 1 M. De l'acide chlorhydrique à 2 M est ajouté jusqu'à atteindre un pH de 2. Le poly (2,6 dicarboxylique acide-4-vinylpyridine) précipite et est récupéré (Rendement molaire de 80%).

### Exemple 3 : Synthèse du poly [(2,6-diméthyle ester-4-vinylpyridine) - styrène] à blocs

### a. Préparation du premier bloc de polystyrène

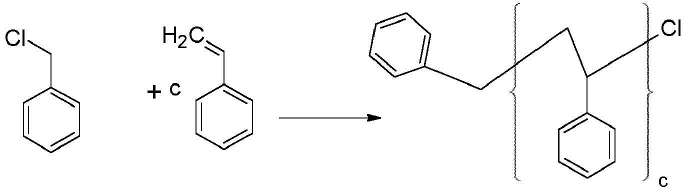

Du styrène (1mL) est solubilisé dans 1 mL de solvant sulfolane. Du Chlorure de cuivre (II) (0.25 mg) est ajouté à la solution, ainsi que 5 mg de Tri-(2-picolyl)amine et 1 cm de fil de cuivre par millilitre de solution (D 1mm). Du chlorure de benzyle (amorceur halogéné) est ajouté à hauteur de 10 µL. Le réacteur est chauffé à 60°C pendant 10 h sous agitation. Le polymère obtenu est ensuite précipité dans du méthanol. Le précipité est filtré. La polymérisation radicalaire est de type SARA ATRP.

### b. Polymérisation du bloc de dérivées de la 4-vinylpyridine

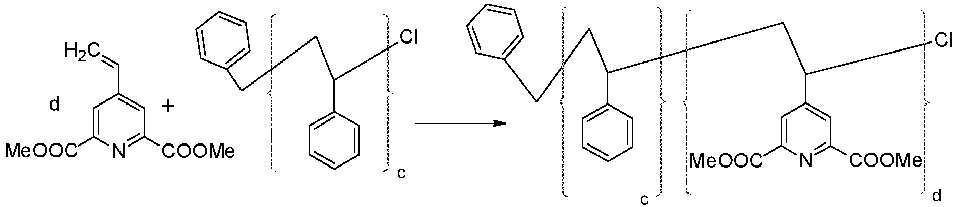

Du 4-vinylpyridine-2,6-diméthyle ester (0.5 mmol) est solubilisé dans 1 mL de solvant diméthylsulfoxyde/sulfolane (Rapport 1/1). Du Chlorure de cuivre (II) (0.05 µmol) est ajouté à la solution, ainsi que 0.2 µmol de Tri-(2-picolyl)amine et 1 cm de fil de cuivre (D 1mm). Le précipité de l'étape 1 est ajouté. Le réacteur est chauffé à 50°C pendant 1 h sous agitation. Le polymère obtenu est ensuite précipité dans du méthanol. Le précipité obtenu est filtré. La polymérisation radicalaire est de type SARA ATRP.

### Exemple 4 : Synthèse du poly (2,6 dicarboxylique acide-4-vinylpyridine) - 1,4-divinylbenzène réticulé

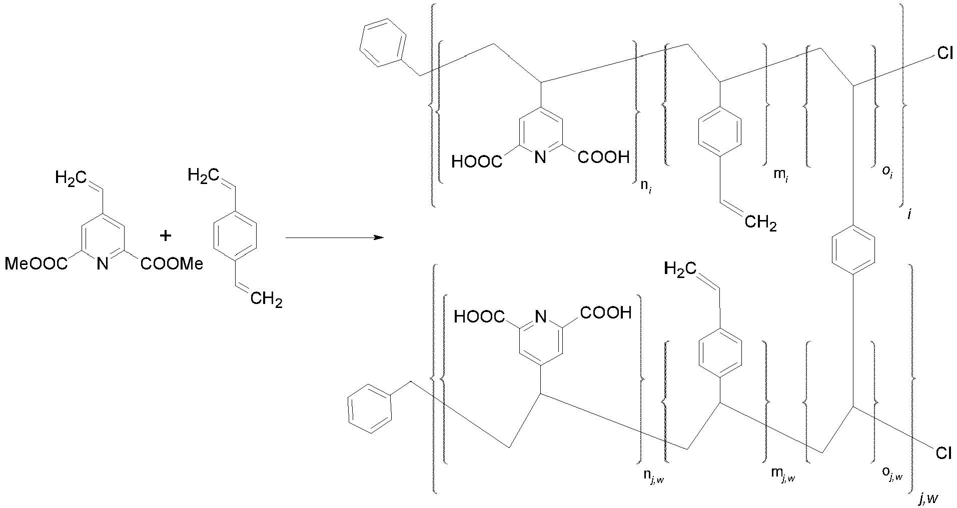

Du 4-vinylpyridine-2,6-diméthyle ester (0.5 mmol) est solubilisé dans 1 mL de solvant diméthylsulfoxyde avec 0.01 mmol de 1,4-divinylbenzène. Du Chlorure de cuivre (II) (0.05 µmol) est ajouté à la solution, ainsi que 0.2 µmol de Tri-(2-picolyl)amine et 1 cm de fil de cuivre (D 1mm). Du chlorure de benzyle (amorceur halogéné) est ajouté à hauteur de 5 µmol. Le réacteur est chauffé à une température entre 60 et 80°C sous agitation jusqu'à gélification du milieu. Le gel obtenu est ensuite filtré, lavé en utilisant du diméthylsulfoxyde et séché. La polymérisation radicalaire est de type SARA ATRP.

### Exemple 5 : Captage de l'uranium dans l'eau douce

Une solution aqueuse de poly (2,6 dicarboxylique acide-4-vinylpyridine) linéaire de 80 µL à 5 M est ajouté à une solution d'eau distillée de 1920 µL contenant 200 µmol de nitrate d'uranyle UO₂(NO₃)₂. La solution a un pH neutre. Après 5 minutes à température ambiante, le complexe de poly (2,6 dicarboxylique acide-4-vinylpyridine) et d'uranium précipite. Plus de 98% (limite de détection) de l'uranium est précipité avec le polymère.

### Exemple 6 : Captage de l'uranium dans l'eau de mer simulée

Une solution aqueuse de poly (2,6 dicarboxylique acide-4-vinylpyridine) linéaire de 80 µL à 5 M est ajouté à une solution aqueuse d'eau de mer simulée de 1920 µL contenant 200 µmol de nitrate d'uranyle UO₂(NO₃)₂. La solution d'eau de mer simulée à un pH de 8 et une force ionique de 0.44. Après 5 minutes à température ambiante, le complexe de poly (2,6 dicarboxylique acide-4-vinylpyridine) et d'uranium précipite. Plus de 98% (limite de détection) de l'uranium est précipité avec le polymère.

## Revendications

1. Composition comprenant ou constituée d'un polymère linéaire ou réticulé ayant un degré de polymérisation n constitué d'unité monomère de Formule I, 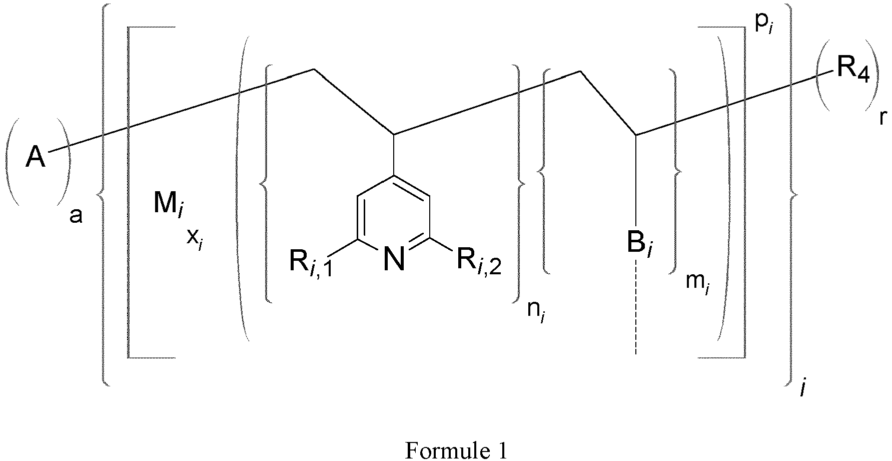 dans laquelle :
• R₄ est un composé permettant la propagation de la polymérisation, issu ou non d'un amorceur de polymérisation, ou permettant la terminaison de la polymérisation, ou un agent de transfert
• A est un composé issu dudit amorceur de polymérisation ou un fragment issu du procédé de polymérisation,
• a et r sont identiques ou différents et valent 0 ou 1,
• *i* est un nombre entier strictement positif, indiciel, variant de 1 à n, lui-même compris de 2 à 10000,
et pour chaque i :
∘ R_{*i*,1} et R_{*i*,2} sont des substituants choisis parmi le groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
∘ B; est une unité monomère dérivée d'un co-monomère, formant ou non un pont de réticulation,
∘ M; est un métal,
∘ n*ᵢ* et m*ᵢ* sont des nombres entiers égaux à 0 ou 1,
∘ n*ᵢ* + m*ᵢ* = 1,
∘ xᵢ est un nombre compris de 0 à 6,
∘ pᵢ est la charge électrique du complexe métallique comprise de - 6 à + 6, sous réserve que lorsque R_{*i*,1} (respectivement R_{*i*,2}) représente soit l'hydrogène, soit un radical alkyl de 1 à 4 carbones, soit un radical aryle de 1 à 4 carbones, soit un radical alcène de 1 à 4 carbones, alors R_{*i,*2} (respectivement R_{*i*,1}) est différent de l'hydrogène, du radical alkyl de 1 à 4 carbones, du radical aryle de 1 à 4 carbones, et du radical alcène de 1 à 4 carbones,
ledit polymère étant linéaire quand il n'existe aucun B*ᵢ* formant de pont de réticulation,
ledit polymère étant réticulé quand il existe au moins un B*ᵢ* formant un pont de réticulation entre deux polymères linéaires,
ou comprenant ou constituée d'un polymère linéaire non réticulé ayant un degré de polymérisation n constitué d'unité monomère de Formule II, 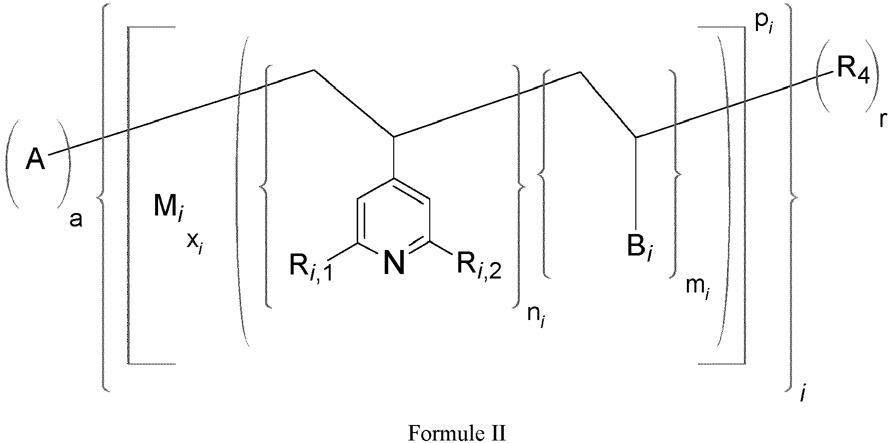
dans laquelle :
• les définitions de R_{*i,*1}, R_{*i*,2}, A, R₄, a, r, M*ᵢ*, x*ᵢ*, n*ᵢ*, m*ᵢ*, p*ᵢ* et *i* sont telles que décrites ci-dessus,
• B*ᵢ* est une unité monomère dérivée d'un co-monomère ne formant pas de pont de réticulation,
et sous réserve que lesdites unités monomères dérivées de la 4-vinylpyridine représentent au moins 20% du degré de polymérisation n,
ledit polymère est soluble en solution aqueuse et en particulier dans l'eau de mer, ledit polymère étant :
- complexé avec un métal soluble ou insoluble en solution aqueuse,
- soluble en solution aqueuse non complexé par un métal et insoluble en solution complexé avec un métal, en particulier avec l'uranium,
- soluble dans des solvants organiques, en particulier l'acétonitrile, et le diméthylsulfoxyde (DMSO),

2. Composition selon la revendication 1 , comprenant ou constituée d'un polymère de Formule III, 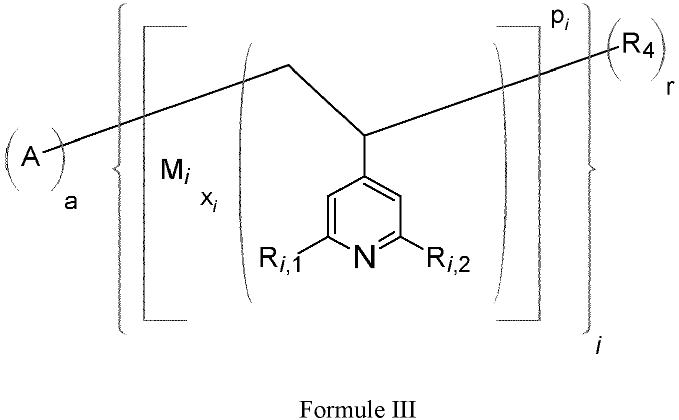 dans laquelle :
• les définitions de R_{*i*,1}, R_{*i,*2}, A, R₄, a, r, M*ᵢ*, x*ᵢ*, p*ᵢ* et *i* sont telles que décrites dans la revendication 1,
ou comprenant ou constituée d'un homopolymère de Formule IV, 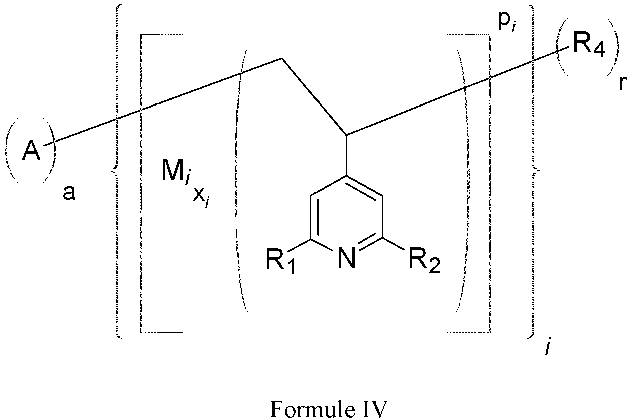
dans laquelle :
• les définitions de A, R₄, a, r, M*ᵢ*, x*ᵢ*, p*ᵢ* et *i* sont telles que décrites dans la revendication 1,
• R₁ et R₂ sont des substituants choisis parmi le groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
sous réserve que lorsque R₁ représente soit l'hydrogène, soit un radical alkyl de 1 à 4 carbones, soit un radical aryle de 1 à 4 carbones, soit un radical alcène de 1 à 4 carbones, alors R₂ est différent de l'hydrogène, du radical alkyl de 1 à 4 carbones, du radical aryle de 1 à 4 carbones, et du radical alcène de 1 à 4 carbones.

3. Composition selon la revendication 1 ,
comprenant ou constituée d'un homopolymère d'acide chélidamique de Formule V, 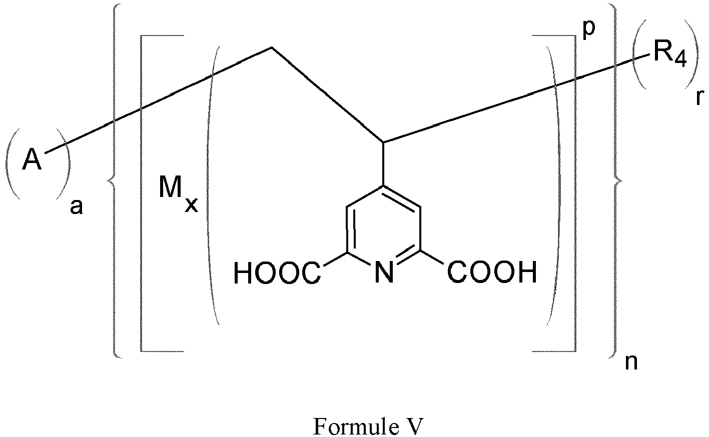
dans laquelle :
• les définitions de R₄, A, a, et r sont telles que décrites dans la revendication 1,
• M est un métal,
• x est un nombre compris de 0 à 6,
• p est la charge électrique du complexe métallique comprise de - 6 à + 6,
ou comprenant ou constituée d'un homopolymère d'acide chélidamique représenté par la Formule VI, 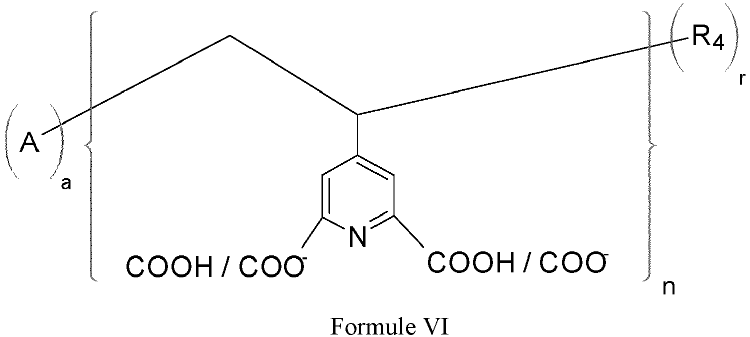
dans laquelle :
• les définitions de R₄, A, a, et r sont telles que décrites dans la revendication 1,
ou comprenant ou constituée d'un homopolymère de Formule XII, 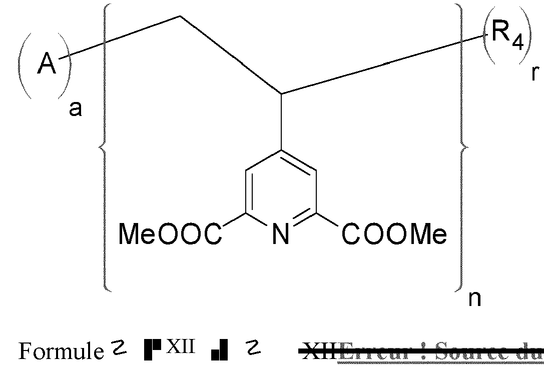
dans laquelle :
• les définitions de A, R₄, r, et a sont telles que décrites dans la revendication 1.
ou comprenant ou constituée d'un homopolymère d'acide chélidamique complexé avec de l'uranium, représenté par la Formule XIII, 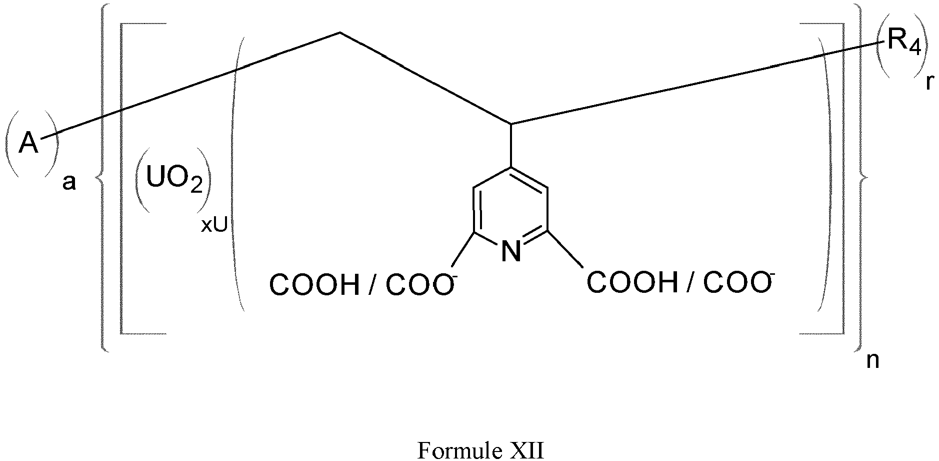
dans laquelle :
• les définitions de A, R₄, r, a sont telles que décrites dans la revendication 1,
• xU est un nombre compris de 0 à 1.

4. Composition selon la revendication 1 , comprenant ou constituée d'un polymère avec au moins une unité monomère dérivée d'un co-monomère, en particulier des unités monomères issue du styrène ou de l'acide acrylique,
notamment comprenant ou constituée d'un polymère dans laquelle le taux d'unité monomère dérivée d'un co-monomère varie d'une valeur supérieure stricte à 0% à une valeur inférieure à 80%.

5. Composition selon la revendication 4,
comprenant ou constituée d'un copolymère à blocs de Formule XVIII, 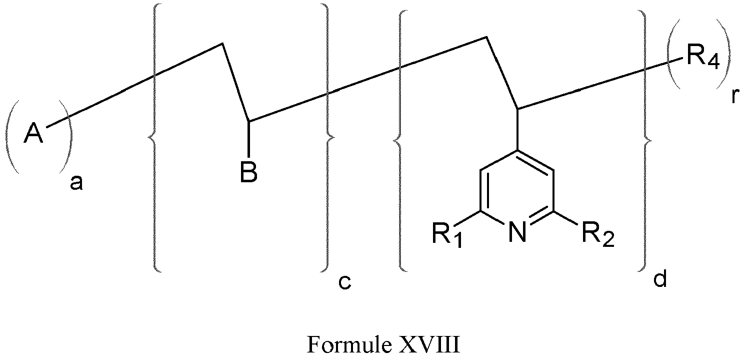
dans laquelle :
• les définitions de A, R₄, a, et r sont telles que décrites dans la revendication 1,
• R₁ et R₂ sont des substituants choisis parmi le groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
sous réserve que lorsque R₁ représente soit l'hydrogène, soit un radical alkyl de 1 à 4 carbones, soit un radical aryle de 1 à 4 carbones, soit un radical alcène de 1 à 4 carbones, alors R₂ est différent de l'hydrogène, du radical alkyl de 1 à 4 carbones, du radical aryle de 1 à 4 carbones, et du radical alcène de 1 à 4 carbones,
• B est une unité monomère dérivée d'un co-monomère ne formant pas de pont de réticulation,
• d est le degré de polymérisation du bloc constitué des unités monomères dérivées de la 4-vinylpyridine et a est un nombre entier,
• c est le degré de polymérisation du bloc constitué des unités monomères dérivéesdu co-monomère et b est un nombre entier,
• c + d = n,
ou comprenant ou constituée d'un copolymère à deux blocs de Formule XIX a, 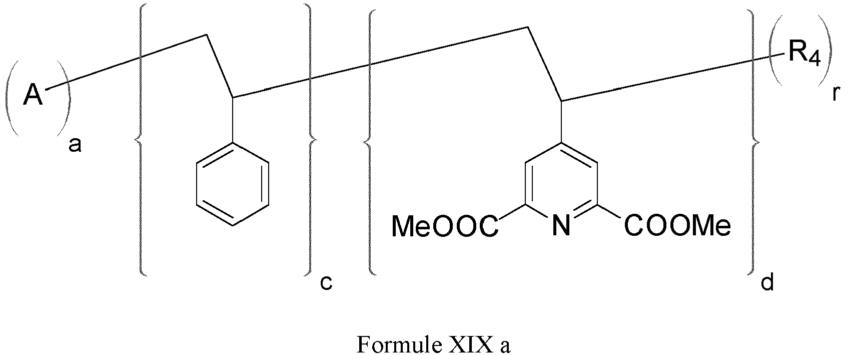
dans laquelle :
• les définitions de A, R₄, a, et r sont telles que décrites dans la revendication 1,
• les définitions de c et d sont telles que décrites ci-dessus.

6. Composition selon la revendication 1 , comprenant ou constituée d'un copolymère réticulé, ledit polymère étant de Formule XX, 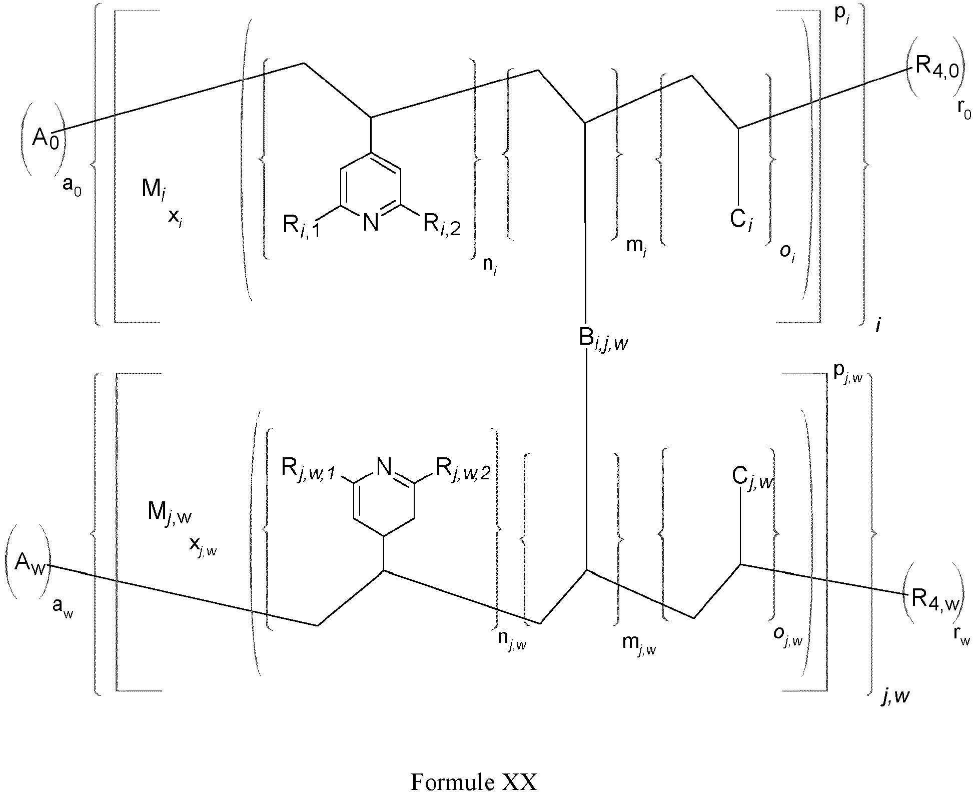 dans laquelle :
• w est un nombre entier strictement positif, indiciel, variant de 1 au nombre de polymère réticulé avec le polymère d'indice 0, lui-même compris de 1 à 1000,
• A₀ et les A_{w} sont des composés issus d'amorceurs de polymérisation,
• R_{4,0} et les R_{4,w} sont des composés permettant la propagation de la polymérisation, issus ou non dudit amorceur de polymérisation, ou permettant la terminaison de la polymérisation, ou un agent de transfert,
• a₀, ro, les a_{w} et les r_{w} sont identiques ou différents et valent 0 ou 1,
• *i et j,w* sont des nombres entiers strictement positif, indiciel, variant respectivement de 1 à n*ᵢ*, et de 1 à n*_{j,w}*, n*ᵢ* et n*_{j,w}* étant compris de 1 à 9999,
• *nᵢ*+ n*_{j,w}* = *n , n* étant compris de 3 à 10000,
et pour chaque i et chaque j,w :
∘ R_{*i*,1}, R_{*i*,2}, R_{*j,w*,1} et R_{*j,w*,2} sont des substituants choisis parmi le groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
sous réserve que lorsque R_{*i*,1} (respectivement R_{*i*,2}) représente soit l'hydrogène, soit un radical alkyl de 1 à 4 carbones, soit un radical aryle de 1 à 4 carbones, soit un radical alcène de 1 à 4 carbones, alors R_{*i*,2} (respectivement R_{*i*,1}) est différent de l'hydrogène, du radical alkyl de 1 à 4 carbones, du radical aryle de 1 à 4 carbones, et du radical alcène de 1 à 4 carbones,
sous réserve que lorsque R_{*j,w*,1} (respectivement R_{*j,w*,2}) représente soit l'hydrogène, soit un radical alkyl de 1 à 4 carbones, soit un radical aryle de 1 à 4 carbones, soit un radical alcène de 1 à 4 carbones, alors R_{*j,w*,2} (respectivement R_{*j,w*,1}) est différent de l'hydrogène, du radical alkyl de 1 à 4 carbones, du radical aryle de 1 à 4 carbones, et du radical alcène de 1 à 4 carbones,
∘ B*_{i,j,w}* est une unité monomère dérivée d'un co-monomère, formant un pont de réticulation entre le polymère 0 en position i et le polymère d'indice w en position j,,
∘ C*ᵢ* et les C*_{j,w}* sont des unités monomères dérivées d'un co-monomère ne formant pas un pont de réticulation,
∘ n*ᵢ*, m*ᵢ*, oᵢ, les n*_{j,w}*, les m*_{j,w}*, et les o*_{j,w}* sont des nombres entiers égaux à 0 ou 1,
∘ n*ᵢ* + m*ᵢ* + *oᵢ* = 1,
∘ n*_{j,w}* + m*_{j,w}* + o*_{j,w}* = 1,
∘ la somme des o*_{j,w}* est non nulles, et la somme des o*ᵢ* est non nulles.
notamment comprenant ou constituée d'un copolymère réticulé de Formule XXI : 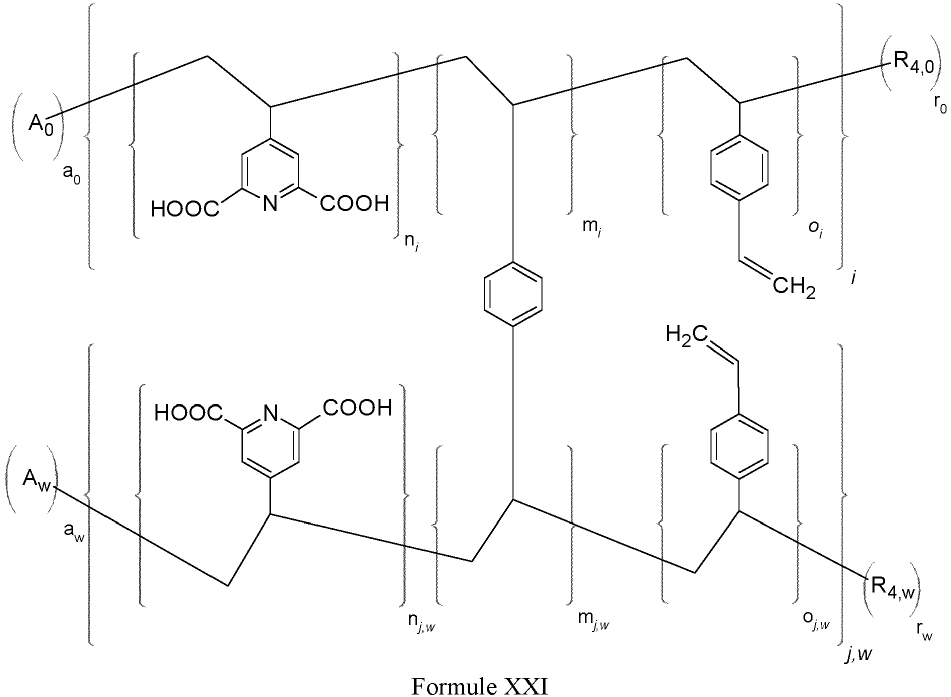
dans laquelle :
• les définitions de w, A₀, A_{w}, a₀, a_{w}, *i*, *j*, w, n*ᵢ*, n*_{j,w}*, m*ᵢ*, m*_{j,w}*, o*ᵢ*, o_{*j*,*w*}, R_{4,0}, R_{4,w}, r₀ et r_{w} sont telles que décrites ci-dessus.

7. Composition selon les revendications 1 à 6,
comprenant ou constituée d'un polymère dans lequel ledit polymère est complexé à un métal,
ledit métal est notamment choisi parmi les actinides, les lanthanides ou les métaux de transition,
ledit polymère est notamment complexé à de l'uranium,
et/ou, comprenant ou constituée d'un polymère dans lequel A, Ao et A_{w} sont issus d'un amorceur de polymérisation choisi parmi le chlorure de 4-(chloromethyl)-benzoyle, le chlorure de benzyle, l'AIBN, le 2-bromo-2-methylpropanoate de methyle.

8. Composition selon les revendications 1 à 7, comprenant ou constituée d'un polymère dans lequel R₄, R_{4,0} et R_{4,w} sont choisis parmi un atome de chlore, ou les composés de Formule XXII, 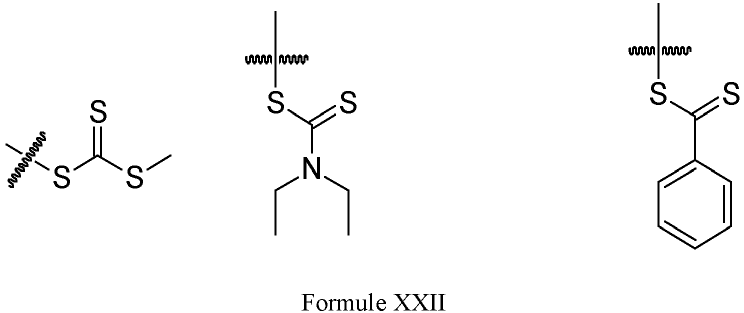 et/ou comprenant ou constituée d'un polymère de Formule XXIII,

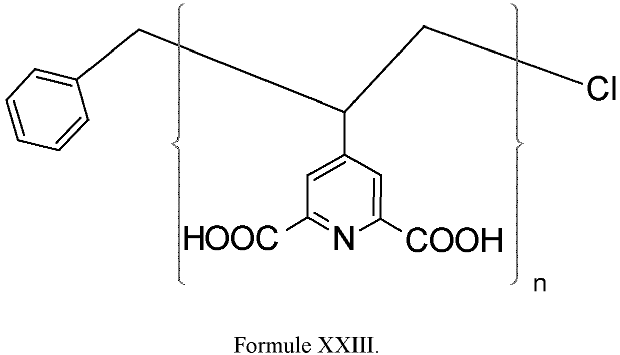

9. Procédé de préparation d'un polymère selon les revendications 1 à 8, comprenant les étapes de préparation suivantes :
- une étape de polymérisation radicalaire commençant par l'amorçage d'un amorceur de polymérisation puis continuant par la mise en contact dudit amorceur de polymérisation amorcé avec :
∘ au moins un monomère dérivé de la 4-vinylpyridine dans lequel les carbones en position 2 et 6 peuvent être substitués par l'un des substituants du groupe suivant : hydrogène, radical alkyl de 1 à 20 carbones, radical alcène de 1 à 20 carbones, radical aryle de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
o et éventuellement avec au moins un co-monomère,
avec ou sans réticulation,
pour obtenir un polymère,
- une éventuelle étape de modification par la mise en contact dudit polymère avec un réactif pour modifier l'un au moins des susdits substituants, pour obtenir un polymère éventuellement modifié,
- une éventuelle étape de complexation par la mise en contact du polymère éventuellement modifié avec un métal pour obtenir un polymère éventuellement modifié et éventuellement complexé.

10. Procédé de préparation d'un polymère de Formule I, dans laquelle les définitions de R_{*i*,1}, et R_{*i*,2}, sont telles que décrites dans la revendication 1, selon les revendications 1 à 8,
ledit procédé comportant :
- une étape de polymérisation radicalaire commençant par l'amorçage d'un amorceur de polymérisation puis continuant par la mise en contact dudit amorceur de polymérisation amorcé avec un dérivé de la 4-vinylpyridine de Formule XXIV, 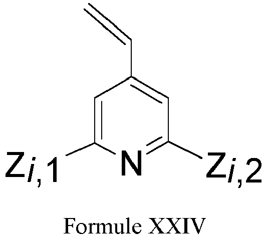 dans laquelle :
• Z_{*i*,1} et Z_{*i*,2} sont des substituants choisis parmi le groupe suivant : hydrogène, radical alkyl de 1 à 20 carbones, radical alcène de 1 à 20 carbones, radical aryle de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
avec éventuellement au moins un co-monomère,
avec ou sans pont de réticulation,
pour obtenir le polymère de Formule XXV, 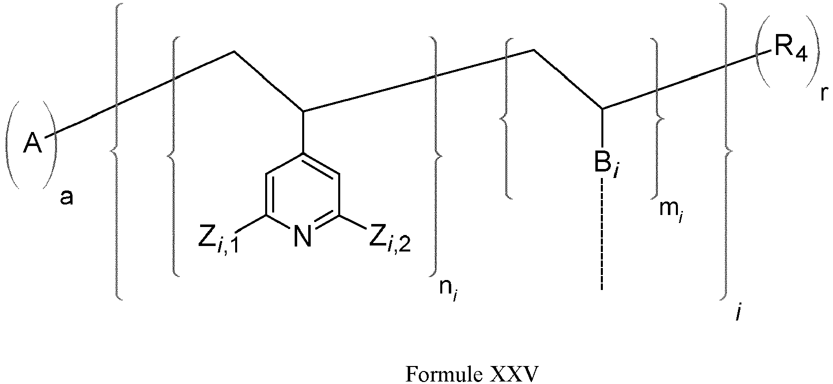
- une éventuelle étape de modification lorsque l'un au moins des Z_{*i*,1} est différent de R_{*i*,1} ou lorsque l'un au moins des Z_{*i*,2} est différent de R_{*i*,2}, dudit polymère de Formule XXV avec un réactif contenant un anion hydroxyde, carbonate ou phosphate, pour obtenir le polymère de Formule XXVI, 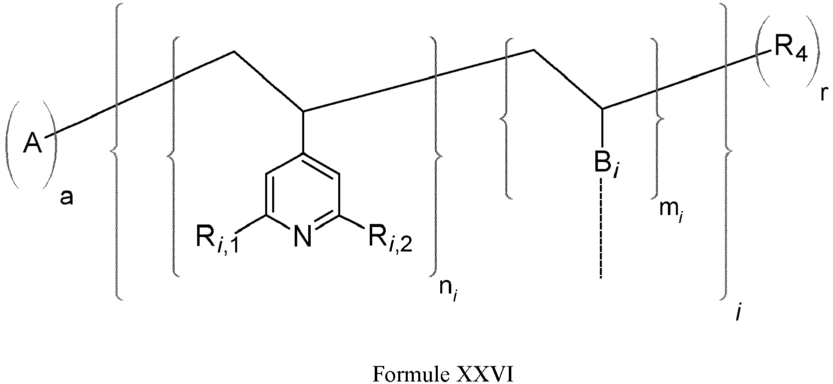
- une éventuelle étape de complexation dudit polymère de Formule XXVI avec au moins un composé métallique pour obtenir le polymère de Formule I.

11. Procédé de préparation d'un polymère de Formule IV dans laquelle les définitions de R₁, et R₂, sont telles que décrites dans la revendication 2, selon les revendications 9 et 10,
ledit procédé comprenant :
- une étape de polymérisation radicalaire commençant par l'amorçage d'un amorceur de polymérisation puis continuant par la mise en contact dudit amorceur de polymérisation amorcé avec un monomère dérivé de la 4-vinylpyridine de Formule XXXI, 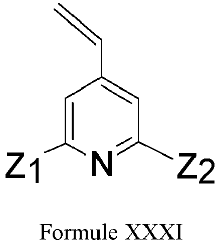 dans laquelle :
• Z₁ et Z₂ sont des substituants choisis parmi le groupe suivant : hydrogène, radical alkyl de 1 à 20 carbones, radical alcène de 1 à 20 carbones, radical aryle de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
pour obtenir un polymère de Formule XXXII, 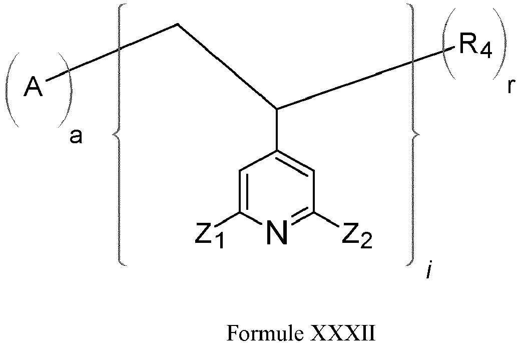
dans laquelle :
• Les définitions de A, R₄, i, r, et a sont telles que décrites dans la revendication 1,
- une étape de modification, lorsque Z₁ est différent de R₁ ou lorsque Z₂ est différent de R₂, dudit polymère de Formule XXXII avec un réactif contenant un anion hydroxyde, carbonate ou phosphate, pour obtenir le polymère de Formule XXXIII, 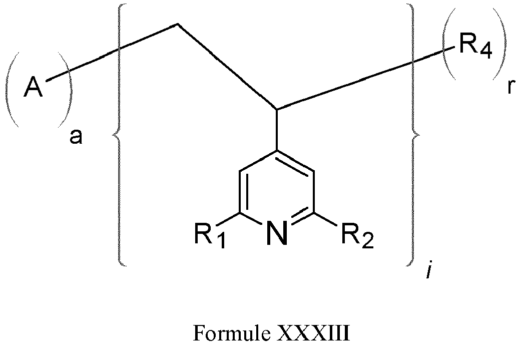
- une éventuelle étape de complexation dudit polymère de Formule XXXIII avec au moins un métal pour obtenir le polymère de Formule IV,
en particulier un procédé de préparation d'un polymère de Formule V tel que défini dans la revendication 3,
ledit procédé comprenant :
- une étape de polymérisation radicalaire commençant par l'amorçage d'un amorceur de polymérisation puis continuant par la mise en contact dudit amorceur de polymérisation amorcé avec du dérivé de la 4-vinylpyridine de Formule XL, 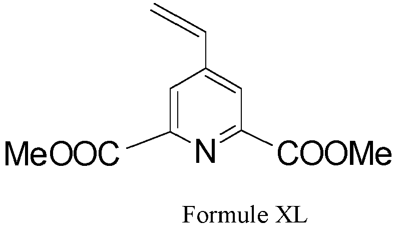 pour obtenir un polymère de Formule XII,
- une étape de modification dudit polymère de Formule XII avec une base pour obtenir un polymère de Formule VI,
- une étape de complexation dudit polymère de Formule VI avec un métal pour obtenir un polymère de Formule V.

12. Procédé de préparation d'un polymère de Formule XVIII, dans laquelle les définitions de R₁, et R₂, sont telles que décrites dans la revendication 5, selon les revendications 9 à 11,
ledit procédé comprenant :
- une étape de polymérisation radicalaire commençant par l'amorçage d'un amorceur de polymérisation puis continuant par la mise en contact dudit amorceur de polymérisation amorcé avec un monomère dérivé de la 4-vinylpyridine de Formule XXXI, 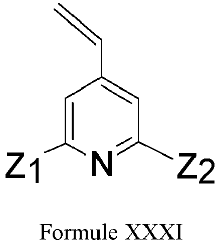 dans laquelle :
• Z₁ et Z₂ sont des substituants choisis parmi le groupe suivant : hydrogène, radical alkyl de 1 à 20 carbones, radical alcène de 1 à 20 carbones, radical aryle de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
avec un polymère de Formule XXXIV, 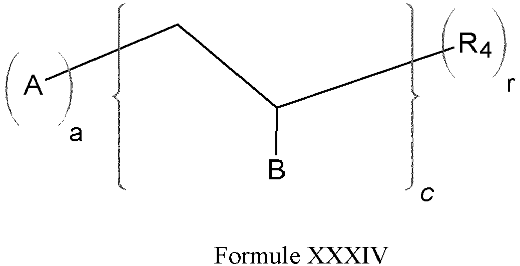
dans laquelle :
• les définitions de A, R₄, a, et r sont telles que décrites dans la revendication 1,
• B est une unité monomère dérivée d'un co-monomère ne formant pas de pont de réticulation,
• c est le degré de polymérisation du polymère et c est un nombre entier strictement inférieur à 0.8 n,,
pour obtenir le polymère de Formule XXXV, 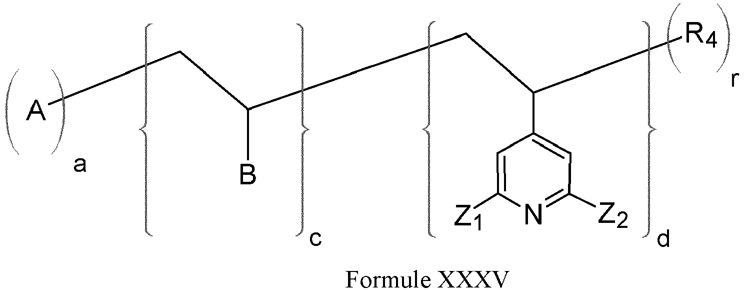
dans laquelle :
• d est un nombre entier,
• c + d = n,
- une étape de modification, lorsque Z₁ est différent de R₁ ou lorsque Z₂ est différent de R₂, dudit polymère de Formule XXXV avec un réactif contenant un anion hydroxyde, carbonate ou phosphate, pour obtenir le polymère de Formule XVIII.
notamment comportant avant l'étape de polymérisation radicalaire par mise en contact d'un monomère dérivé de la 4-vinylpyridine de Formule XXXI, avec un polymère de Formule XXXIV, une étape de polymérisation radicalaire d'un co-monomère de Formule XXXVI pour obtenir ledit polymère de Formule XXXIV, 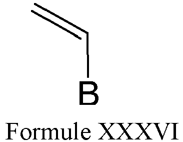 notamment un procédé de préparation d'un copolymère de Formule XIXa, 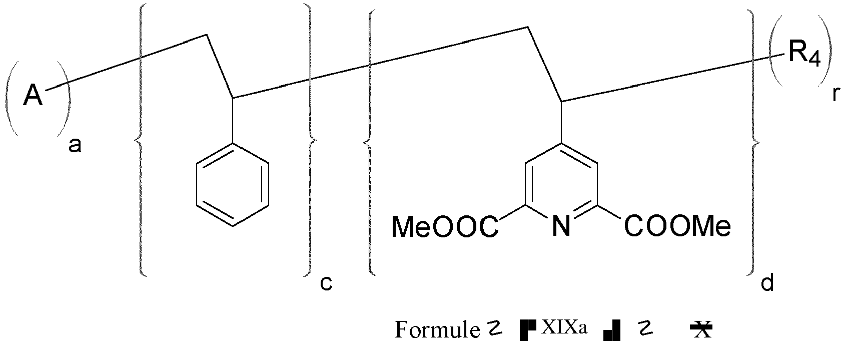 dans laquelle :
• les définitions de A, R₄, a, et r sont telles que décrites dans la revendication 1,
• les définitions de c et d sont telles que décrites dans la revendication 5.
ledit procédé comprenant :
- une étape de polymérisation radicalaire par la mise en contact d'un polymère de Formule XLI, 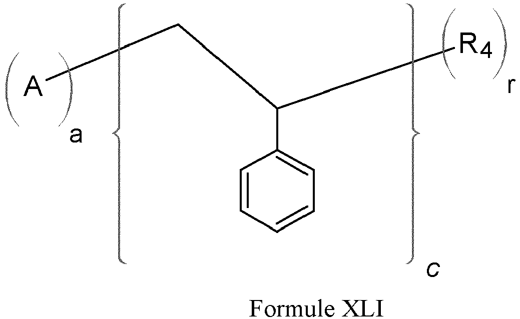 avec du dérivé de la 4-vinylpyridine de Formule XL, pour obtenir le polymère de Formule XIXa, ledit procédé de préparation d'un copolymère de Formule XIXa comportant notamment avant l'étape de polymérisation radicalaire par mise en contact d'un monomère dérivé de la 4-vinylpyridine de Formule XL avec un polymère de Formule XLI, une étape de polymérisation radicalaire du styrène, pour obtenir ledit polymère de Formule XLI.

13. Procédé de préparation d'un polymère selon les revendications 9 à 12 dans lequel ladite étape de polymérisation radicalaire peut être une polymérisation de type NMP, RAFT, ATRP, SARA ATRP ou une polymérisation radicalaire classique.

14. Utilisation de la composition telle que décrite dans les revendications 1 à 7, choisie dans le groupe comprenant le captage de métaux et leur restitution, le service comme catalyseur homogène ou hétérogène, le marquage de surfaces organiques et/ou inorganiques, le marquage par fluorescence des biomolécules, et la post-fonctionnalisation de l'ester chélidamique,
en particulier comme adsorbant de métaux dans l'eau de mer, en particulier l'adsorption des actinides et des lanthanides, plus particulièrement l'adsorption de l'uranium et encore plus particulièrement l'adsorption sélective de l'uranium par rapport au vanadium,
ou comme traitement des effluents contaminés par des métaux, en particulier les effluents radioactifs et en particulier les déchets nucléaires issus des centrales nucléaires.

## Patentansprüche

1. Zusammensetzung, umfassend oder bestehend aus einem linearen oder vernetzten Polymer mit einem Polymerisationsgrad n, bestehend aus einer Monomereinheit der Formel I: 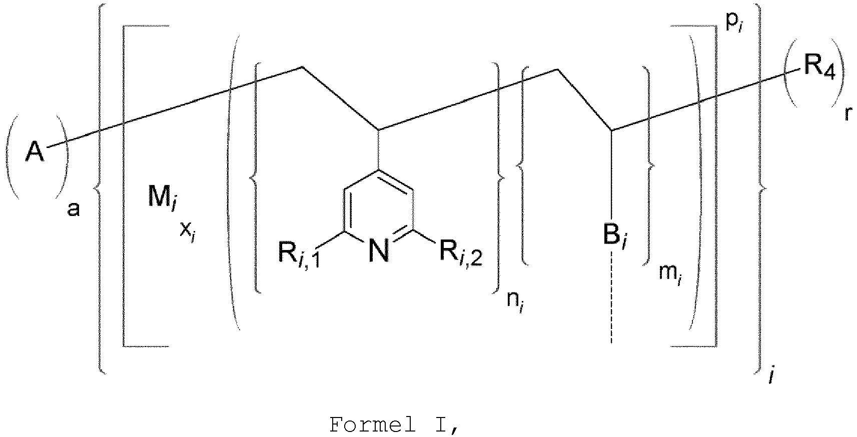 worin:
• R₄ eine Verbindung ist, die die Propagation der Polymerisation ermöglicht, unabhängig davon, ob sie aus einem Polymerisationsinitiator stammt oder nicht, oder die die Termination der Polymerisation ermöglicht, oder ein Transfermittel,
• A eine Verbindung ist, die aus dem Polymerisationsinitiator stammt, oder ein Fragment, das aus dem Polymerisationsprozess stammt,
• a und r gleich oder verschieden sind und den Wert 0 oder 1 haben,
• i eine streng positive, ganze Indexzahl von 1 bis n ist, die wiederum im Bereich von 2 bis 10.000 liegt,
und für jedes i:
o R_{*i*,1} und R_{*i*,2} Substituenten sind, ausgewählt aus der folgenden Gruppe: Wasserstoff, Alkylrest mit 1 bis 20 Kohlenstoffen, Alkenrest mit 1 bis 20 Kohlenstoffen, Arylrest mit 1 bis 20 Kohlenstoffen, Carbonsäure mit 1 bis 20 Kohlenstoffen, Alkohol mit 1 bis 20 Kohlenstoffen, Ether mit 1 bis 20 Kohlenstoffen, Ester mit 1 bis 20 Kohlenstoffen, Amin mit 1 bis 20 Kohlenstoffen, Heterocyclus mit 1 bis 5 Ringen, dessen Heteroatom entweder Stickstoff, Sauerstoff, Schwefel oder Phosphor ist, Amid mit 1 bis 20 Kohlenstoffen, Thiole mit 1 bis 20 Kohlenstoffen, Phosphin mit 1 bis 20 Kohlenstoffen, wobei die Substituenten untereinander cyclisiert sein können und Schwefel- oder Phosphoratome enthalten können,
o B*ᵢ* eine Monomereinheit ist, die von einem Co-Monomer abgeleitet ist, das eine Vernetzungsbrücke bildet oder nicht,
o M*ᵢ* ein Metall ist,
o n*ᵢ* und m*ᵢ* ganze Zahlen gleich 0 oder 1 sind,
o n*ᵢ* + m*ᵢ* = 1,
o x*ᵢ* eine Zahl ist, die im Bereich von 0 bis 6 liegt,
o p*ᵢ* die elektrische Ladung des Metallkomplexes ist, die im Bereich von -6 bis +6 liegt,
mit der Maßgabe, dass, wenn R_{*i*,1} (bzw. R_{*i*,2}) entweder für Wasserstoff, einen Alkylrest mit 1 bis 4 Kohlenstoffatomen, einen Arylrest mit 1 bis 4 Kohlenstoffatomen oder einen Alkenrest mit 1 bis 4 Kohlenstoffatomen steht, R_{*i*,2} (bzw. R_{*i*,1}) dann von Wasserstoff, dem Alkylrest mit 1 bis 4 Kohlenstoffatomen, dem Arylrest mit 1 bis 4 Kohlenstoffatomen und dem Alkenrest mit 1 bis 4 Kohlenstoffatomen verschieden ist,
wobei das Polymer linear ist, wenn kein B*ᵢ* vorhanden ist, das eine Vernetzungsbrücke bildet,
wobei das Polymer vernetzt ist, wenn mindestens ein B*ᵢ* vorhanden ist, das eine Vernetzungsbrücke zwischen zwei linearen Polymeren bildet,
oder umfassend oder bestehend aus einem linearen, nicht vernetzten Polymer mit einem Polymerisationsgrad n, bestehend aus einer Monomereinheit der Formel II: 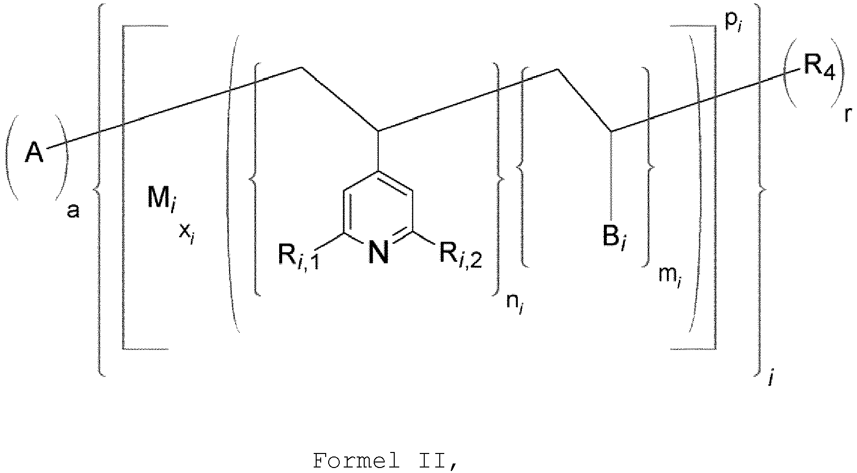 worin:
• die Definitionen von R_{*i*,1}, R_{*i*,2}, A, R₄, a, r, M*ᵢ*, x*ᵢ*, n*ᵢ*, m*ᵢ*, und i sind, wie oben beschrieben,
• B*ᵢ* eine Monomereinheit ist, die von einem Co-Monomer abgeleitet ist, das keine Vernetzungsbrücke bildet,
und mit der Maßgabe, dass die von 4-Vinylpyridin abgeleiteten Monomereinheiten mindestens 20 % des Polymerisationsgrades n ausmachen,
das Polymer in wässriger Lösung und insbesondere in Meerwasser löslich ist, wobei das Polymer
- in wässriger Lösung mit Metallkomplexierung löslich oder unlöslich ist,
- in wässriger Lösung ohne Metallkomplexierung löslich ist und in Lösung mit Metallkomplexierung, insbesondere mit Uran, unlöslich ist,
- in organischen Lösungsmitteln, insbesondere Acetonitril, und Dimethylsulfoxid (DMSO), löslich ist.

2. Zusammensetzung nach Anspruch 1,
umfassend oder bestehend aus einem Polymer der Formel III: 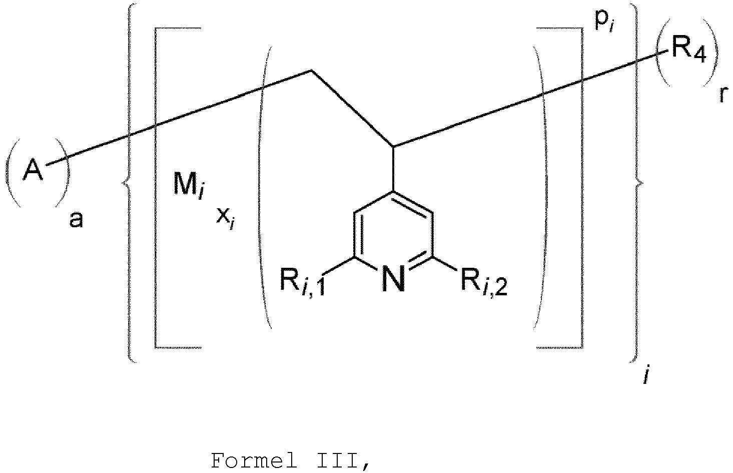
worin:
• die Definitionen von R_{*i*,1}, R_{*i*,2}, A, R₄, a, r, M*ᵢ*, x*ᵢ*, p*ᵢ* und *i* so sind, wie in Anspruch 1 beschrieben,
oder umfassend oder bestehend aus einem Homopolymer der Formel IV: 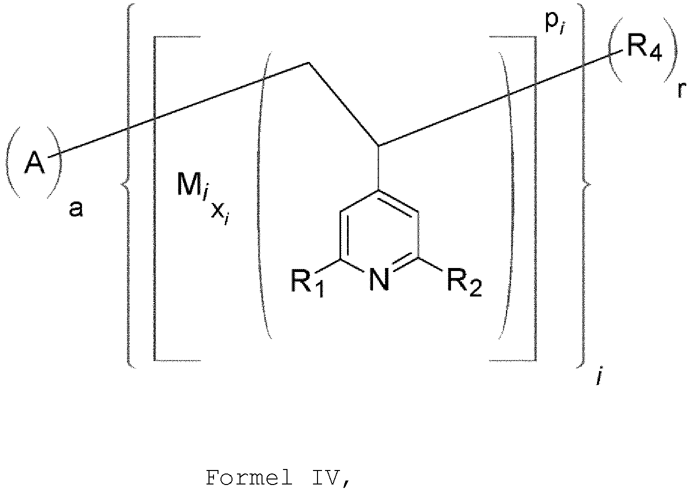
worin:
• die Definitionen von A, R₄, a, r, M*ᵢ*, x*ᵢ*, p*ᵢ* und *i* so sind, wie in Anspruch 1 beschrieben,
• R₁ und R₂ Substituenten sind, ausgewählt aus der folgenden Gruppe: Wasserstoff, Alkylrest mit 1 bis 20 Kohlenstoffen, Alkenrest mit 1 bis 20 Kohlenstoffen, Arylrest mit 1 bis 20 Kohlenstoffen, Carbonsäure mit 1 bis 20 Kohlenstoffen, Alkohol mit 1 bis 20 Kohlenstoffen, Ether mit 1 bis 20 Kohlenstoffen, Ester mit 1 bis 20 Kohlenstoffen, Amin mit 1 bis 20 Kohlenstoffen, Heterocyclus mit 1 bis 5 Ringen, dessen Heteroatom entweder Stickstoff, Sauerstoff, Schwefel oder Phosphor ist, Amid mit 1 bis 20 Kohlenstoffen, Thiole mit 1 bis 20 Kohlenstoffen, Phosphin mit 1 bis 20 Kohlenstoffen, wobei die Substituenten untereinander cyclisiert sein können und Schwefel- oder Phosphoratome enthalten können, mit der Maßgabe, dass, wenn R₁ entweder für Wasserstoff, einen Alkylrest mit 1 bis 4 Kohlenstoffatomen, einen Arylrest mit 1 bis 4 Kohlenstoffatomen oder einen Alkenrest mit 1 bis 4 Kohlenstoffatomen steht, R₂ dann von Wasserstoff, dem Alkylrest mit 1 bis 4 Kohlenstoffatomen, dem Arylrest mit 1 bis 4 Kohlenstoffatomen und dem Alkenrest mit 1 bis 4 Kohlenstoffatomen verschieden ist.

3. Zusammensetzung nach Anspruch 1,
umfassend oder bestehend aus einem Homopolymer von Chelidaminsäure der Formel V: 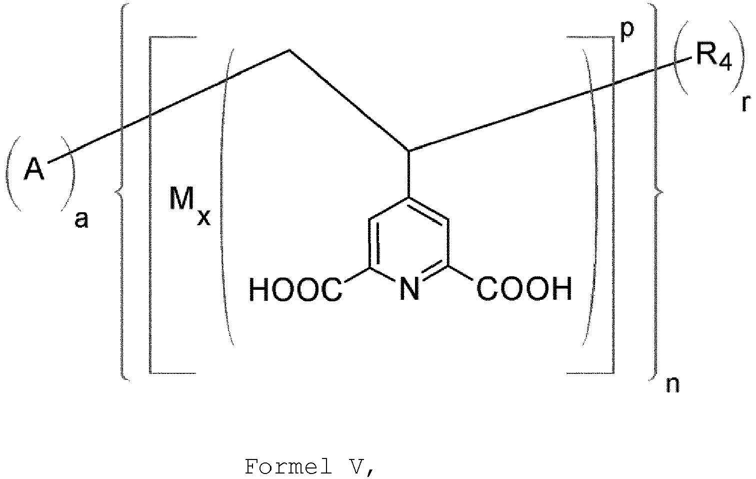
worin:
• die Definitionen von R₄, A, a, und r so sind, wie in Anspruch 1 beschrieben,
• M ein Metall ist,
• x eine Zahl ist, die im Bereich von 0 bis 6 liegt,
• p die elektrische Ladung des Metallkomplexes ist, die im Bereich von -6 bis +6 liegt,
oder umfassend oder bestehend aus einem Homopolymer von Chelidaminsäure, dargestellt durch die Formel VI: 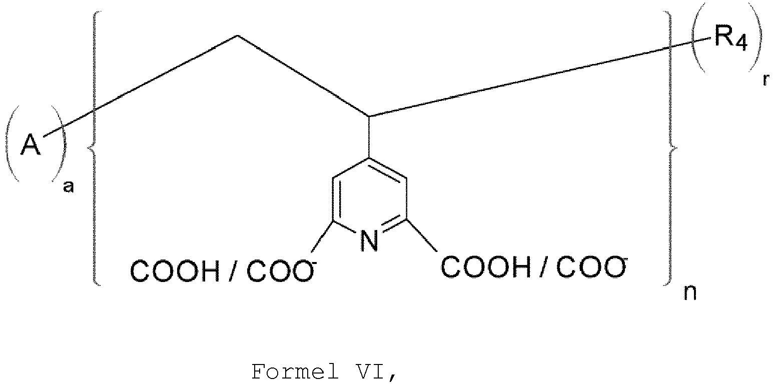
worin:
• die Definitionen von R₄, A, a, und r so sind, wie in Anspruch 1 beschrieben,
oder umfassend oder bestehend aus einem Homopolymer der Formel XII: 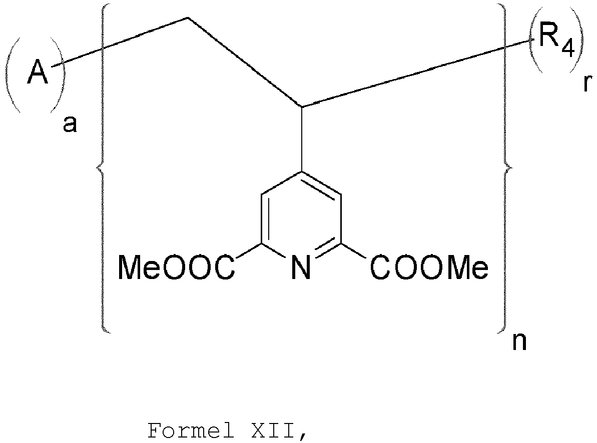
worin:
• die Definitionen von A, R₄, r und a so sind, wie in Anspruch 1 beschrieben,
oder umfassend oder bestehend aus einem mit Uran komplexierten Chelidamidsäure-Homopolymer der Formel XIII: 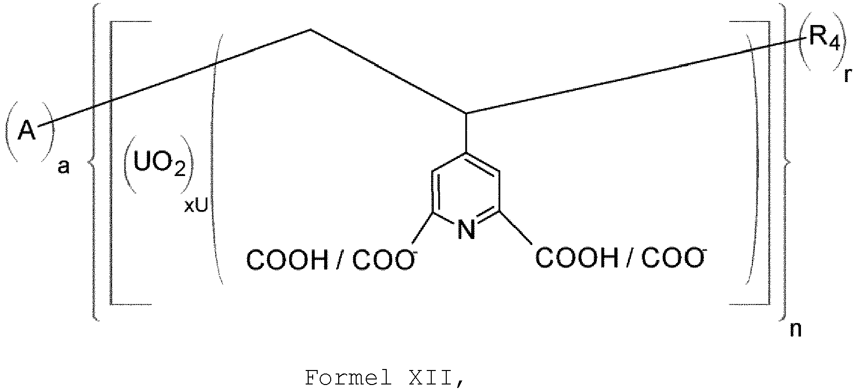
worin:
• die Definitionen von A, R₄, r, a so sind, wie in Anspruch 1 beschrieben,
• xU eine Zahl ist, die im Bereich von 0 bis 1 liegt.

4. Zusammensetzung nach Anspruch 1, umfassend oder bestehend aus einem Polymer mit mindestens einer Monomereinheit, die von einem Co-Monomer stammt, insbesondere Monomereinheiten, die von Styrol oder Acrylsäure stammen,
insbesondere umfassend oder bestehend aus einem Polymer, bei dem der Anteil der von einem Co-Monomer abgeleiteten Monomereinheit von einem Wert streng über 0 % bis zu einem Wert von weniger als 80 % variiert.

5. Zusammensetzung nach Anspruch 4,
umfassend oder bestehend aus einem Blockcopolymer der Formel XVIII: 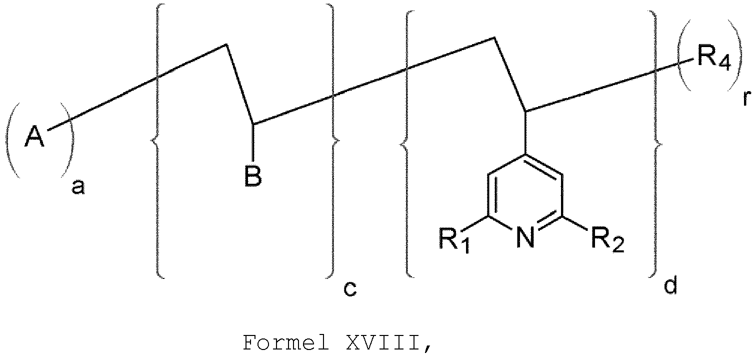
worin:
• die Definitionen von A, R₄, a und r so sind, wie in Anspruch 1 beschrieben,
• R₁ und R₂ Substituenten sind, ausgewählt aus der folgenden Gruppe: Wasserstoff, Alkylrest mit 1 bis 20 Kohlenstoffen, Alkenrest mit 1 bis 20 Kohlenstoffen, Arylrest mit 1 bis 20 Kohlenstoffen, Carbonsäure mit 1 bis 20 Kohlenstoffen, Alkohol mit 1 bis 20 Kohlenstoffen, Ether mit 1 bis 20 Kohlenstoffen, Ester mit 1 bis 20 Kohlenstoffen, Amin mit 1 bis 20 Kohlenstoffen, Heterocyclus mit 1 bis 5 Ringen, dessen Heteroatom entweder Stickstoff, Sauerstoff, Schwefel oder Phosphor ist, Amid mit 1 bis 20 Kohlenstoffen, Thiole mit 1 bis 20 Kohlenstoffen, Phosphin mit 1 bis 20 Kohlenstoffen, wobei die Substituenten untereinander cyclisiert sein können und Schwefel- oder Phosphoratome enthalten können,
mit der Maßgabe, dass, wenn R₁ entweder für Wasserstoff, einen Alkylrest mit 1 bis 4 Kohlenstoffatomen, einen Arylrest mit 1 bis 4 Kohlenstoffatomen oder einen Alkenrest mit 1 bis 4 Kohlenstoffatomen steht, R₂ dann von Wasserstoff, dem Alkylrest mit 1 bis 4 Kohlenstoffatomen, dem Arylrest mit 1 bis 4 Kohlenstoffatomen und dem Alkenrest mit 1 bis 4 Kohlenstoffatomen verschieden ist,
• B eine Monomereinheit ist, die von einem Co-Monomer abgeleitet ist, das keine Vernetzungsbrücke bildet,
• d der Polymerisationsgrad des Blocks ist, der aus den von 4-Vinylpyridin abgeleiteten Monomereinheiten besteht, und a eine ganze Zahl ist,
• c der Polymerisationsgrad des Blocks ist, der aus den vom Co-Monomer abgeleiteten Monomereinheiten besteht, und b eine ganze Zahl ist,
• c + d = n,
oder umfassend oder bestehend aus einem Diblockcopolymer der Formel XIXa: 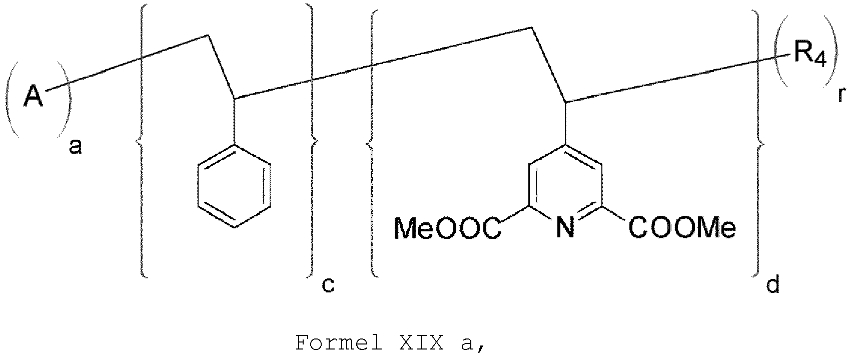
worin:
• die Definitionen von A, R₄, a und r so sind, wie in Anspruch 1 beschrieben,
• die Definitionen von c und d so sind, wie oben beschrieben.

6. Zusammensetzung nach Anspruch 1,
umfassend oder bestehend aus einem vernetzten Copolymer, wobei das Polymer die folgende Formel XX aufweist: 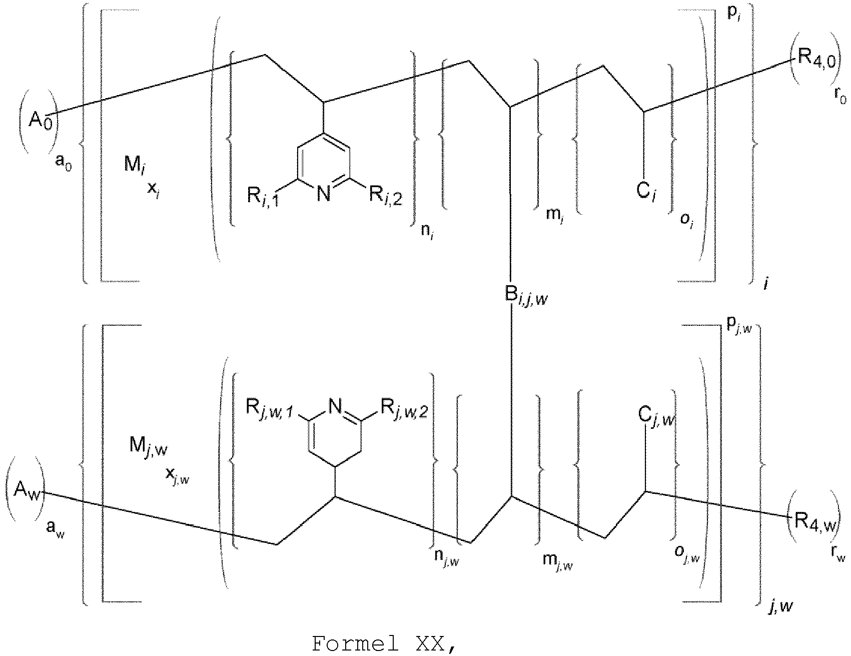
worin:
• w eine streng positive ganze Indexzahl ist, die von 1 bis zur Anzahl der Polymere variiert, die mit dem Polymer mit dem Index 0 vernetzt sind, der wiederum im Bereich von 1 bis 1.000 liegt,
• A₀ und die A_{w} Verbindungen sind, die aus Polymerisationsinitiatoren stammen,
• R_{4,0} und die R_{4,w} Verbindungen sind, die die Propagation der Polymerisation ermöglichen, die aus dem Polymerisationsinitiator stammen oder nicht, oder die die Termination der Polymerisation ermöglichen, oder ein Transfermittel,
• a₀, r₀, die a_{w} und die r_{w} gleich oder verschieden sind und den Wert 0 oder 1 haben,
• i und *j,w* streng positive, ganze Indexzahlen sind, die von 1 bis n*ᵢ*, und von 1 bis n*_{j,w}* variieren, wobei n*ᵢ* und n*_{j,w}* im Bereich von 1 bis 9.999 liegen,
• n*ᵢ* + n*_{j,w}* = n, wobei n im Bereich von 3 bis 10.000 liegt,
und für jedes i und jedes j,w:
o R_{*i*,*1*}, R *_{i,2},* R*_{jw1}* und *R_{j,w,2}* Substituenten sind, ausgewählt aus der folgenden Gruppe: Wasserstoff, Alkylrest mit 1 bis 20 Kohlenstoffen, Alkenrest mit 1 bis 20 Kohlenstoffen, Arylrest mit 1 bis 20 Kohlenstoffen, Carbonsäure mit 1 bis 20 Kohlenstoffen, Alkohol mit 1 bis 20 Kohlenstoffen, Ether mit 1 bis 20 Kohlenstoffen, Ester mit 1 bis 20 Kohlenstoffen, Amin mit 1 bis 20 Kohlenstoffen, Heterocyclus mit 1 bis 5 Ringen, dessen Heteroatom entweder Stickstoff, Sauerstoff, Schwefel oder Phosphor ist, Amid mit 1 bis 20 Kohlenstoffen, Thiole mit 1 bis 20 Kohlenstoffen, Phosphin mit 1 bis 20 Kohlenstoffen, wobei die Substituenten untereinander cyclisiert sein können und Schwefel- oder Phosphoratome enthalten können,
mit der Maßgabe, dass, wenn R_{*i*,1} (bzw. R_{*i*,2}) entweder für Wasserstoff, einen Alkylrest mit 1 bis 4 Kohlenstoffatomen, einen Arylrest mit 1 bis 4 Kohlenstoffatomen oder einen Alkenrest mit 1 bis 4 Kohlenstoffatomen steht, dann R_{*i*,2} (bzw. R_{*i*,1}) von Wasserstoff, dem Alkylrest mit 1 bis 4 Kohlenstoffatomen, dem Arylrest mit 1 bis 4 Kohlenstoffatomen und dem Alkenrest mit 1 bis 4 Kohlenstoffatomen verschieden ist,
mit der Maßgabe, dass, wenn R_{*j,w*,1} (bzw. R_{j,*w*,2}) entweder für Wasserstoff, einen Alkylrest mit 1 bis 4 Kohlenstoffatomen, einen Arylrest mit 1 bis 4 Kohlenstoffatomen oder einen Alkenrest mit 1 bis 4 Kohlenstoffatomen steht, R_{*j,w*,2} (bzw. R_{*j,w*,1}) dann von Wasserstoff, dem Alkylrest mit 1 bis 4 Kohlenstoffatomen, dem Arylrest mit 1 bis 4 Kohlenstoffatomen und dem Alkenrest mit 1 bis 4 Kohlenstoffatomen verschieden ist,
o *B_{i,j,w}* eine von einem Co-Monomer abgeleitete Monomereinheit ist, die eine Vernetzungsbrücke zwischen dem Polymer 0 an Position i und dem Polymer mit dem Index w an Position j bildet,
o C*ᵢ* und die C*_{j,w}* Monomereinheiten sind, die von einem Co-Monomer abgeleitet sind, das keine Vernetzungsbrücke bildet,
o n*ᵢ*, m*ᵢ*, o*ᵢ*, die n*_{j,w}*, die m*_{j,w}* und die o*_{j,w}* ganze Zahlen gleich 0 oder 1 sind,
o n*ᵢ* + m*ᵢ* + o*ᵢ* = 1,
o n*_{j,w}* + m*_{j,w}* + o*_{j,w}* = 1,
o wobei die Summe der o*_{j,w}* ungleich null ist, und die Summe der o*ᵢ* ungleich null ist,
insbesondere umfassend oder bestehend aus einem vernetzten Copolymer der Formel XXI: 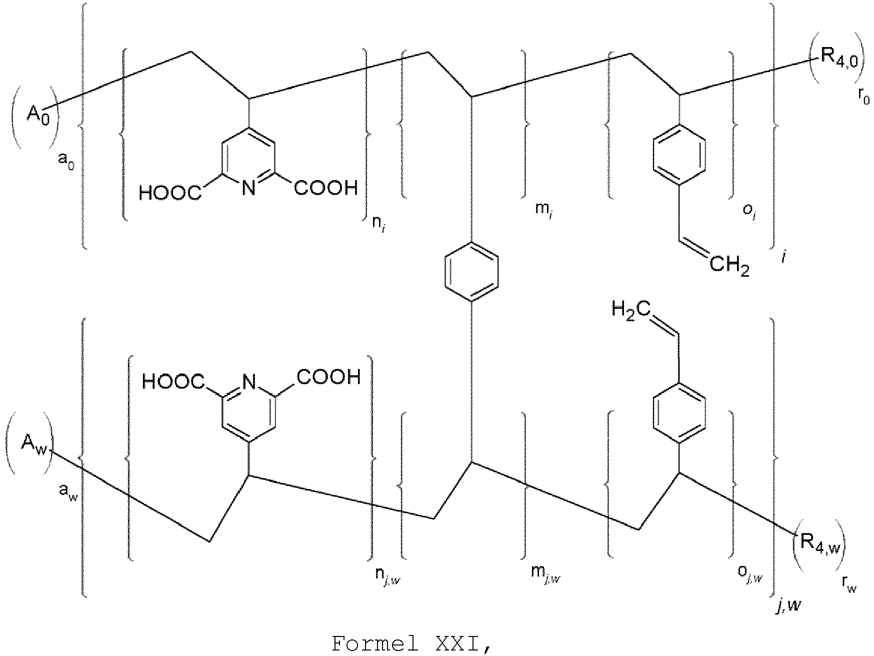
worin:
• die Definitionen von w, A₀, A_{w}, a₀, a_{w}, *i, j, w,* n*ᵢ*, n*_{j,w}*, m*ᵢ*, m*_{j,w}*, o*ᵢ*, o*_{j,w},* R*_{4,0},* R*_{4,w,}* r₀ und r_{w} so sind, wie oben beschrieben.

7. Zusammensetzung nach den Ansprüchen 1 bis 6,
umfassend oder bestehend aus einem Polymer, wobei das Polymer mit einem Metall komplexiert ist,
das Metall insbesondere aus den Actiniden, Lanthaniden oder Übergangsmetallen ausgewählt ist,
das Polymer insbesondere mit Uran komplexiert ist,
und/oder umfassend oder bestehend aus einem Polymer, wobei A, A₀ und A_{w} von einem Polymerisationsinitiator stammen, der ausgewählt ist aus 4-(Chlormethyl)-benzoylchlorid, Benzylchlorid, AIBN, Methyl-2-brom-2-methylpropanoat.

8. Zusammensetzung nach den Ansprüchen 1 bis 7, umfassend oder bestehend aus einem Polymer, wobei R₄, R_{4,0} und R_{4,w} ausgewählt sind aus einem Chloratom oder den Verbindungen der Formel XXII: 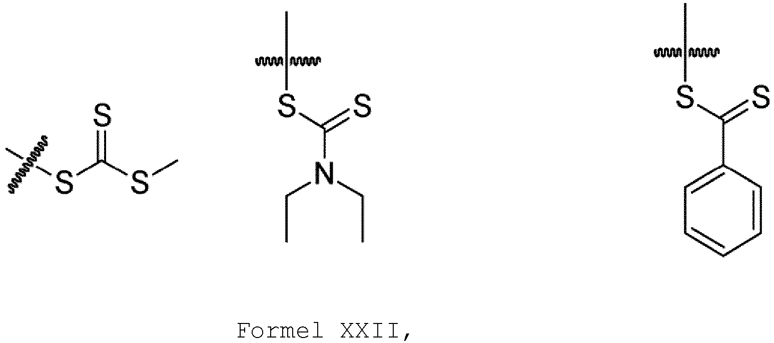 und/oder umfassend oder bestehend aus einem Polymer der Formel XXIII:

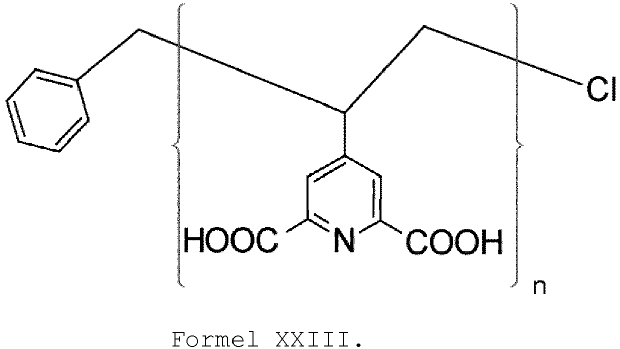

9. Verfahren zur Herstellung eines Polymers nach den Ansprüchen 1 bis 8, umfassend die folgenden Herstellungsschritte:
- einen Schritt zur radikalischen Polymerisation, der mit der Initiierung eines Polymerisationsinitiators beginnt und dann fortgesetzt wird mit dem Inkontaktbringen des initiierten Polymerisationsinitiators mit:
o mindestens einem von 4-Vinylpyridin abgeleiteten Monomer, wobei die Kohlenstoffe in den Positionen 2 und 6 mit einem der Substituenten aus der folgenden Gruppe substituiert sein können: Wasserstoff, Alkylrest mit 1 bis 20 Kohlenstoffen, Alkenrest mit 1 bis 20 Kohlenstoffen, Arylrest mit 1 bis 20 Kohlenstoffen, Alkohol mit 1 bis 20 Kohlenstoffen, Ether mit 1 bis 20 Kohlenstoffen, Ester mit 1 bis 20 Kohlenstoffen, Amin mit 1 bis 20 Kohlenstoffen, Heterocyclus mit 1 bis 5 Ringen, dessen Heteroatom entweder Stickstoff, Sauerstoff, Schwefel oder Phosphor ist, Amid mit 1 bis 20 Kohlenstoffen, Thiole mit 1 bis 20 Kohlenstoffen, Phosphin mit 1 bis 20 Kohlenstoffen, wobei die Substituenten untereinander cyclisiert sein können und Schwefel- oder Phosphoratome enthalten können,
o und gegebenenfalls mit mindestens einem Co-Monomer,
mit oder ohne Vernetzung, um ein Polymer zu erhalten,
- einen eventuellen Schritt zur Modifizierung, wobei das Polymer mit einem Reagenz in Kontakt gebracht wird, um mindestens einen der oben genannten Substituenten zu modifizieren, um ein eventuell modifiziertes Polymer zu erhalten,
- einen eventuellen Schritt zur Komplexierung, wobei das gegebenenfalls modifizierte Polymer mit einem Metall in Kontakt gebracht wird, um ein gegebenenfalls modifiziertes und gegebenenfalls komplexiertes Polymer zu erhalten.

10. Verfahren zur Herstellung eines Polymers der Formel I, wobei die Definitionen von R_{*i*,*1*}, und R *_{i,2}* so sind, wie in Anspruch 1 beschrieben, gemäß den Ansprüchen 1 bis 8,
wobei das Verfahren Folgendes umfasst:
- einen Schritt zur radikalischen Polymerisation, der mit der Initiierung eines Polymerisationsinitiators beginnt und dann fortgesetzt wird mit dem Inkontaktbringen des initiierten Polymerisationsinitiators mit einem Derivat von 4-Vinylpyridin der Formel XXIV: 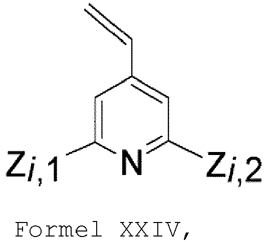 worin:
• *Z_{i,1}* und Z_{*i*,2} Substituenten sind, ausgewählt aus der folgenden Gruppe: Wasserstoff, Alkylrest mit 1 bis 20 Kohlenstoffatomen, Alkenrest mit 1 bis 20 Kohlenstoffatomen, Arylrest mit 1 bis 20 Kohlenstoffatomen, Alkohol mit 1 bis 20 Kohlenstoffatomen, Ether mit 1 bis 20 Kohlenstoffatomen, Ester mit 1 bis 20 Kohlenstoffatomen, Amin mit 1 bis 20 Kohlenstoffatomen, Heterocyclus mit 1 bis 5 Ringen, wobei das Heteroatom entweder Stickstoff ist, oder Sauerstoff, Schwefel oder Phosphor ist, Amid mit 1 bis 20 Kohlenstoffen, Thiole mit 1 bis 20 Kohlenstoffen, Phosphin mit 1 bis 20 Kohlenstoffen, wobei die Substituenten untereinander cyclisiert sein können und Schwefel- oder Phosphoratome enthalten können,
mit gegebenenfalls mindestens einem Co-Monomer,
mit oder ohne Vernetzungsbrücke,
um das Polymer der folgenden Formel XXV zu erhalten: 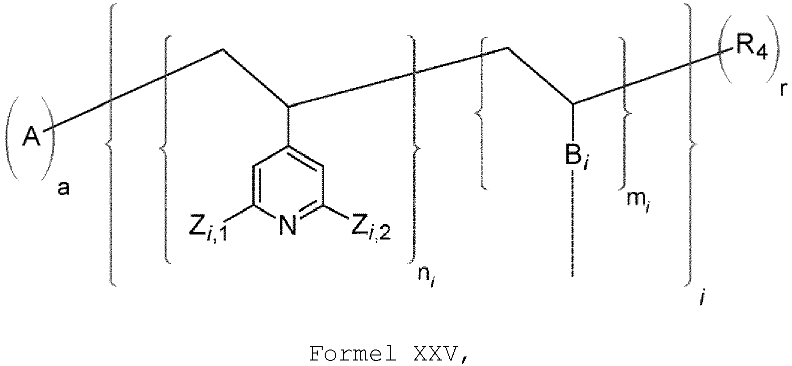
- einen eventuellen Schritt zur Modifikation, wenn mindestens einer von *Z_{i,1}* von R*_{i,1}* verschieden ist oder wenn mindestens einer von R_{*i*,2} verschieden ist, des Polymers der Formel XXV mit einem Reagenz, das ein Hydroxid-, Carbonat- oder Phosphatanion enthält, um das Polymer der folgenden Formel XXVI zu erhalten: 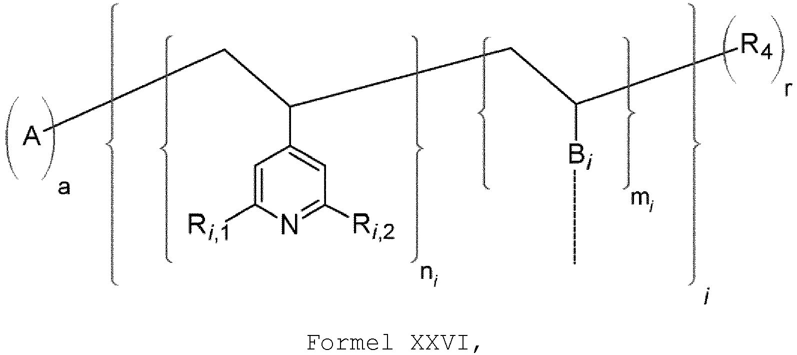
- einen eventuellen Schritt zur Komplexierung des Polymers der Formel XXVI mit mindestens einer Metallverbindung, um das Polymer der Formel I zu erhalten.

11. Verfahren zur Herstellung eines Polymers der Formel IV wobei die Definitionen von R₁, und R₂ so sind, wie in Anspruch 2 beschrieben, gemäß den Ansprüchen 9 und 10, wobei das Verfahren Folgendes umfasst:
- einen Schritt zur radikalischen Polymerisation, der mit der Initiierung eines Polymerisationsinitiators beginnt und dann fortgesetzt wird mit dem Inkontaktbringen des initiierten Polymerisationsinitiators mit einem von 4-Vinylpyridin abgeleiteten Monomer der Formel XXXI: 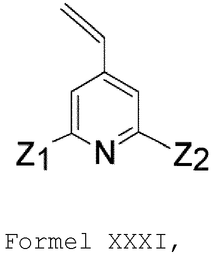 worin:
• Z₁ und Z₂ Substituenten sind, ausgewählt aus der folgenden Gruppe: Wasserstoff, Alkylrest mit 1 bis 20 Kohlenstoffatomen, Alkenrest mit 1 bis 20 Kohlenstoffatomen, Arylrest mit 1 bis 20 Kohlenstoffatomen, Alkohol mit 1 bis 20 Kohlenstoffatomen, Ether mit 1 bis 20 Kohlenstoffatomen, Ester mit 1 bis 20 Kohlenstoffatomen, Amin mit 1 bis 20 Kohlenstoffatomen, Heterocyclus mit 1 bis 5 Ringen, wobei das Heteroatom entweder Stickstoff ist, oder Sauerstoff, Schwefel oder Phosphor ist, Amid mit 1 bis 20 Kohlenstoffen, Thiole mit 1 bis 20 Kohlenstoffen, Phosphin mit 1 bis 20 Kohlenstoffen, wobei die Substituenten untereinander cyclisiert sein können und Schwefel- oder Phosphoratome enthalten können,
um ein Polymer der folgenden Formel XXXII zu erhalten: 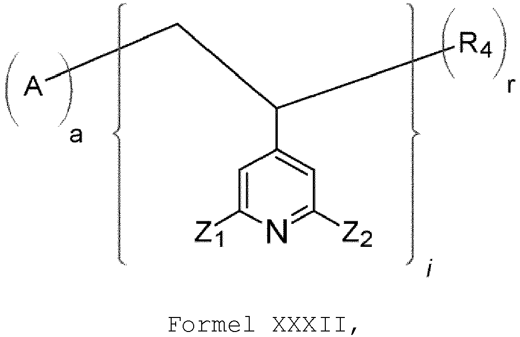
worin:
• die Definitionen von A, R₄, i, r und a so sind, wie in Anspruch 1 beschrieben,
- einen Schritt zum Modifizieren, wenn Z₁ von R₁ verschieden ist oder wenn Z₂ von R₂ verschieden ist, des Polymers der Formel XXXII mit einem Reagenz, das ein Hydroxid-, Carbonat- oder Phosphatanion enthält, um das Polymer der folgenden Formel XXXIII zu erhalten: 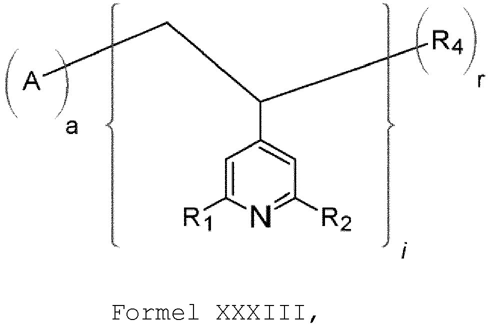
- einen eventuellen Schritt zur Komplexierung des Polymers der Formel XXXIII mit mindestens einem Metall, um das Polymer der Formel IV zu erhalten,
insbesondere ein Verfahren zur Herstellung eines Polymers der Formel V, wie in Anspruch 3 definiert,
wobei das Verfahren Folgendes umfasst:
- einen Schritt zur radikalischen Polymerisation, der mit der Initiierung eines Polymerisationsinitiators beginnt und dann fortgesetzt wird mit dem Inkontaktbringen des initiierten Polymerisationsinitiators mit dem 4-Vinylpyridinderivat der Formel XL: 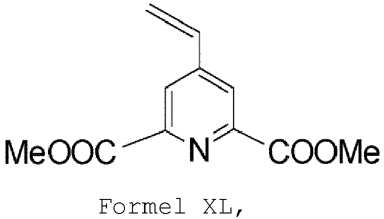 um ein Polymer der Formel XII zu erhalten,
- einen Schritt zum Modifizieren des Polymers der Formel XII mit einer Base, um ein Polymer der Formel VI zu erhalten,
- einen Schritt zur Komplexierung des Polymers der Formel VI mit einem Metall, um ein Polymer der Formel V zu erhalten.

12. Verfahren zur Herstellung eines Polymers der Formel XVIII, wobei die Definitionen von R₁ und R₂ sind, wie in Anspruch 5 beschrieben, nach den Ansprüchen 9 bis 11,
wobei das Verfahren Folgendes umfasst:
- einen Schritt zur radikalischen Polymerisation, der mit der Initiierung eines Polymerisationsinitiators beginnt und dann fortgesetzt wird mit dem Inkontaktbringen des initiierten Polymerisationsinitiators mit einem von 4-Vinylpyridin abgeleiteten Monomer der Formel XXXI: 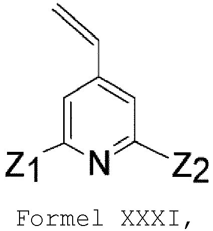 worin:
• Z₁ und Z₂ Substituenten sind, ausgewählt aus der folgenden Gruppe: Wasserstoff, Alkylrest mit 1 bis 20 Kohlenstoffatomen, Alkenrest mit 1 bis 20 Kohlenstoffatomen, Arylrest mit 1 bis 20 Kohlenstoffatomen, Alkohol mit 1 bis 20 Kohlenstoffatomen, Ether mit 1 bis 20 Kohlenstoffatomen, Ester mit 1 bis 20 Kohlenstoffatomen, Amin mit 1 bis 20 Kohlenstoffatomen, Heterocyclus mit 1 bis 5 Ringen, wobei das Heteroatom entweder Stickstoff ist, oder Sauerstoff, Schwefel oder Phosphor ist, Amid mit 1 bis 20 Kohlenstoffen, Thiole mit 1 bis 20 Kohlenstoffen, Phosphin mit 1 bis 20 Kohlenstoffen, wobei die Substituenten untereinander cyclisiert sein können und Schwefel- oder Phosphoratome enthalten können, mit einem Polymer der Formel XXXIV: 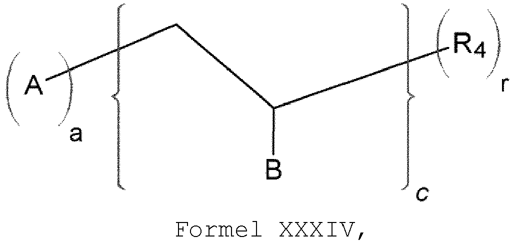 worin:
• die Definitionen von A, R₄, a und r so sind, wie in Anspruch 1 beschrieben,
• B eine Monomereinheit ist, die von einem Co-Monomer abgeleitet ist, das keine Vernetzungsbrücke bildet,
• c der Polymerisationsgrad des Polymers ist und c eine ganze Zahl ist, die streng kleiner als 0,8n ist,
um das Polymer der folgenden Formel XXXV zu erhalten: 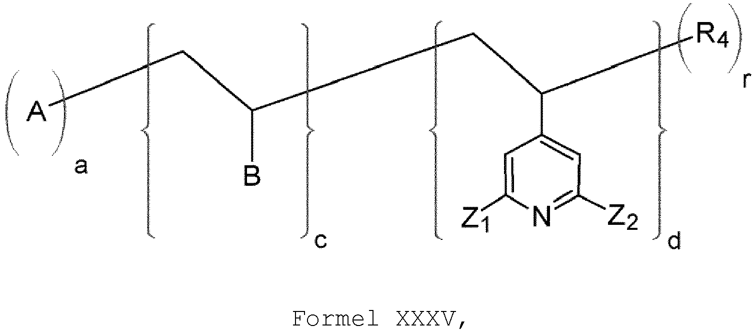
worin:
• d eine ganze Zahl ist,
• c + d = n,
- einen Schritt zum Modifizieren, wenn Z₁ von R₁ verschieden ist oder wenn Z₂ von R₂ verschieden ist, des Polymers der Formel XXXV mit einem Reagenz, das ein Hydroxid-, Carbonat- oder Phosphatanion enthält, um das Polymer der Formel XVIII zu erhalten,
insbesondere vor dem Schritt zur radikalischen Polymerisation durch Inkontaktbringen eines von 4-Vinylpyridin abgeleiteten Monomers der Formel XXXI mit einem Polymer der Formel XXXIV, einen Schritt zur radikalischen Polymerisation eines Co-Monomers der Formel XXXVI umfasst, um das Polymer der folgenden Formel XXXIV zu erhalten: 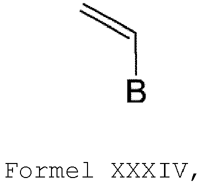
insbesondere ein Verfahren zur Herstellung eines Copolymers der Formel XIXa, 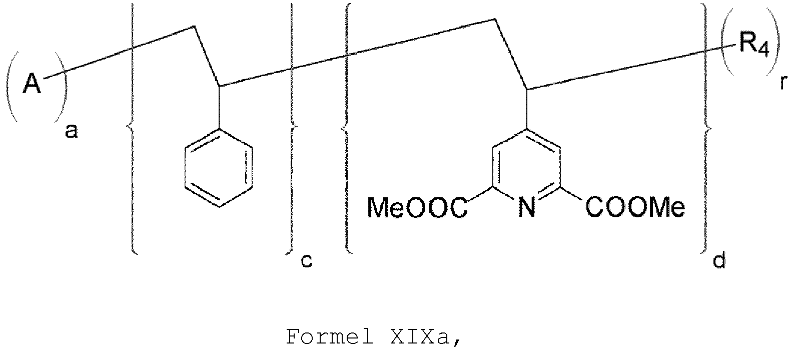
worin:
• die Definitionen von A, R₄, a und r so sind, wie in Anspruch 1 beschrieben,
• die Definitionen von c und d so sind, wie in Anspruch 5 beschrieben,
wobei das Verfahren Folgendes umfasst:
- einen Schritt zur radikalischen Polymerisation durch Inkontaktbringen eines Polymers der Formel XLI: 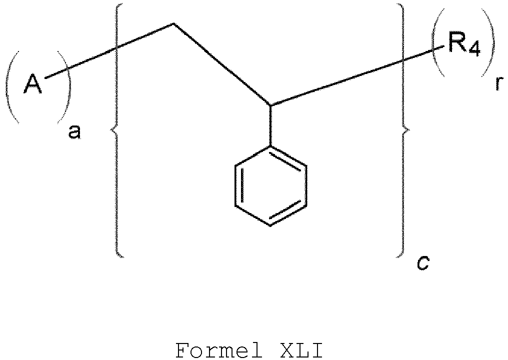
mit dem 4-Vinylpyridinderivat der Formel XL, um das Polymer der Formel XIXa zu erhalten,
wobei das Verfahren zur Herstellung eines Copolymers der Formel XIXa insbesondere vor dem Schritt zur radikalischen Polymerisation durch Inkontaktbringen eines Monomers, das von 4-Vinylpyridin der Formel XL abgeleitet ist, mit einem Polymer der Formel XLI, einen Schritt zur radikalischen Polymerisation von Styrol umfasst, um das Polymer der Formel XLI zu erhalten.

13. Verfahren zur Herstellung eines Polymers nach den Ansprüchen 9 bis 12, wobei der Schritt zur radikalischen Polymerisation eine Polymerisation vom Typ NMP, RAFT, ATRP, SARA ATRP oder eine herkömmliche Radikalpolymerisation sein kann.

14. Verwendung der Zusammensetzung, wie sie in den Ansprüchen 1 bis 7 beschrieben ist, ausgewählt aus der Gruppe, die das Einfangen von Metallen und deren Rückgewinnung, die Verwendung als homogener oder heterogener Katalysator, die Markierung von organischen und/oder anorganischen Oberflächen, die Fluoreszenzmarkierung von Biomolekülen und die Nachfunktionalisierung von Chelidaminsäureester umfasst, insbesondere als Adsorptionsmittel für Metalle in Meerwasser, vor allem die Adsorption von Aktiniden und Lanthaniden, besonders die Adsorption von Uran und noch mehr die selektive Adsorption von Uran in Bezug auf Vanadium,
oder als Behandlung von mit Metallen kontaminierten Abwässern, insbesondere von radioaktiven Abwässern und insbesondere von Atommüll aus Kernkraftwerken.

## Claims

1. Composition comprising or consisting of a linear or crosslinked polymer having a degree of polymerization n consisting of monomer units of Formula I, 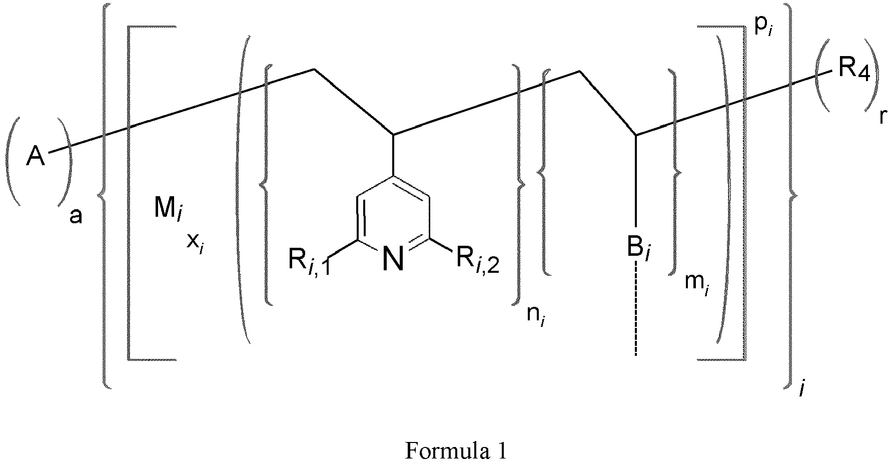 in which :
• R₄ is a compound allowing the propagation of the polymerization, whether or not originated from a polymerization initiator, or allowing the termination of the polymerization, or a transfer agent,
• A is a compound from said polymerization initiator or a fragment derived from the polymerization process,
• a and r are the same or different and equal to 0 or 1,
• *i* is a strictly positive, indexed integer ranging from 1 to n, itself from 2 to 10000, and for each i :
∘ R_{*i*,1} and R_{*i*,2} are substituents chosen from the following group: hydrogen, alkyl radical of 1 to 20 carbon atoms, alkene radical of 1 to 20 carbon atoms, aryl radical of 1 to 20 carbon atoms, carboxylic acid of 1 to 20 carbon atoms, alcohol of 1 to 20 carbon atoms, ether of 1 to 20 carbon atoms, ester of 1 to 20 carbon atoms, amine of 1 to 20 carbon atoms, heterocycle of 1 to 5 rings in which the heteroatom is either nitrogen, oxygen, sulfur or phosphorus, amide of 1 to 20 carbon atoms, thiols of 1 to 20 carbon atoms, phosphine of 1 to 20 carbon atoms, said substituents can be cyclized with one another and can contain sulfur or phosphorus atoms,
∘ B*ᵢ* is a monomer unit derived from a co-monomer, whether or not forming a cross-linking bridge,
∘ M*ᵢ* is a metal,
∘ n*ᵢ* and m*ᵢ* are integers equal to 0 or 1,
∘ n*ᵢ* + m*ᵢ* = 1,
∘ xᵢ is a number from 0 to 6,
∘ pᵢ is the electrical charge of the metal complex, ranging from -6 to +6,
provided that when R_{*i*,1} (respectively R_{*i*,2}) represents either hydrogen, or an alkyl radical of 1 to 4 carbon atoms, or an aryl radical of 1 to 4 carbon atoms, or an alkene radical of 1 to 4 carbon atoms, then R_{*i*,2} (respectively R_{*i*,1}) is different from hydrogen, from the alkyl radical of 1 to 4 carbon atoms, from the aryl radical of 1 to 4 carbon atoms, and from the alkene radical of 1 to 4 carbon atoms,
said polymer being linear when there is no B*ᵢ* forming a cross-linking bridge,
said polymer being cross-linked when there is at least one B*ᵢ* forming a cross-linking bridge between two linear polymers,
and/or comprising or consisting of a non-crosslinked linear polymer having a degree of polymerization n consisting of monomer units of Formula II, 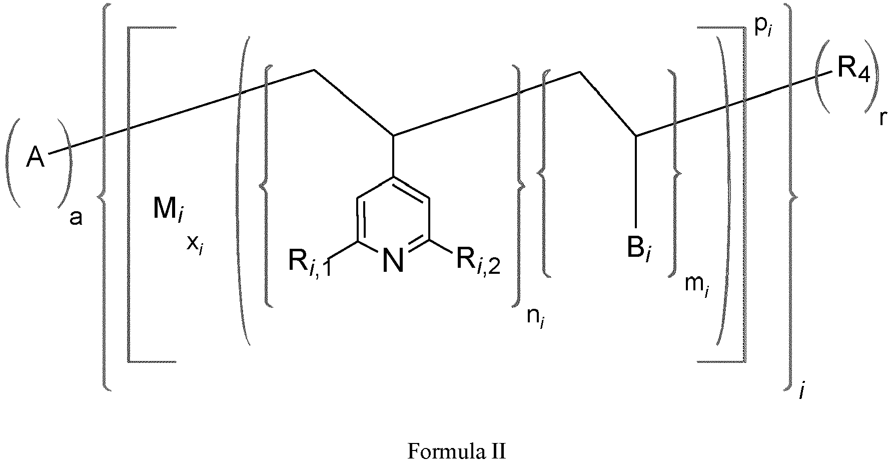
in which :
• the definitions of R_{*i*,1} , R_{*i*,2} , A, R₄ , a, r, M*ᵢ* , x*ᵢ* , n*ᵢ* , m*ᵢ* , p*ᵢ* and *i* are as described above,
• B*ᵢ* is a monomer unit derived from a co-monomer which does not form a cross-linking bridge,
and provided that said monomer units derived from 4-vinylpyridine represent at least 20% of the degree of polymerization n,
said polymer is soluble in aqueous solution and in particular in seawater, said polymer being :
- complexed with a soluble or insoluble metal in aqueous solution,
- soluble in aqueous solution not complexed with a metal and insoluble in solution complexed with a metal, in particular uranium,
- soluble in organic solvents, particularly acetonitrile and dimethyl sulfoxide (DMSO).

2. Composition according to claim 1,
comprising or consisting of a polymer of Formula III, 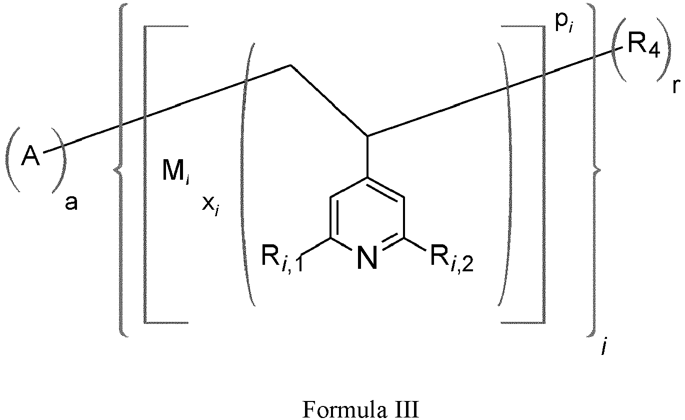 in which :
• the definitions of R_{*i*,1}, R_{*i*,2}, A, R₄, a, r, M*ᵢ* , x, , p*ᵢ* and *i* are as described in claim 1,
or comprising or consisting of a homopolymer of Formula IV, 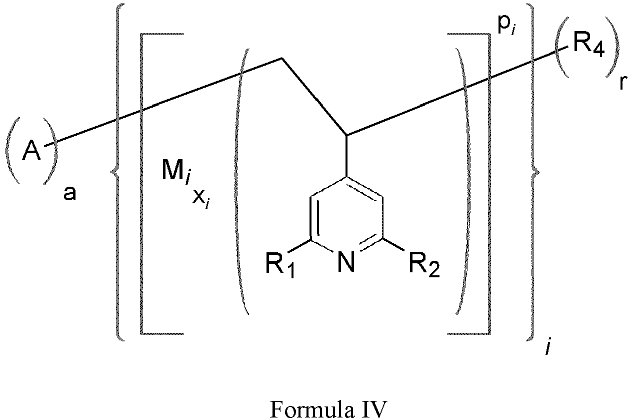
in which :
• the definitions of A, R₄ , a, r, M*ᵢ*, x*ᵢ*, p*ᵢ* and *i* are as described in claim 1,
• R₁ and R₂ are substituents chosen from the following group: hydrogen, alkyl radical of 1 to 20 carbon atoms, alkene radical of 1 to 20 carbon atoms, aryl radical of 1 to 20 carbon atoms, carboxylic acid of 1 to 20 carbon atoms, alcohol of 1 to 20 carbon atoms, ether of 1 to 20 carbon atoms, ester of 1 to 20 carbon atoms, amine of 1 to 20 carbon atoms, heterocycle of 1 to 5 rings whose heteroatom is either nitrogen, oxygen, sulfur or phosphorus, amide of 1 to 20 carbon atoms, thiols of 1 to 20 carbon atoms,
phosphine of 1 to 20 carbon atoms, said substituents can be cyclized with one another and can contain sulfur or phosphorus atoms,
provided that when R₁ represents either hydrogen, or an alkyl radical of 1 to 4 carbon atoms, or an aryl radical of 1 to 4 carbon atoms or an alkene radical of 1 to 4 carbon atoms, then R₂ is different from hydrogen, from an alkyl radical of 1 to 4 carbon atoms, from an aryl radical of 1 to 4 carbon atoms and from an alkene radical of 1 to 4 carbon atoms.

3. Composition according to claim 1,
comprising or consisting of a homopolymer of chelidamic acid of Formula V, 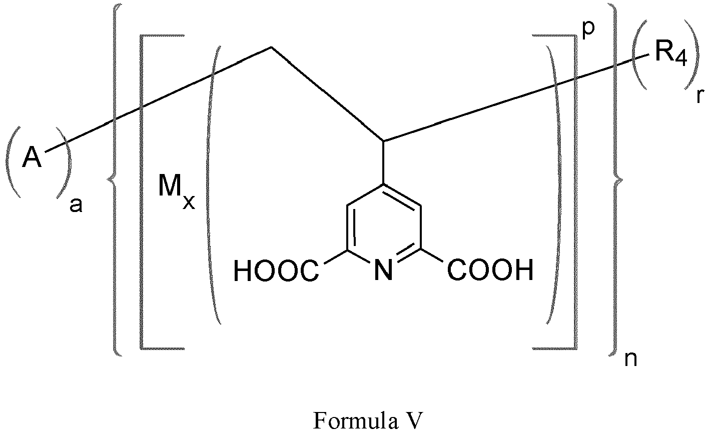
in which :
• the definitions of R₄, A, a, and r are as described in claim 1,
• M is a metal,
• x is a number from 0 to 6,
• p is the electrical charge of the metal complex, ranging from -6 to +6,
or comprising or consisting of a chelidamic acid homopolymer represented by Formula VI, 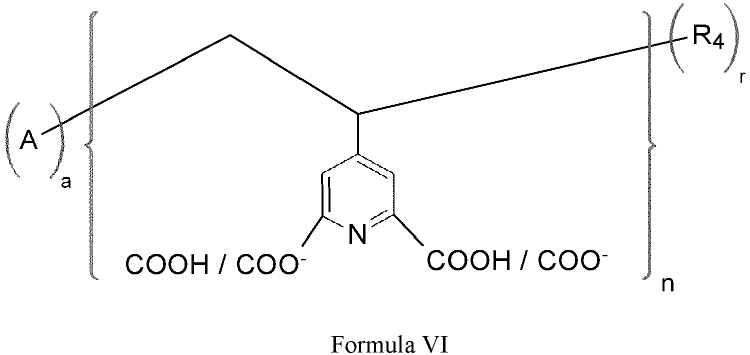
in which :
• the definitions of R₄ , A, a, and r are as described in claim 1,
or comprising or consisting of a homopolymer of Formula XII, 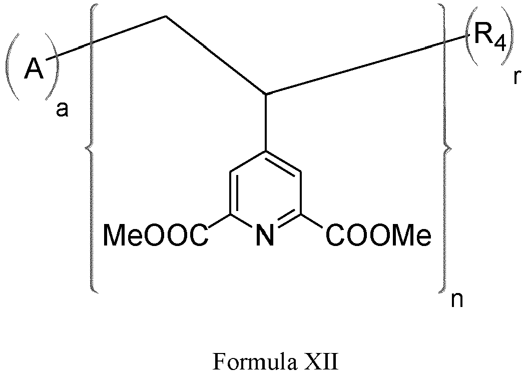
in which :
• the definitions of A, R₄, r, and a are as described in claim 1,
or comprising or consisting of a homopolymer of chelidamic acid complexed with uranium, represented by Formula XIII, 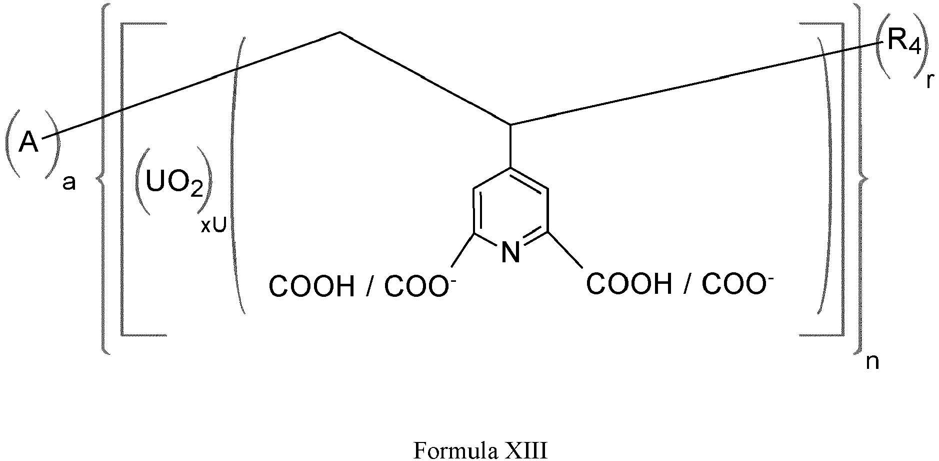
in which :
• the definitions of A, R₄ , r, a are as described in claim 1,
• xU is a number comprised from 0 and 1.

4. Composition according to claim 1, comprising or consisting of a polymer with at least one monomer unit derived from a co-monomer, in particular monomer units derived from styrene or acrylic acid,
in particular comprising or consisting of a polymer in which the monomer unit content derived from a co-monomer varies from a value strictly greater than 0% to a value less than 80%.

5. Composition according to claim 4,
comprising or consisting of a block copolymer of Formula XVIII, 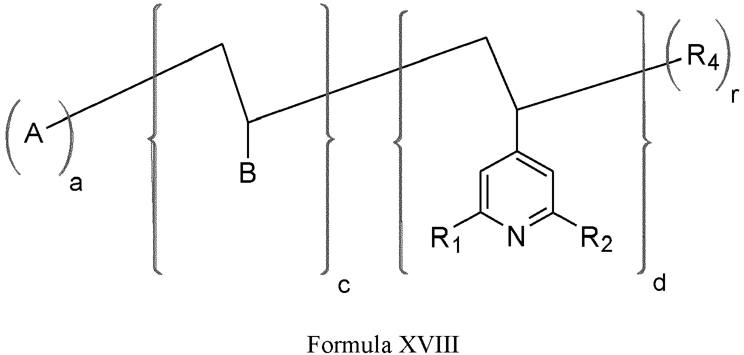
in which :
• the definitions of A, R₄ , a, and r are as described in claim 1,
• R₁ and R₂ are substituents chosen from the following group: hydrogen, alkyl radical of 1 to 20 carbon atoms, alkene radical of 1 to 20 carbon atoms, aryl radical of 1 to 20 carbon atoms, carboxylic acid of 1 to 20 carbon atoms, alcohol of 1 to 20 carbon atoms, ether of 1 to 20 carbon atoms, ester of 1 to 20 carbon atoms, amine of 1 to 20 carbon atoms, heterocycle of 1 to 5 rings whose heteroatom is either nitrogen, oxygen, sulfur or phosphorus, amide of 1 to 20 carbon atoms, thiols of 1 to 20 carbon atoms, phosphine of 1 to 20 carbon atoms, said substituents can be cyclized with one another and can contain sulfur or phosphorus atoms,
provided that when R₁ represents either hydrogen, or an alkyl radical of 1 to 4 carbon atoms, or an aryl radical of 1 to 4 carbon atoms or an alkene radical of 1 to 4 carbon atoms, then R₂ is different from hydrogen, from an alkyl radical of 1 to 4 carbon atoms, from an aryl radical of 1 to 4 carbon atoms, and from an alkene radical of 1 to 4 carbon atoms,
• B is a monomer unit derived from a non-forming co-monomer cross-linking bridge,
• d is the degree of polymerization of the block consisting of monomer units derived from 4-vinylpyridine and a is an integer,
• c is the degree of polymerization of the block consisting of monomer units derived from the co-monomer and b is an integer,
• c + d = n,
or comprising or consisting of a two-block copolymer of Formula XIX a, 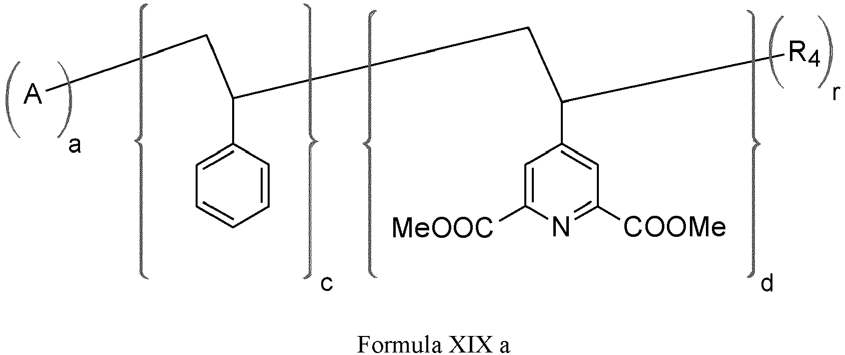
in which :
• the definitions of A, R₄, a, and r are as described in claim 1,
• the definitions of c and d are as described above.

6. Composition according to claim 1, comprising or consisting of a crosslinked copolymer, said polymer being of Formula XX, 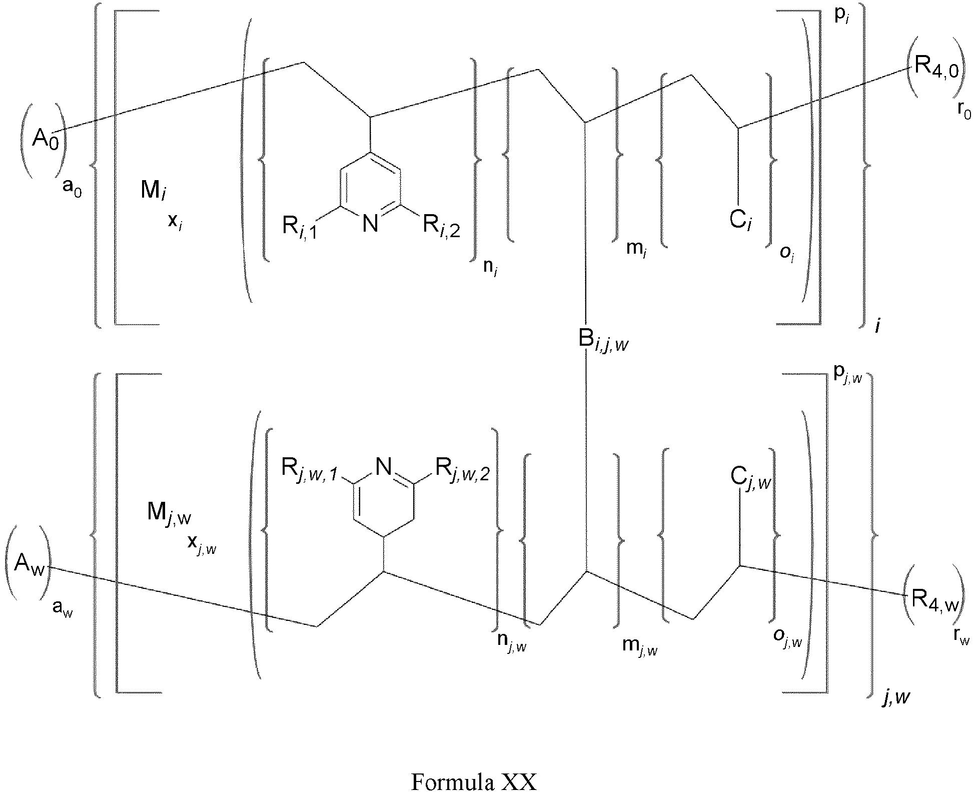 in which :
• w is a strictly positive, indexed integer varying from 1 to the number of polymer cross-linked with the polymer of index 0, itself comprised from 1 to 1000,
• Ao and A_{w} are compounds derived from polymerization initiators,
• R_{4,0} and R_{4,w} are compounds allowing the propagation of the polymerization, whether or not originating from said polymerization initiator, or allowing the termination of the polymerization, or a transfer agent,
• a₀, r₀ , the a_{w} and the r_{w} are identical or different and are 0 or 1,
• *i and j,w* are strictly positive, indexed integers, varying respectively from 1 to n*ᵢ*, and from 1 to n*_{j,w}* , and n*ᵢ* and n*_{j,w}* ranging from 1 to 9999,
• *nᵢ* + *n_{j,w}* = *n, n* being from 3 to 10000,
and for each i and j,w :
∘ R_{*i*,1}, R_{*i*,2}, R_{*j,w*,1} and R_{*j,w*,2} are substituents chosen from the following group: hydrogen, alkyl radical of 1 to 20 carbon atoms, alkene radical of 1 to 20 carbon atoms, aryl radical of 1 to 20 carbon atoms, carboxylic acid of 1 to 20 carbon atoms, alcohol of 1 to 20 carbon atoms, ether of 1 to 20 carbon atoms, ester of 1 to 20 carbon atoms, amine of 1 to 20 carbon atoms, heterocycle of 1 to 5 rings whose heteroatom is either nitrogen, oxygen, sulfur or phosphorus, amide of 1 to 20 carbon atoms, thiols of 1 to 20 carbon atoms, phosphine of 1 to 20 carbon atoms, said substituents can be cyclized with one another and can contain sulfur or phosphorus atoms,
provided that when R_{*i*,1} (respectively R_{*i,*2}) represents either hydrogen, or an alkyl radical of 1 to 4 carbon atoms, or an aryl radical of 1 to 4 carbon atoms or an alkene radical of 1 to 4 carbon atoms, then R_{*i*,2} (or R_{*i*,1} ) is different from hydrogen, from an alkyl radical of 1 to 4 carbon atoms, from an aryl radical of 1 to 4 carbon atoms and from an alkene radical of 1 to 4 carbon atoms,
provided that that when R_{*j,w*,1} (respectively R_{*j,w*,2}) represents either hydrogen, or an alkyl radical of 1 to 4 carbon atoms, or an aryl radical of 1 to 4 carbon atoms, or an alkene radical of 1 to 4 carbon atoms, then R_{*j,w*,2} (respectively R_{*j,w*,1}) is different from hydrogen, from an alkyl radical of 1 to 4 carbon atoms, from an aryl radical of 1 to 4 carbon atoms and from an alkene radical of 1 to 4 carbon atoms,
∘ B*_{i,j,w}* is a monomer unit derived from a co-monomer, forming a crosslinking bridge between the polymer 0 in position i and the polymer of index w in position j,
∘ C*ᵢ* and C*_{j,w}* are monomer units derived from a co-monomer which does not form a cross-linking bridge,
∘ n*ᵢ* , m*ᵢ* , oᵢ , n*_{j,w}* , m*_{j,w}* , and o*_{j,w}* are integers equal to 0 or 1,
∘ n*ᵢ* + m*ᵢ* + o*ᵢ* = 1,
∘ n*_{j,w}* + m*_{j,w}* + o*_{j,w}* = 1,
∘ the sum of o*_{j,w}* is non-zero, and the sum of o*ᵢ* is non-zero,
in particular comprising or consisting of a crosslinked copolymer of Formula XXI : 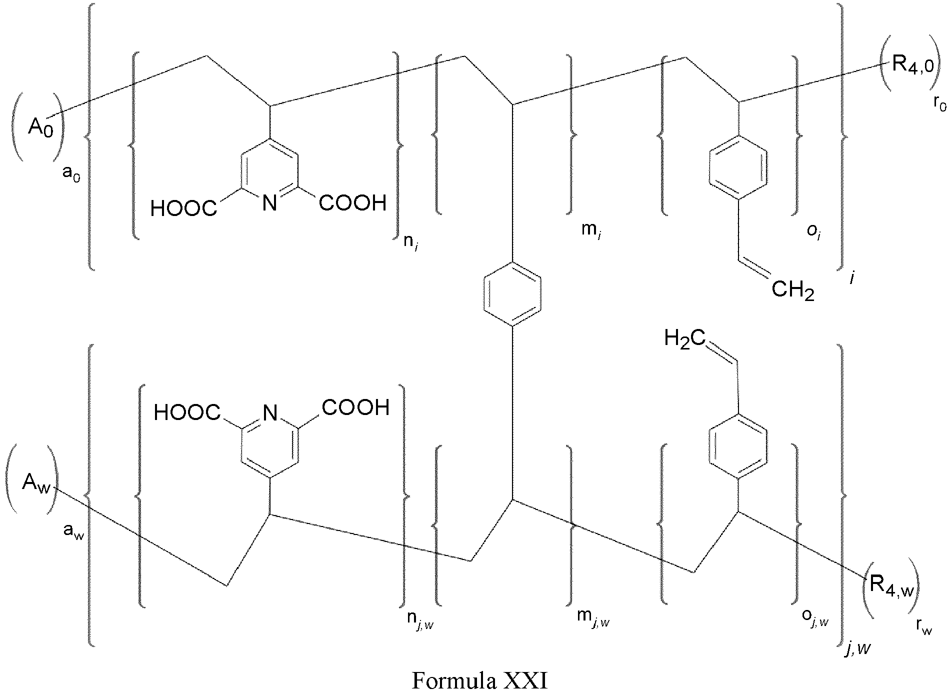
in which :
• the definitions of w, A₀, A_{w}, a₀, a_{w}, *i, j,* w, n*ᵢ* , n*_{j,w}* , m*ᵢ*, m*_{j,w}* , o*ᵢ* , o*_{j,w}* , R_{4,0}, R_{4,w}, r₀ and r_{w} are as described above.

7. Composition according to claims 1 to 6,
comprising or consisting of a polymer wherein said polymer is complexed with a metal,
said metal is in particular chosen from actinides, lanthanides or transition metals,
said polymer is in particular complexed with uranium,
and/or, comprising or consisting of a polymer in which A, Ao and A_{w} are derived from a polymerization initiator chosen from 4-(chloromethyl)-benzoyl chloride, benzyl chloride, AIBN, methyl 2-bromo-2-methylpropanoate.

8. Composition according to claims 1 to 7, comprising or consisting of a polymer in which R₄, R_{4,0} and R_{4,w} are chosen from a chlorine atom, or the compounds of Formula XXII, 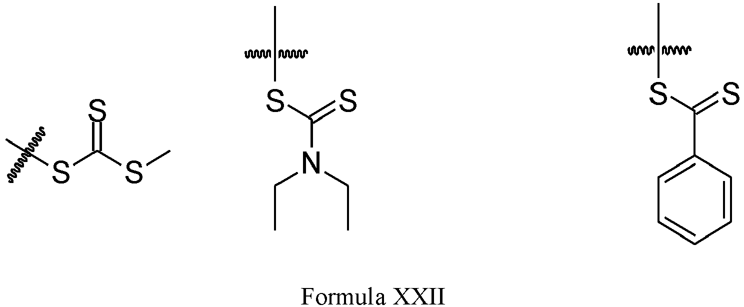 and/or comprising or consisting of a polymer of Formula XXIII,

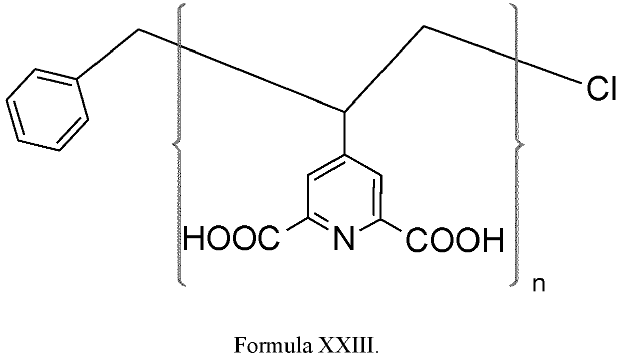

9. Process for preparing a polymer according to claims 1 to 8, comprising the following preparation steps:
- a radical polymerization step starting with the initiation of a polymerization initiator then continuing by bringing said initiated polymerization initiator into contact with :
∘ at least one monomer derived from 4-vinylpyridine, in which the carbon atoms in positions 2 and 6 can be substituted by one of the substituents from the chosen group : hydrogen, alkyl radical of 1 to 20 carbon atoms, alkene radical of 1 to 20 carbon atoms, aryl radical of 1 to 20 carbon atoms, alcohol of 1 to 20 carbon atoms, ether of 1 to 20 carbon atoms, ester of 1 to 20 carbon atoms, amine of 1 to 20 carbon atoms, heterocycle of 1 to 5 rings in which the heteroatom is either nitrogen, oxygen, sulfur or phosphorus, amide of 1 to 20 carbon atoms, thiols of 1 to 20 carbon atoms, phosphine of 1 to 20 carbon atoms, said substituents can be cyclized with one another and can contain sulfur or phosphorus atoms,
∘ and optionally with at least one co-monomer,
with or without cross-linking,
to obtain a polymer,
- an optional modification step by bringing said polymer into contact with a reagent to modify at least one of said substituents, to obtain an optionally modified polymer,
- an optional complexation step by bringing the optionally modified polymer into contact with a metal to obtain an optionally modified and optionally complexed polymer.

10. Process for the preparation of a polymer of Formula I, in which the definitions of R_{*i*,1}, and R_{*i*,2}, are as described in claim 1, according to claims 1 to 8, said process comprising :
- a radical polymerization step starting with the initiation of a polymerization initiator then continuing by bringing said initiated polymerization initiator into contact with a 4-vinylpyridine derivative of Formula XXIV, 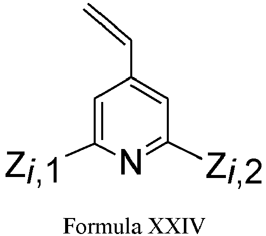 in which :
• Z_{*i*,1} and Z_{*i*,2} are substituents chosen from the following group: hydrogen, alkyl radical of 1 to 20 carbon atoms, alkene radical of 1 to 20 carbon atoms, aryl radical of 1 to 20 carbon atoms, alcohol of 1 to 20 carbon atoms, ether of 1 to 20 carbon atoms, ester of 1 to 20 carbon atoms, amine of 1 to 20 carbon atoms, heterocycle of 1 to 5 rings in which the heteroatom is either nitrogen, oxygen, sulfur or phosphorus, amide of 1 to 20 carbon atoms, thiols of 1 to 20 carbon atoms, phosphine of 1 to 20 carbon atoms, said substituents can be cyclized with one another and can contain sulfur or phosphorus atoms,
optionally with at least one co-monomer,
with or without cross-linking bridge,
to obtain the polymer of Formula XXV, 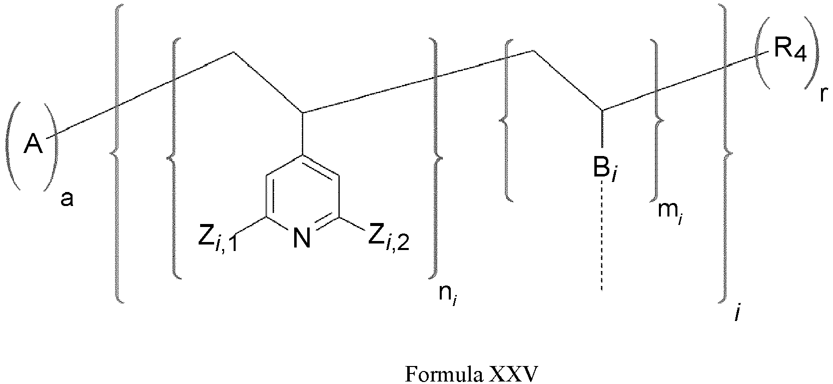
- optionally a modification step when at least one of the *Z*_{*i*,1} is different from R_{*i*,1} or when at least one of the Z_{*i*,2} is different from *R*_{*i*,2}, of said polymer of Formula XXV with a reagent containing a hydroxide, carbonate or phosphate anion, to obtain the polymer of Formula XXVI, 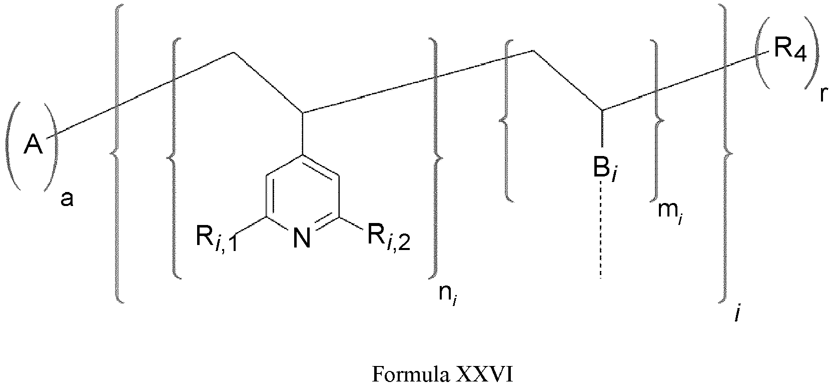
- optionally a complexation step of said polymer of Formula XXVI with at least one metal compound to obtain the polymer of Formula I.

11. Process for the preparation of a polymer of Formula IV in which the definitions of R₁, and R₂, are as described in claim 2, according to claims 9 and 10, said process comprising :
- a radical polymerization step starting with the initiation of a polymerization initiator then continuing by bringing said initiated polymerization initiator into contact with a 4-vinylpyridine monomer of Formula XXXI, 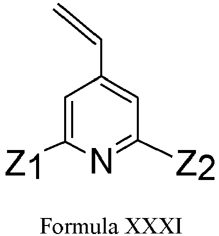 in which :
• Z₁ and Z₂ are substituents chosen from the following group: hydrogen, alkyl radical of 1 to 20 carbon atoms, alkene radical of 1 to 20 carbon atoms, aryl radical of 1 to 20 carbon atoms, alcohol of 1 to 20 carbon atoms, ether of 1 to 20 carbon atoms, ester of 1 to 20 carbon atoms, amine of 1 to 20 carbon atoms, heterocycle of 1 to 5 rings in which the heteroatom is either nitrogen, oxygen, sulfur or phosphorus, amide of 1 to 20 carbon atoms, thiols of 1 to 20 carbon atoms, phosphine of 1 to 20 carbon atoms, said substituents can be cyclized with one another and can contain sulfur or phosphorus atoms,
to obtain a polymer of Formula XXXII, 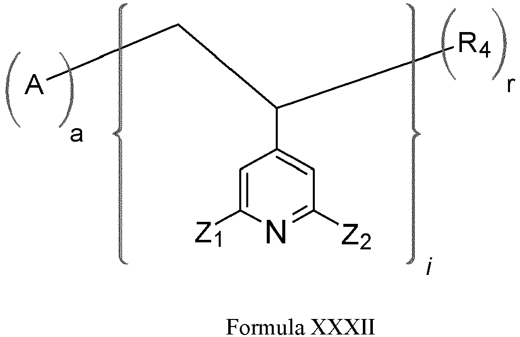
in which :
• the definitions of A, R₄, *i*, r, and a are as described in claim 1,
- a modification step, when Z₁ is different from R₁ or when Z₂ is different from R₂, of said polymer of Formula XXXII with a reagent containing a hydroxide, carbonate or phosphate anion, to obtain the polymer of Formula XXXIII, 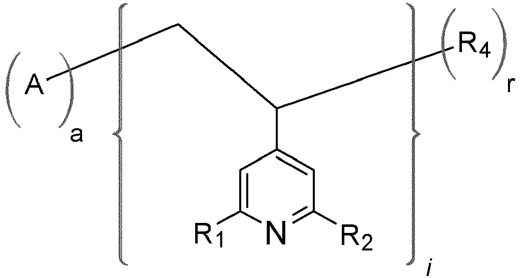 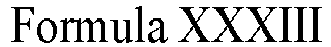
- optionally a complexation step of said polymer of Formula XXXIII with at least one metal to obtain the polymer of Formula IV,
in particular a process for preparing a polymer of Formula V as defined in claim 3,
said process comprising:
- a radical polymerization step starting with the initiation of a polymerization initiator then continuing by bringing said initiated polymerization initiator into contact with 4-vinylpyridine derivative of Formula XL, 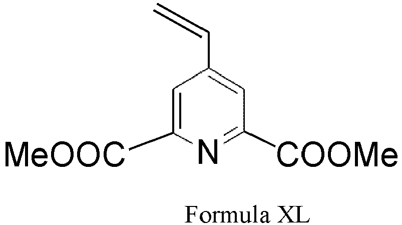 to obtain a polymer of Formula XII,
- a modification step of said polymer of Formula XII with a base to obtain a polymer of Formula VI,
- a complexation step of said polymer of Formula VI with a metal to obtain a polymer of Formula V.

12. Process for the preparation of a polymer of Formula XVIII, wherein the definitions of R₁, and R₂, are as described in claim 5, according to claims 9 to 11,
said process comprising:
- a radical polymerization step starting with the initiation of a polymerization initiator then continuing by bringing said initiated polymerization initiator into contact with a 4-vinylpyridine monomer of Formula XXXI, 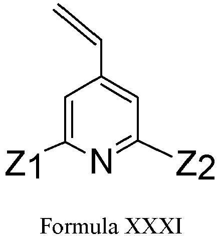 in which :
• Z₁ and Z₂ are substituents chosen from the following group: hydrogen, alkyl radical of 1 to 20 carbon atoms, alkene radical of 1 to 20 carbon atoms, aryl radical of 1 to 20 carbon atoms, alcohol of 1 to 20 carbon atoms, ether of 1 to 20 carbon atoms, ester of 1 to 20 carbon atoms, amine of 1 to 20 carbon atoms, heterocycle of 1 to 5 rings in which the heteroatom is either nitrogen, oxygen, sulfur or phosphorus, amide of 1 to 20 carbon atoms, thiols of 1 to 20 carbon atoms, phosphine of 1 to 20 carbon atoms, said substituents can be cyclized with one another and can contain sulfur or phosphorus atoms,
with a polymer of Formula XXXIV, 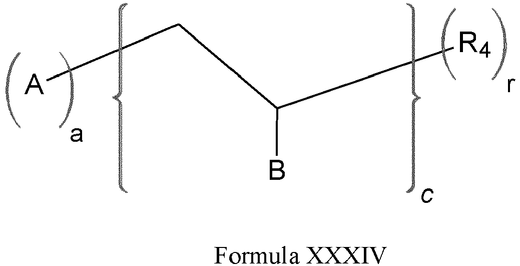
in which:
• the definitions of A, R₄, a, and r are as described in claim 1,
• B is a monomer unit derived from a co-monomer which does not form a crosslinking bridge,
• c is the degree of polymerization of the polymer and c is an integer strictly lower than 0.8n,
to obtain the polymer of Formula XXXV, 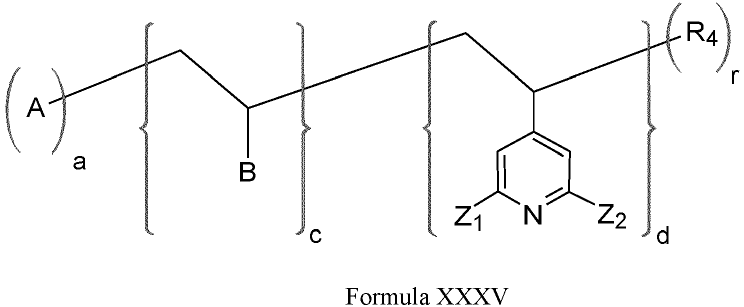 in which :
• d is an integer,
• c + d = n,
- a modification step, when Z₁ is different from R₁ or when Z₂ is different from R₂, of said polymer of Formula XXXV with a reagent containing a hydroxide, carbonate or phosphate anion, to obtain the polymer of Formula XVIII, in particular comprising before the radical polymerization step by bringing a monomer derived from 4-vinylpyridine of Formula XXXI into contact with a polymer of Formula XXXIV, a radical polymerization step of a co-monomer of Formula XXXVI to obtain said polymer of Formula XXXIV, 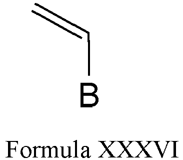 in particular a process for preparing a copolymer of Formula XIX, 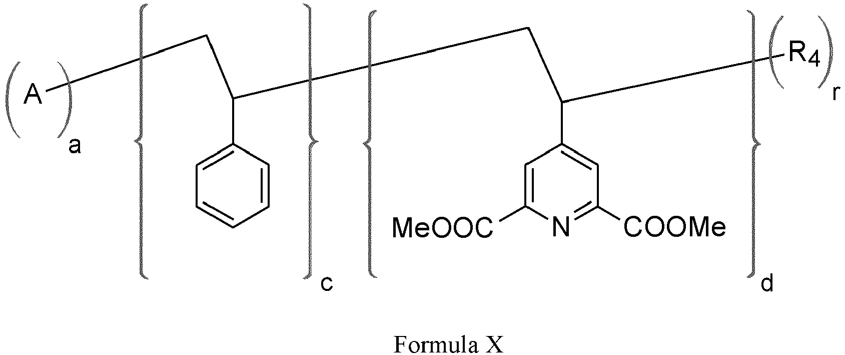 in which :
• the definitions of A, R₄, a, and r are as described in claim 4,
• the definitions of c and d are as described in claim 5,
said process comprising:
- a radical polymerization step by bringing a polymer of Formula XLI into contact, 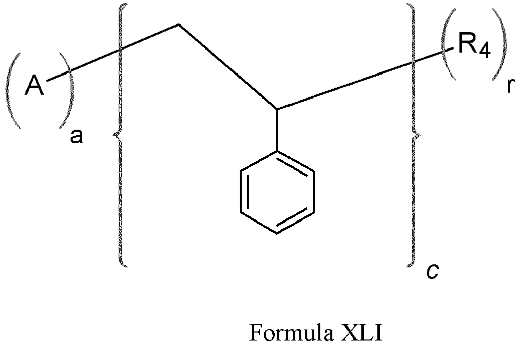 with the 4-vinylpyridine derivative of Formula XL, to obtain the polymer of Formula XIX, said process for preparing a copolymer of Formula XIX comprising, in particular, before the radical polymerization step by bringing a monomer derived from 4-vinylpyridine of Formula XL into contact with a polymer of Formula XLI, a styrene radical polymerization step, to obtain said polymer of Formula XLI.

13. Process for the preparation of a polymer according to claims 9 to 12 in which the said radical polymerization step can be of NMP, RAFT, ATRP, SARA ATRP type or conventional radical polymerization.

14. Use of the composition as described in claims 1 to 7, chosen from the group comprising the capture of metals and their restitution, the service as a homogeneous or heterogeneous catalyst, the labeling of organic and/or inorganic surfaces, the labeling by fluorescence of biomolecules, and the post-functionalization of the chelidamic ester,
in particular as an adsorbent of metals in seawater, more particularly the adsorption of actinides and lanthanides, more particularly the adsorption of uranium and even more particularly the selective adsorption of uranium versus vanadium,
or as a treatment for effluents contaminated with metals, in particular radioactive effluents and nuclear waste from nuclear power plants.
